# EUROPEAN PATENT APPLICATION

(11) **EP 2 552 120 A2**
(43) Date of publication of application: **30.01.2013**
(21) Application number: 12177229.7
(22) Date of filing: 20.07.2012
(51) Int. Cl.: H04N 21/472, H04N 21/41, G06F 3/048

(54) **Portable terminal, system, information processing method and program**

(30) Priority: 29.07.2011 JP 2011166197; 28.09.2011 JP 2011211879
(71) Applicant: Hitachi Consumer Electronics Co. Ltd., Tokyo 100-0004 (JP)
(72) Inventor: Itagaki, Tsuguo, Chiyoda-ku,, Tokyo 100-8220 (JP); Yamato, Michihito, Chiyoda-ku,, Tokyo 100-8220 (JP); Uzawa, Takehiro, Chiyoda-ku,, Tokyo 100-8220 (JP)
(74) Representative: Moore, Graeme Patrick

(57) **Abstract**

A video viewing/listening system, includes a broadcast receiving apparatus having a receiver portion for receiving a broadcast signal transmitted via a broadcast wave, and a wireless terminal having a communication I/F for transmitting/receiving information, via a wireless LAN router or directly, between the broadcast receiving apparatus, wherein said wireless terminal obtains program-related information about programs, which is broadcasted at present and will be broadcasted in future, via the broadcast wave, while saidbroadcast receiving apparatus transmits information of a processing condition or a processing schedule of the broadcast receiving apparatus for the program(s), which is/are broadcasted at present and will be broadcasted in future, via the broadcast wave, to the wireless terminal via the communication I/F, and wherein said wireless terminal produces a program table with using both, the program-related information, which is obtained from a distributor differing from the broadcast receiving apparatus, and also the information of the processing condition or the processing schedule of the broadcast receiving apparatus, which is obtained from the broadcast receiving apparatus via the communication I/F.

## Description

### BACKGROUND OF THE INVENTION

The present invention relates to a picture viewing/listening system.

As a background technology of the present technical field, which relates to the present invention, is already known Japanese Patent Laying-Open No. 2009-055614 (Patent Document 1). In this publication is described "since communication can be made in two-way or interactive direction between a remote controller and an equipment of an operation target, it is possible to make reliable communication by confirming the service thereof, to treat a complicated command system with practicing GUI operations, and/or to transmit a large amount of data, such as, a moving picture streaming, etc., for example, with using a relatively wide band."

### <Prior Art Documents>

### <Patent Documents>

[Patent Document 1] Japanese Patent Laying-Open No. 2009-055614 (2009).

### BRIEF SUMMARY OF THE INVENTION

In the Patent Document 1 mentioned above are not disclosed processes, etc., being necessary depending on various kinds of environments or conditions of being used, and therefore it is not sufficient in usability or operability for a user.

The present invention is accomplished by taking the problem mentioned above into the consideration thereof, has an object thereof to provide a picture viewing/listening system being superior in the usability or operability thereof, much more.

For dissolving the problem mentioned above, according to the present invention, there is applied such structures as will be mentioned in the claims, which will be mentioned later, for example.

Although the present invention includes plural numbers of means for dissolving the problem mentioned above; however, listing up an example thereof, according to the present invention, there is provided a network terminal system comprises a display apparatus having a display means for displaying a broadcast program thereon, a first program information extracting means for extracting program information of the broadcast program, a program identifying means for identifying a program by means of the program information, which is extracted by said first program information extracting means, and a transmitting means for transmitting identification information so as to identify the program, which is identified by said program identification means, and a terminal apparatus, being connected with said display apparatus through a network, having a receiving means for receiving said identification information, a second program information extracting means for extracting the program information of the broadcast program, an electronic program table producing means for producing an electronic program table upon basis if the program information, which is extracted in said program information extracting means, a controlling means for changing a display method between a program column for the program, which is identified by said identification information, and a program column for the program, the identification information of which is not yet received, and a displaying means for displaying said electronic program table thereon.

For dissolving such problem(s) as was mentioned above, there may be applied such the configurations as will be described in the patent claims, which will be mentioned later, for example.

According to the present invention, it is possible to provide a picture viewing/listening system being superior in the usability or operability thereof.

### BRIEF DESCRIPTION OF THE SEVERAL VIEWS OF THE DRAWING

Those and other objects, features and advantages of the present invention will become more readily apparent from the following detailed description when taken in conjunction with the accompanying drawings wherein:
Fig. 1 is a block diagram for showing an example of a network terminal system, according to an embodiment of the present invention;
Fig. 2 is a view for showing an example of a data format of program state information;
Fig. 3 is a view for showing an example of the details of properties 104 of the program state information shown in Fig. 2;
Fig. 4 is a view for showing an example of operation sequences for conducting a unique identification display to EPG;
Fig. 5 is a view for showing an example of a screen display when EPG is displayed on a television receiver 1;
Fig. 6 is a view for showing an example of a screen display of EPG to be displayed on a wireless terminal 15;
Fig. 7 is a view for showing an example of the screen display of EPG to be displayed on the wireless terminal, according to a second embodiment;
Fig. 8 is a view for showing an example of a screen display when EPG to be displayed on the wireless terminal 15 is started;
Fig. 9 is a block diagram view for showing an embodiment of the network terminal system, according to a third embodiment;
Fig. 10 is a view for showing an example of data format of reservation information;
Fig. 11 is a view for showing a variation of data format of the reservation information;
Fig. 12 is a view for showing an example of a sequence of operations when a program reservation is made with using EPG;
Fig. 13 is a view for showing an example of display on a reservation setting screen 203 when the program attached with a recording reservation mark 110 is selected in Fig. 6;
Fig. 14 is a view for showing an example of a display of a reservation detail setting screen 206;
Fig. 15 is a view for showing an example of a display on a reservation setting screen 208 when the program on air is selected in Fig. 5;
Fig. 16 is a block diagram view for showing an embodiment of the network terminal system, according to a fourth embodiment;
Fig. 17 is a view for showing an example of a display of EPG screen when a program 210 is selected on the EPG screen shown in Fig. 5;
Fig. 18 is a view for showing an example of a display of a reservation setting careen 213 for equipment connected, which is/are authorized at present;
Fig. 19 is a view for showing an example of a display of a reservation setting careen 214 for equipment connected, which is/are not authorized at present;
Fig. 20 is a view for showing an example of a display of a reservation details setting careen 215 for equipment connected, which is/are not authorized at present;
Fig. 21A and 21B are block diagram views for showing an embodiment of the network terminal system, according to a fifth embodiment;
Fig. 22A is a block diagram view for showing an embodiment of the network terminal system, according to a seventh embodiment;
Fig. 22B is a view for showing an example of the structure of a television receiver, according to the seventh embodiment;
Fig. 22C is a view for showing an example of the structure of a wireless terminal, according to the seventh embodiment;
Fig. 23A is a view for explaining an equipment authentication program function of the wireless terminal;
Fig. 23B is a view for explaining an equipment authentication program function of the television receiver;
Fig. 24A is a view for showing an example of a sequence of operations when receiving an allowance for authenticating the television receiver by inputting an authentication code at first;
Fig. 24B is a view for showing an example of a sequence of operations when conducting the authentication at a second time or thereafter;
Fig. 24C is a view for showing an example of a sequence of operations when operating the authentication;
Fig. 25 is a view for showing an example of a display of an authentication screen on a wireless terminal;
Fig. 26 is a view for showing an example of display of an authentication code input screen on the wireless terminal;
Fig. 27 is a view for showing an example of a display of an error message depending on a Wi-Fi environment of the wireless terminal or a condition of installing the television receiver;
Fig. 28 is a view for showing an example of a display of an authentication screen when a television receiver is authenticated on the wireless terminal;
Fig. 29 is a view for showing an example of a display of an edition screen when authenticated equipment is edited (deleted) on the wireless terminal;
Fig. 30A is a view for explaining functions of program for producing EPG on the wireless terminal;
Fig. 30B is a view for explaining functions of program for producing EPG, functions of program for program reservation and functions of program for producing program state information on the television receiver;
Fig. 31 is a view for showing an example of data format of the program state information;
Fig. 32 is a view for showing an example of the details of the program state information shown in Fig. 31;
Fig. 33 is a view for showing an example of a sequence of operations for an EPG producer portion to display an identification of property for each program on EPG;
Fig. 34 is a view for showing an example of a display screen when an EPG screen is displayed on the television receiver;
Fig. 35 is a view for showing an example of a screen display of EPG to be displayed on the wireless terminal;
Fig. 36 is a view for showing an example of a screen display relating to a method of arrangement of EPG to be displayed on the wireless terminal;
Fig. 37A is a view for showing an example of a screen display when a tapping operation is made on a program being on air at present, which is displayed on the wireless terminal;
Fig. 37B is a view for showing an example of operations, when a dragging to the left/right or a flicking operation is made being on the program on air at present, which is displayed on the wireless terminal;
Fig. 37C is a view for showing an example of operations when a program is selected from EPG;
Fig. 38 is a view for showing an example of a display of an error message depending on a Wi-Fi wireless environment or a 3G communication environment;
Fig. 39A is a view for explaining a function of programs for producing EPG and a function of programs for program reservation on the wireless terminal;
Fig. 39B is a view for explaining a function of programs for producing EPG, a function of programs for program reservation and a function of programs for producing the program state information on the television receiver;
Fig. 40 is a view for showing an example of data format of reservation information;
Fig. 41 is a view for showing a variation of data format of the reservation information;
Fig. 42 is a view for showing an example of a sequence of operations when a program reservation is made with using EPG;
Fig. 43 is a view for showing an example of a screen display of EPG to be displayed on the wireless terminal;
Fig. 44 is a view for showing an example of a display of a reservation setting screen;
Fig. 45 is a view for showing an example of a display of a details setting screen;
Fig. 46 is a view for showing an example of a display for displaying reservation condition information;
Fig. 47A is a view for explaining a function of programs for producing a list of recorded program(s) on the wireless terminal;
Fig. 47B is a view for explaining a function of programs for producing a list of recorded program(s) on the television receiver;
Fig. 48 is a view for showing an example of a sequence of operations for reproducing the recorded program(s) with using the list of recorded program(s);
Fig. 49 is a view for showing an example of hierarchical structure of the list of recorded program(s) on the television receiver;
Fig. 50 is a view for showing an example of a screen display of hierarchical structure of the list of recorded program(s) to be displayed on the wireless terminal;
Figs. 51A-51D are views for showing an example of a hierarchy display when each hierarchy is selected;
Fig. 52 is a view for showing an example of a display when a program title is selected from the list of recorded program(s);
Fig. 53 is a view for showing an example of transition when scrolling is made on a title of the program recorded;
Fig. 54 is a view for showing an example of a screen display when a program title is reproduced from the list of recorded program(s) on the wireless terminal;
Fig. 55 is a view for showing an example of a popup display of a search screen on the wireless terminal;
Fig. 56 is a view for showing a variation of the sequence of operations when a program reservation is made with using EPG;
Fig. 57 is a view for showing a variation of the sequence of operations for reproducing the program(s) recorded with using the list of recorded program(s);
Fig. 58 is a view for showing an example of an arrangement and a display of EPG on the television receiver;
Fig. 59A is a view for showing an example of an arrangement and a display of EPG on the wireless terminal;
Fig. 59B is a view for showing an example of an arrangement and a display of EPG on the wireless terminal;
Fig. 60A is a view for showing an example of an arrangement and a display of EPG on the wireless terminal;
Fig. 60B is a view for showing an example of an arrangement and a display of EPG on the wireless terminal;
Fig. 61A is a view for showing an example of an arrangement and a display of EPG on the wireless terminal;
Fig. 61B is a view for showing an example of an arrangement and a display of EPG on the wireless terminal;
Fig. 62 is a view for showing an example of a scroll direction and various kinds of operation directions of a program display frame to be displayed on the wireless terminal;
Fig. 63 is a view for showing an example of a scroll direction and various kinds of operation directions of a program display frame to be displayed on the wireless terminal;
Fig. 64 is a view for showing an example of a scroll direction and various kinds of operation directions of a program display frame to be displayed on the wireless terminal;
Fig. 65 is a view for showing an example of a scroll direction and various kinds of operation directions of a program display frame to be displayed on the wireless terminal;
Fig. 66 is a view for showing an example of a guide display to be displayed on the wireless terminal;
Fig. 67 is a view for showing an example of a guide display to be displayed on the wireless terminal; and
Fig. 68 is a view for showing an example of a guide display to be displayed on the wireless terminal.

### DETAILED DESCRIPTION OF THE PREFERRED EMBODIMENTS

Hereinafter, embodiments according to the present invention will be fully explained by referring to the attached drawings.

### <Embodiment 1>

Hereinafter, explanation will be given on an example of a network terminal system, being constructed with a television receiver (s) equipped with a digital broadcast receiving function, for receiving a digital broadcast wave, including service information (or, event information) therein, and for displaying an electronic program table (i.e., EPG) of a digital broadcast upon basis of the service information received, and a wireless terminal(s).

On BS digital broadcasting, CS digital broadcasting and terrestrial digital broadcasting, which are operated in Japan, transmission is made by multiplexing plural numbers of transport streams (hereinafter, being abbreviated by "TS") onto one (1) transponder (i.e., a frequency channel). The TS has data structures according to a standard regulation of Association of Radio Industries and Businesses (ARIB), i.e., being constructed with TS packets, to which the service information as the event information is added to be a header thereof, for an elementary stream (ES) as content data.

The data structure of the service information is according to ARIB STD-B10 "Standard of service information for digital broadcasting system", being the ARIB standard. The service information is built up with PSI (Program Specific Information), being transmission control information defined in a regulation of MPEG (Moving Picture Expert Group)-2 system, and SI (Service Information) for building up EPG, etc.

The SI is made up with four (4) pieces of tables, i.e., BIT (Broadcaster Information Table), SDT (Service Description Table), EIT (Event Information Table) and TOT (Time Offset Table).

The BIT describes the information relating to broadcasting stations (e.g., the broadcasters) in a network. The SDT is divided into a TS information portion and a service information portion, wherein the TS information portion includes a network ID for identifying the network and a TS ID (Identifier) for identifying the TS.

The network ID is assigned with the network ID, being different from each other, for a BS network, a CS1 network and a CS2 network, respectively. Also, in case of the terrestrial digital broadcasting, within the same area, the network ID having a value different from each other, for each of the broadcasting stations (the broadcasters). The service information portion includes a service ID (so-called, a channel number) therein, as an identifier for identifying the services (or, the channels) respectively within the network.

The EIT describes therein the program information for each event (i.e., so-called the program), and is divided into a service information portion and an event information portion. The service information portion includes therein a service ID (so-called, the channel number), i.e., being the identifier for identifying the service (the channel), respectively, within the network. The event information portion includes therein; an event ID, an event start time, an event continuation time, a name of an event (so-called a program title), a genre of the event, etc. The TOT describes therein the present time.

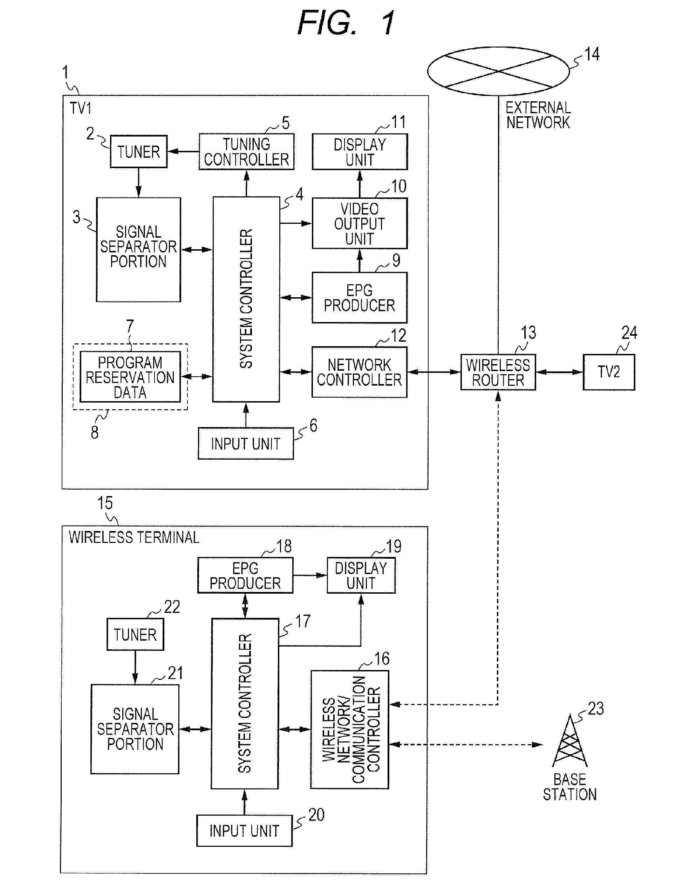

Hereinafter, explanation will be given on a first embodiment according to the present invention, by referring to Figs. 1 to 6.

Fig. 1 is a block diagram for showing an embodiment of the network terminal system according to a first embodiment.

The network terminal system according to the present embodiment is made up with a television receiver 1, a wireless terminal 15, a wireless router 13, and an external network 14. An example shown in the figure is a case where a user of the wireless terminal 15, being a mobile communication terminal, such as, a portable telephone, etc., as an information communication terminal, views/listens a television program on the television receiver 1, at a home or a shop, etc., while bringing that wireless terminal 15 with.

The television receiver 1 is constructed with a tuner 2, a signal divider portion 3, a system controller portion 4, a tuning controller portion 5, an input means 6, a program reservation data 7, a memory device 8, an EPG producer portion, a video output portion 10, a display portion 11 and a network controller portion 12.

The wireless terminal 15 is constructed with a wireless network/communication controller portion 16, a system controller portion 17, an EPG producer portion 18, a display portion 19, an input means 20, a signal divider portion 21 and a tuner 22.

The wireless router 13 has a wireless LAN function, such as, Wi-Fi, etc., and can be connected with an external network, via a communication network. Also, the wireless router 13 is connected with the television receiver 1, a television receiver 24, the wireless terminal 15 and an external network 14, and therefore the television receivers 1, the television receiver 24 or the wireless terminal 15 can obtain information from the Internet network.

The structure of each portion of the television receiver 24, since it is same to that of the television receiver 1, therefore an explanation thereof will be omitted herein. Also, the wireless router 13 is connected with the television receiver 1 or the television receiver 24 through a wired LAN or a wireless LAN, and is assumed to be connected with the wireless terminal 15 through the wireless LAN. Herein, the Wi-Fi is a standard regulation of wireless LAN (Local Area Network), which is formulated by a regulation "IEEE 802.11a/IEEE 802.11b" of IEEE (The institute of Electrical and Electronics Engineers, Inc.)

The tuner 2 is a portion for obtaining broadcast program data from the radio waves received from the broadcasting station, while tuning up to the channel of desired service, by the function of the tuning controller portion 5.

The signal divider portion 3 has functions, for separating the broadcast data received into for each kind thereof, such as, video data, audio data, caption character data, obtaining the service information SI while extracting the program information, and delivering it to other processing block(s). Also, when a request for data transmission is made from other processor portion(s), this transmits the data designated to an origin of the request.

The system controller portion 4 receives an operation request by the user via the input means 6, and controls each block, such as, the signal divider portion 3, the tuning controller portion 5, the memory device 8, the EPG producer portion 9, the video output portion 10 or the network controller portion 12. Also, this has a function of delivering the SI of the divided service information from the signal divider portion 3 to the EPG producer portion 9.

The tuning controller portion 5 receives an instruction for tuning or selecting the service via the input means 6, and controls the tuner 2 to exchange or switch the channel to be tuned depending on the instruction. Also, the tuning controller portion 5 is able to receive an instruction from the EPG producer portion 9 or the EPG producer portion 18, and controls the tuner 2 to exchange or switch by a unit of the service (i.e., the channel number), which is broadcasting the event (i.e., the program) on air at present and presentation of the broadcast, to which that service belongs.

The input means 6 is an input means for receiving an operation upon the television receiver 1 from the user and thereby inputting control information in relation to an input operation, and is achieved by, for example, a pointing device or the like, such as, a remote controller, a keyboard, a mouse, etc.

The memory device 8 is controlled upon an instruction made by the system controller portion 4, and reserves reservation information for the program reservation, such as, a recording reservation, etc., on EPG, which is produced in the EPG producer portion 9 through the input means 6, into the program reservation data 7.

The EPG producer portion 9 produces an EPG screen upon basis of EIT, which is included in SI of the service information. The EPG screen is that for displaying plural numbers of service lists and plural numbers of event lists, belonging to a corresponding broadcaster unit.

Herein, the broadcaster unit indicates the BS digital broadcasting, the CS digital broadcasting and the terrestrial digital broadcasting, and in the present embodiment, the EPG producer portion 18 is able to produce EPG while exchanging any one of BS digital broadcasting, the CS digital broadcasting and the terrestrial digital broadcasting. Also, it is a matrix-like EPG, aligning the event information (i.e., the programs) for each service ID (i.e., the channel number) in the horizontal direction while aligning the event information in time sequence on a time axis in the vertical direction.

The EPG producer portion 9 produces a video signal of EPG, in such a manner that, on the display portion 11 can be displayed a portion, at least corresponding to a part of services of EPG, in relation to all of services, which are available on one (1) broadcaster unit. The EPG producer portion 9 transmits the produced video signal of EPG screen to the video output portion 10.

The video output portion 10 receives the signals, which are obtained by converting the video data and the audio data separated from the signal divider portion 3 into a video signal and an audio signal, respectively, by the system controller portion 5, and outputs video and audio to the display portion 11. Also, the video output portion composes or combines the EPG video, which is produced in the EPG producer portion 9, and the video signal.

The display portion 11 is a portion for displaying a picture or an EPG screen thereon, displaying thereon the picture and EPG thereof of the channel or the like, on which viewing/listening is made. Also, the display portion 11 is made up with, for example, a display or a liquid crystal panel, etc., of a television or a personal computer, for example.

The network controller portion 12 is connected with the wireless router 13 through the wired LAN or the wireless LAN, and transmits the identification information and the property of the program, which the identification information indicates, to the wireless network/communication controller portion 16, as the program state information of the program, with using the network ID (so-called, the broadcast) and the service ID (so-called, the channel number) and the event ID (so-called, the program) to be the identification information.

The wireless network/communication controller portion 16 obtains the program state information outputted from the network controller portion 12, and delivers it to the system controller portion 17. Also, the wireless network/communication controller portion 16 is connected with a communication network through a base station 23, therefore is able to conduct data communication, etc.

The system controller portion 17 receives the operation request of the user via the input means 20, and controls each block of the signal divider portion 21, the EPG producer portion 18, the display portion 19 and the wireless network/communication controller portion 16. Also, the system controller portion 17 has a function of delivering the service information SI separated, from the signal divider portion 21 to the EPG producer portion 18.

Further, the system controller portion 17 is able to obtain the service information by extracting the program information even from the communication network through the external network 14 or the base station 23, via the wireless network/communication controller portion 16, and also has a function of delivering it to the EPG producer portion 18. In the present embodiment, explanation will be given on a case where the program information of the digital broadcast is extracted and the service information SI are obtained in the signal divider portion 21.

The EPG producer portion 18 produces the EPG screen, upon basis of EIT included in the service information SI. This EPG is for displaying pleural numbers of service lists and plural numbers of event lists, belonging to the corresponding broadcaster unit, and has a function similar to that of the EPG producer portion 9.

The display portion is a portion for displaying the EPG screen or the like thereon, and is constructed with a touch panel, etc., for example.

The input means 20 is an input means for receiving the operation to the wireless terminal 15 from the user, and thereby inputting control information relating to the input operations, and may be applied a touch panel, etc., for example.

The signal divider portion 21 and the tuner 22 have functions, respectively, being similar to those of the signal divider portion 3 and the tuner 2 of the television receiver 1.

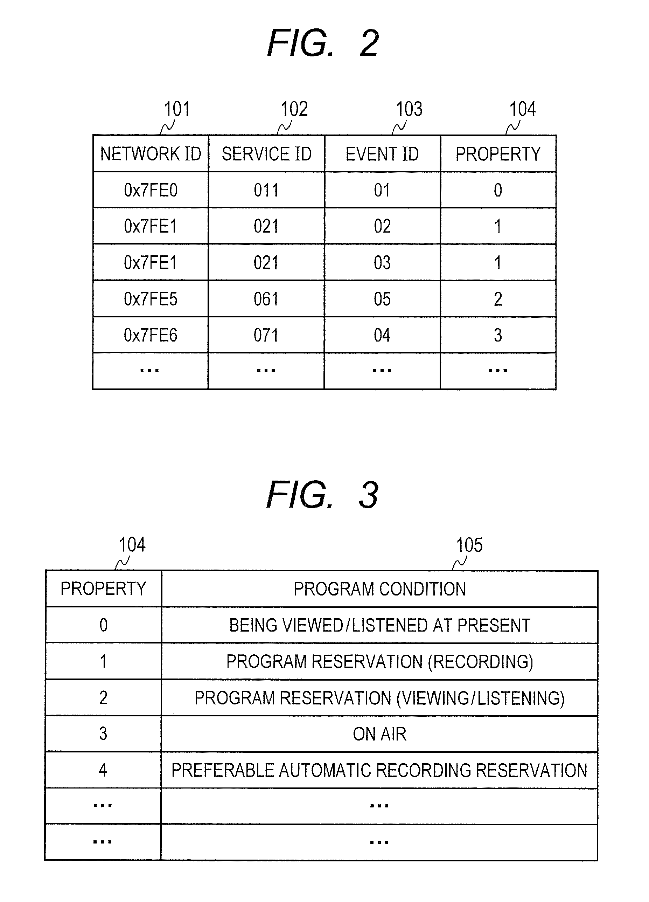

Next, explanation will be given on the data format relating to the network terminal system according to the present embodiment, by referring to Figs. 2 and 3.

Fig. 2 is a view for showing an example of the data format of the program state information.

The program state information is built up with the formats, as is shown in Fig. 2; a network ID 101, a service ID 102, an event ID 103 and a property 104.

Fig. 3 is a view for showing an example of details of the property 104 of the program state information shown in Fig. 2. The property 104 indicated the program state or condition 105 on the television receiver 1; i.e., being viewed/listened or reserved, etc. Herein, "0" indicates a program of being under condition of viewing/listening on the television receiver, at present, "1" a program, recording of which is reserved, "2" a program, viewing/listening of which is reversed, "3" a program, which is on air at the present time, and "4" a program, a favorite automatic recording of which is reserved, respectively.

Next, explanation will be given on a case where the input means 20 receives the operation from the user and the wireless terminal 15 starts EPG, by referring to Figs. 1, 2, 3 and 4.

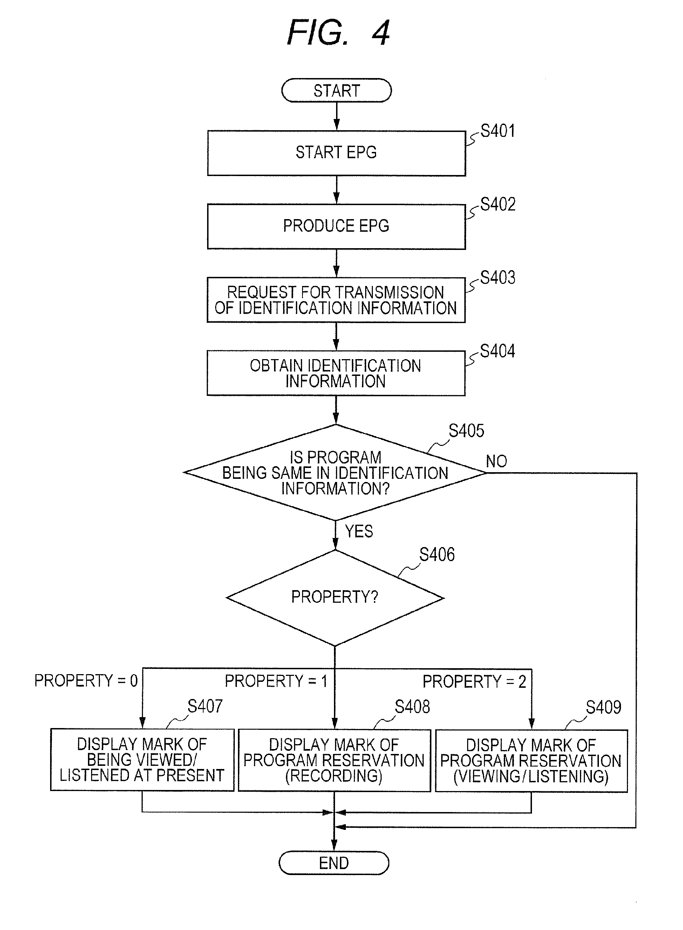

Fig. 4 is a view for showing an example of a sequence of operations for conducting an identification display unique to EPG.

The system controller portion 17, when receiving an instruction of starting EPG through the input means (S401), delivers the service information SI divided from the signal divider portion 21 to the EPG producer portion 18. The EPG producer portion 18 produces an EPG screen upon basis of EIT included in the service information SI (S402), and displays EPG on the display portion 19. Also, the system controller portion 17 requests the television receiver 1 to transmit the program state information (S403).

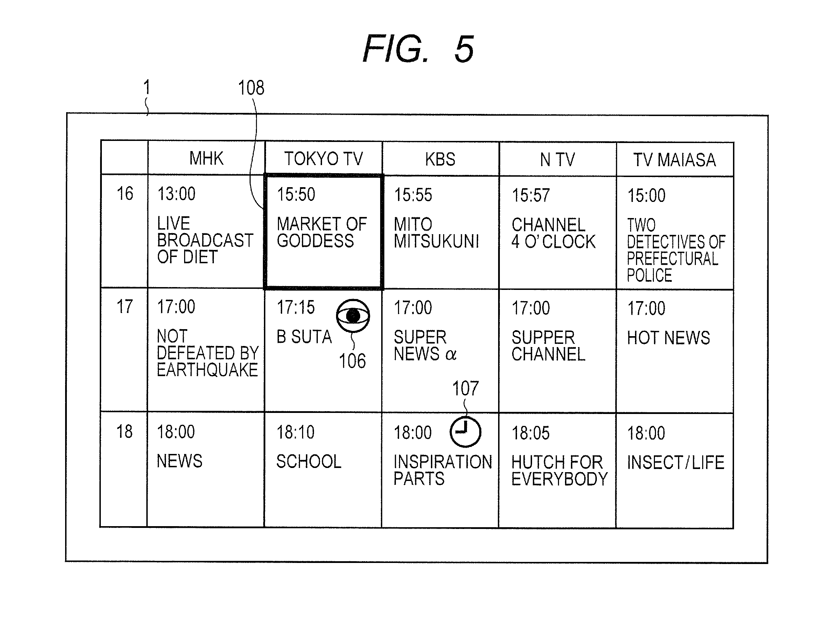

The system controller portion 4 transmits the information, i.e., the network ID, the service ID, the event ID and the property thereof, of the program, being viewed/listened at present, and the program, on which the reservation is made, as the program state information, to the system controller portion 17 via the wireless network/communication controller portion 16 of the wireless terminal 15. The system controller portion 17 receives the program state information, which is transmitted from the system controller portion 4 (S404), and if there is a program within the programs of the program state information separated from the signal divider portion 21, being coincident with, i.e., the network ID, the service ID and the event ID thereof being coincident with the network ID 101, the service ID 102 and the event ID 103 of the program information received (S405: "YES"), the identification display unique to that program is conducted, as is shown in Fig. 5, by the EPG producer portion 18, depending on the property 104 of that program, which is included in the program state information received.

Fig. 5 is a view for showing an example of the screen display when displaying EPG on the television receiver 1. A mark 106 or a mark 107 is a mark for indicating a view/listen reservation or a recording reservation, respectively, and therefore, a reservation condition of the program(s) displayed on EPG can be determined with this. Also, a square frame 108 is for indicating a program, being viewed/listened at present. In the explanation of the present embodiment, Fig. 5 is for explaining the screen of EPG comparing to that displayed on the wireless terminal 15, and therefore the operations and the explanation of the operations will be omitted herein.

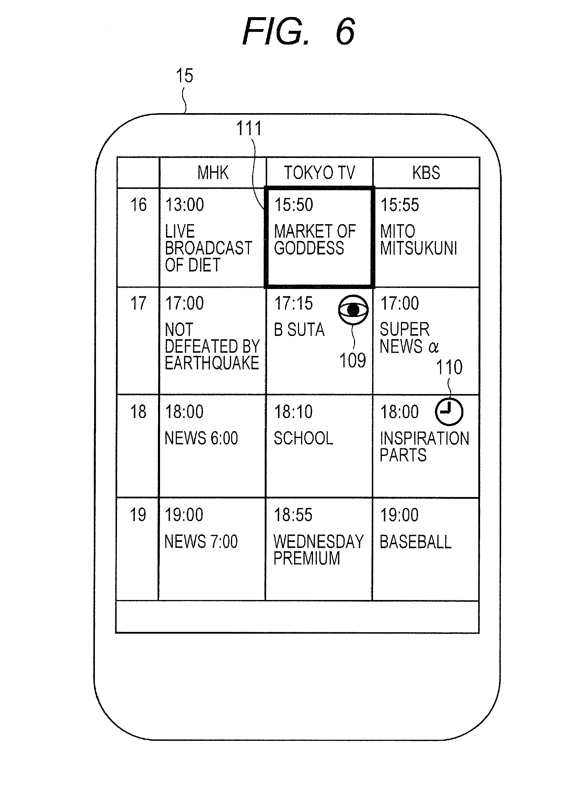

Fig. 6 is a view for showing an example of a screen display of EPG to be displayed on the wireless terminal 15. A mark 109 or a mark 110 corresponds to the mark 106 or the mark 107 shown in Fig. 5, respectively. Also, a square frame 111 corresponds to the square frame 108 shown in Fig. 5. In the present embodiment, although the same mark shapes or the frame shapes are used as the example of the unique identification display, on the television receiver 1 and the wireless terminal 15; but they may have shapes differing from each other, respectively. Also, the program having no property 104 and the program having the property 104 may be displayed to be distinguishable between them, for example, by adding a color within the frame, or changing a font of the program name, etc., in addition to changing the display of the mark or the form of a frame line thereof.

In this manner, there are cases where the EPG to be displayed on the television receiver 1, as shown in Fig. 5, and the EPG to be displayed on the wireless terminal 15, as shown in Fig. 6, may differ from, depending on a display capacity (i.e., a display aspect, a display pixel number, etc.), and also where the event information (the programs) aligned in the matrix manner may differ from in the alignment thereof.

Also, there are cases where a number may be different, for the service IDs (the channel numbers) and the event information (the programs), which can be displayed at the same time, respectively, depending on a display area of EPG, between the television receiver 1 and the wireless terminal 15, and in the present embodiment, the service IDs (the channel numbers) in the horizontal direction and the display of the time axis in the vertical direction are displayed "5 channels" and "3 hours", respectively, on the television receiver 1, and are displayed "3 channels" and "4 hours" on the wireless terminal 15, respectively; however, since the information of the program(s), which is/are viewed/listened or reserved, to be displayed on the TV 1 and the wireless receiver 15, is shared in common, then for the user, it is possible to recognize the program(s), which is/are viewed/listened or reserved, without comparing both the EPG on the television receiver and the EPG on the wireless terminal.

### <Embodiment 2>

Hereinafter, explanation will be given on a second embodiment according to the present invention, by revering to Figs. 1, 7 and 8.

However, in the present embodiment, explanation will be made by emphasizing the differences in comparison with the first embodiment.

The network terminal system according to the present embodiment, similar to the first embodiment shown in Fig. 1, is constructed with the television receiver 1, the wireless terminal 15, the wireless router 13 and the external network 14. Herein, the structure of each portion of the television receiver 1 or the wireless terminal 15 is same to that of the first embodiment, and therefore the explanation thereof will be omitted herein.

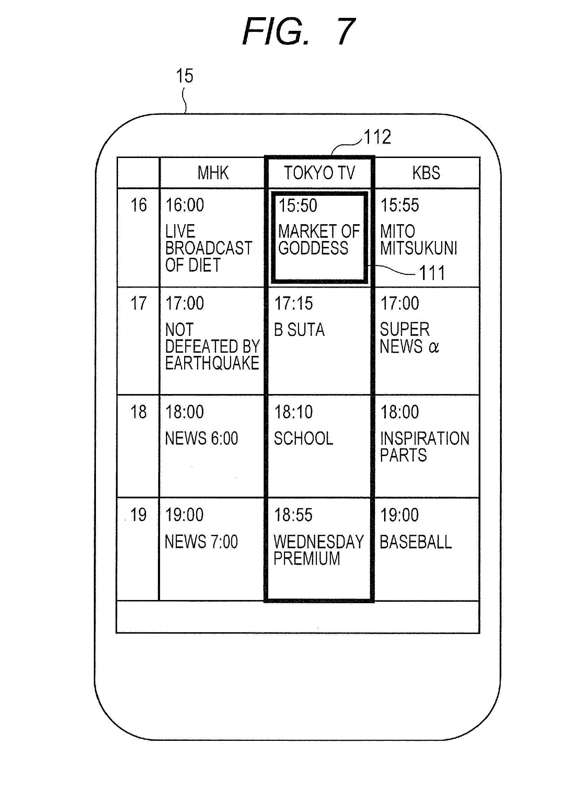

Fig. 7 is a view for showing an example of the screen display of EPG to be displayed on the wireless terminal 15 in the present embodiment.

The system controller portion 17 of the present embodiment displays the service ID (the channel number or broadcasting station) including the event ID (the program) of EPG, which is produced by the EPG producer portion 18, to be posited at a center of the EPG display, having priority to other service IDs (the channel numbers or the broadcasting stations), if there is a program being coincident with, i.e., the network ID, the service ID and the event ID thereof being coincident with the network ID 101, the service ID 102 and the event ID 103 of the program information received, and if there is a service ID including a program, the property 104 of which is "on air at present", among the programs in the service information, which is separated from the signal divider portion 21.

In the present embodiment, on EPG are disposed the events (the programs) in the horizontal direction, for each service ID (the channel number of the broadcasting station); however, a program 112 of a service ID (the broadcasting station: "Tokyo TV") including a program 111 ("market of goddess"), being on air at present, is displayed in such a manner that it locates at the center of the EPG display prior to the other service IDs (the broadcasting stations). If an even number of the stations is aligned in the horizontal direction on the EPG screen, for example, in case of displaying 4 stations, it may be disposed at the second one or the third one, nearing to the center.

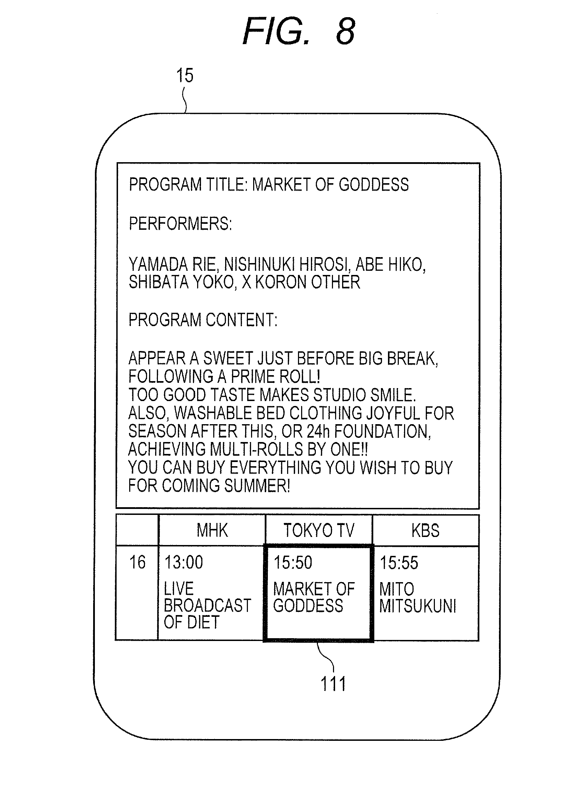

Fig. 8 is a view for showing other embodiment of the screen display when starting EPG to be displayed on the wireless terminal 15, according to the present embodiment. If there is a program, being coincident with, i.e., the network ID, the service ID and the event ID thereof being coincident with the network ID 101, the service ID 102 and the event ID 103 of the program state information, in the service information divided from the signal divider portion 21, and if the property 104 thereof is the program, being viewed/listened at present, program details of that program are displayed as an initial display when starting.

In the example shown in Fig. 8, since the a program 111 ("market of goddess") is the program, being viewed/listened at present, the program details of this program are displayed as the initial display when starting.

In this manner, i.e., by disposing the program, being viewed/listened on the television receiver at present, at the center of EPG, prior to the others, it is possible to confirm the program information of the channel, being viewed/listened at present, and with broadcast programs, which will be broadcasted in future, or of the channels in front or back, it is possible to find out a program to be seen centering around the program or the channel, being viewed/listen at present.

### <Embodiment 3>

Hereinafter, explanation will be given on a third embodiment, according the present invention, by referring to Figs. 6 and 9-15.

However, in the present embodiment, explanation will be made by emphasizing the differences in comparison with the first embodiment.

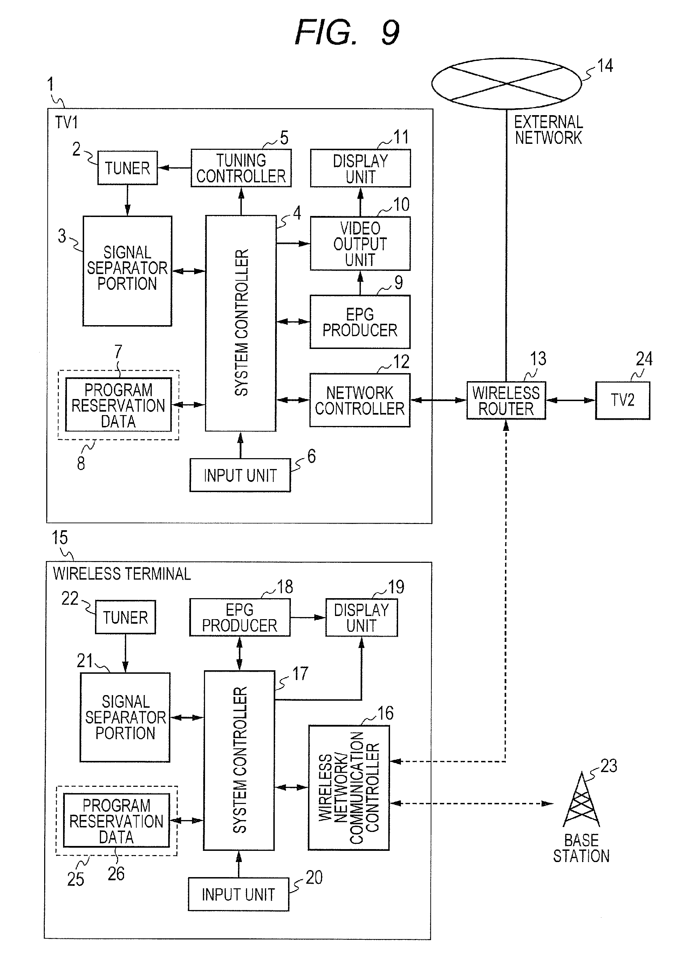

Fig. 9 is a block diagram for showing an embodiment of the network terminal system, according to a third embodiment.

The network terminal system according to the present embodiment, similar to the first embodiment shown in Fig. 1, is constructed with the television receiver 1, the wireless terminal 15, the wireless router 13 and the external network 14.

The television receiver 1 is constructed with the tuner 2, the signal divider portion 3, the system controller portion 4, the tuning controller portion 5, the input means 6, the program reservation data 7, the memory device 8, the EPG producer portion 9, the video output portion 10, the display portion 11 and the network controller portion 12.

The wireless terminal 15 is constructed with the wireless network/communication controller portion 16, the system controller portion 17, the EPG producer portion 18, the display portion 19, the input means 20, the signal divider portion 21, a tuner 22, a memory device 25 and a program reservation data 26.

In the present embodiment, comparing to the first embodiment, on the wireless terminal 15 are provided the memory device 25 and the program reservation data 26 thereon.

The memory device 25 is controlled by an instruction of the system controller portion 17, and stores reservation information reserved, such as, a recording reservation, etc., being made on the EPG produced in the EPG producer portion 9 by the input means 20, into the program reservation data 26, temporally. This also stores the reservation information, which is received from the system controller portion 4 via the network controller portion 12 and the wireless network/communication controller portion 16, into the program reservation data 26, temporally.

The system controller portion 17 stores the reservation information, such as, a recording reservation of the program, etc., being made on EPG, which is produced in the EPG producer potion 18 by the input means 20, into the program reservation data 26, temporally. Also, it has a function of storing the reservation information, which is received from the system controller portion 4 via the network controller portion 12 and the wireless network/communication controller portion 16, into the program reservation data 26, temporally. Further, this is able to transmit the reservation information stored in the program reservation data 26 to the system controller portion 4, via the wireless network/communication controller portion 16 and the network controller portion 12.

The system controller portion 4 stores the reservation information, such as, the recording reservation of a program, the reservation thereof being made on EPG, which is produced in the EPG producer portion 9 by the input means 6, into the program reservation data 7. Also, this has a function of receiving the reservation information of the program reservation data 26, which is stored in the memory device 25, temporally, via the wireless network/communication controller portion 16 and the network controller portion 12, and thereby storing or overwriting it in the program reservation data 7. Further, depending on a request from the system controller portion 17, this is able to transmit the reservation information, which is stored in the program reservation data 7 of the memory device 8, to the system controller portion 17, via the network controller portion 12 and the wireless network/communication controller portion 16.

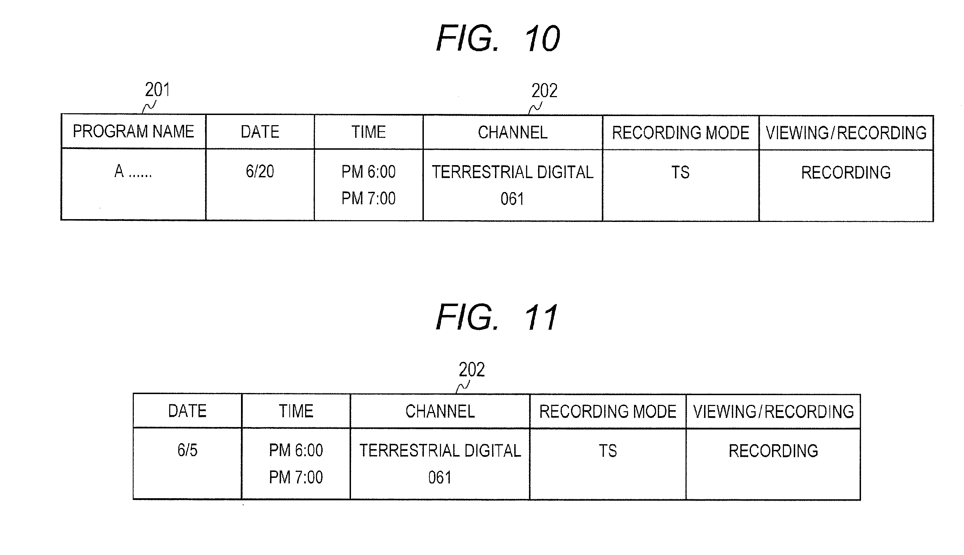

Next, explanation will be given on the data format relating to the network terminal system, according to the present embodiment, by referring to Figs. 10 and 11.

Fig. 10 is a view for showing an example of the data format of the reservation information.

The reservation information, as is shown in Fig. 10, is made up with a program name 201, date, time, channel 202, a recording mode, data for viewing/recording.

Fig. 11 is a view for showing a variation of the data format of the reservation information.

The data format shown in Fig. 11 has no program name 201, comparing to that shown in Fig. 10, but as the information accompanying with the program other than the channel 202, such as, this program name or the like, for example, it is possible to use the program information of the EPG screen, which is produced by the EPG producer portion 18 of the wireless terminal 15. With doing in this manner, it is possible to reduce an amount of communication data between the television receiver 1 and the wireless terminal 15, and also to deal with a case where an amount of the program information is large and the details thereof can be displayed, in particular, when the service information can be obtained from the external network or the communication network.

Next, explanation will be given on an example of the case where the user starts the EPG of the wireless terminal 15, so as to make reservation of a program, by referring to Figs. 6, 9 and 12-15.

In the similar manner to that of the first embodiment, the system controller portion 17, upon receipt of an instruction of staring EPG by the input means 20, delivers the service information SI divided, from the signal divider portion 21 to the EPG producer portion 18. The EPG producer portion 18 produces the EPG screen upon basis of the EIT included in the service information SI, and display the EPG on the display portion 19. Also, the system controller portion 17 requests the system controller portion 4 of the television receiver 1 to transmit the program state information.

The system controller portion 4 of the television receiver 1 transmits the network ID, the service ID, the event ID and the property thereof, of the program, the reservation of which is made, as the program state information of the program, to the system controller portion 17 via the wireless network/communication controller portion 16 of the wireless terminal 15. The system controller 17 displays marks indicating the viewing/listening reservation and the recording reservation, as is in the first embodiment shown in Fig. 5, for that program, depending on the property thereof, by the EPG producer portion 18, if there is a program being coincident with, i.e., the network ID, the service ID and the event ID thereof being coincident with the network ID, the service ID and the event ID of the program state information received, respectively, among the programs of the service information divided from the signal divider portion 21.

Next, explanation will be given on case where a program attached with the program reservation mark by the input means 20.

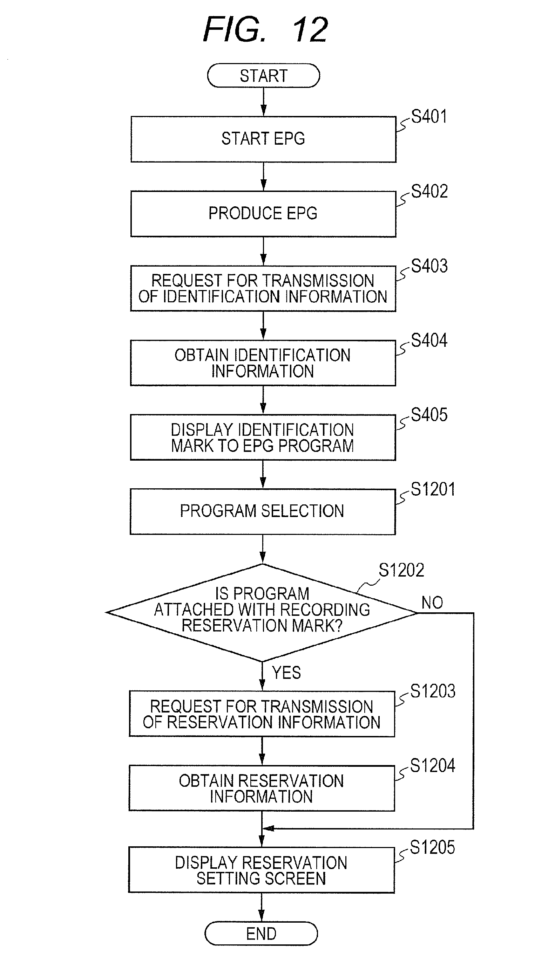

Fig. 12 is a view for showing an example of a sequence of operations when making the program reservation on EPG.

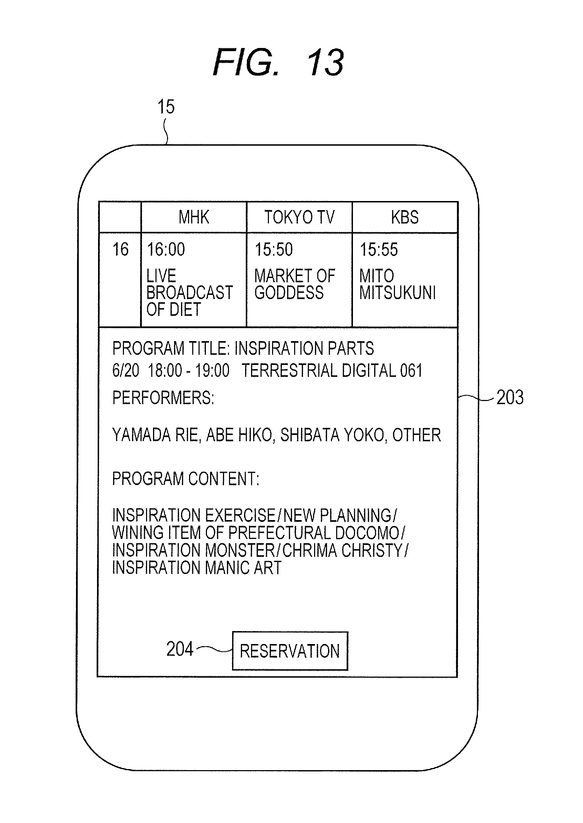

Explanation of the processes until when displaying an identification mark on the EPG display (S405) is same to those explained in Fig. 4, and therefore it will be omitted herein. After when displaying the identification mark on the EPG display, a program is selected on the EPG screen by the input means 20 (S1201), and if that program is one attached with the recording reservation mark (S1202: YES), the system controller portion 17 requests the system controller portion 4 to transmit the reservation information (S1204). The system controller portion 17 receives the reservation information, which is transmitted from the system controller portion 4 (S1204), and displays a reservation setting screen as is shown in Fig. 13 (S1205).

Fig. 13 is a view for showing an example of display of a reservation setting screen 203, in particular, when selection is made on the program, being attached with the recording reservation mark 110 shown in Fig. 6.

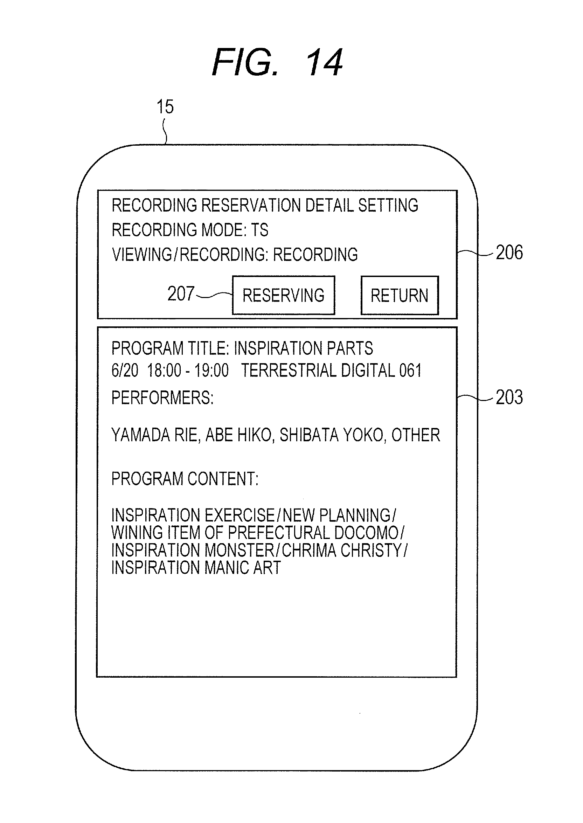

Fig. 14 is a view for showing an example of display of a reservation details setting screen 206.

In Fig. 6, if a program "inspiration parts" attached with the recording reservation mark 110, then as is shown in Fig. 13, the reservation setting screen 203 is displayed. Since the program attached with the recording reservation mark is the program, which was already reserved on the television receiver 1, the system controller portion 17 of the wireless terminal 15 obtains the reservation information from the television receiver 1, in accordance with the steps shown in Fig. 12, and stores it into the program reservation data 26 of the memory device 25.

The system controller portion 17 displays such reservation setting screen 203, as is shown in Fig. 13, on the display portion 19, upon basis of the reservation information, which is temporally stored in the program reservation data 2 6, via EPG producer portion 18. The reservation setting screen 203 has a "reservation button" 204, being provided for shifting to the reservation details setting screen 206 for setting up the recording mode and/or distinction between the viewing/listening and the recording.

A "reserving button" 207 shown in Fig. 14 is a button for registering the reservation, again, after conducting alternation on the setting, etc., on the reservation details setup screen 206. When the "reserving button" 207 is selected, the system controller portion 17 stores a reservation setting condition, as the reservation information, into the program reservation data 7 of the memory device 8, by overwriting it, via the wireless network/communication controller portion 16, by the system controller portion 4 of the television receiver 1.

Next, explanation will be given on case where selection is made on the program, not being attached with the program reservation mark, by the input means 20.

The program not attached with the program reservation mark is the program, on which no reservation made on the television receiver 1, therefore the system controller portion 17 of the wireless terminal 15 produces the reservation information upon basis of the program information on the EPG screen, which is produced in the EPG producer portion 18, and stores it into the program reservation data 26, temporally, and then it stores that data into the program reservation data 7 of the memory device 8, newly, as the reservation data, by means of the system controller portion 4 of the television receiver 1, via the wireless network/communication controller portion 16.

Next, explanation will be given on case where selection is made on a program, being on air at present, by the input means 20.

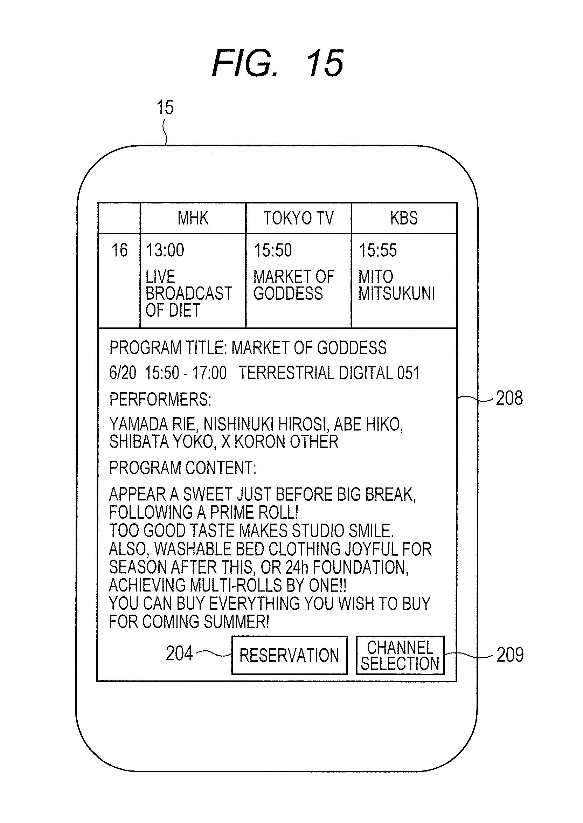

Fig. 15 shows an example of display of a reservation setting screen 208 when selection is made on the program being on air in Fig. 6. The portion differing from that shown in Fig. 13 is in that a "tuning button" 209 is added therein. The "tuning button" 209 is one to be displayed when selection is made on the program being on air, upon selection of this button, tuning information is transmitted to the system controller portion 4, in the similar manner to that of the reservation information mentioned above, wherein the system controller 4 controls the tuner 2, via the tuning controller portion 5, so as to display the selected program, being on air, on the display portion 11.

Herein, as an example of the tuning information, it may be constructed with the service ID (i.e., the channel number).

In this manner, it is possible to newly registrar the program reservation, and also to change the program reservation, being already made, on the television receiver, easily, from the side of the wireless terminal, and further it is possible to suppress an amount or volume of data communication between the wireless terminal and the television receiver.

### <Embodiment 4>

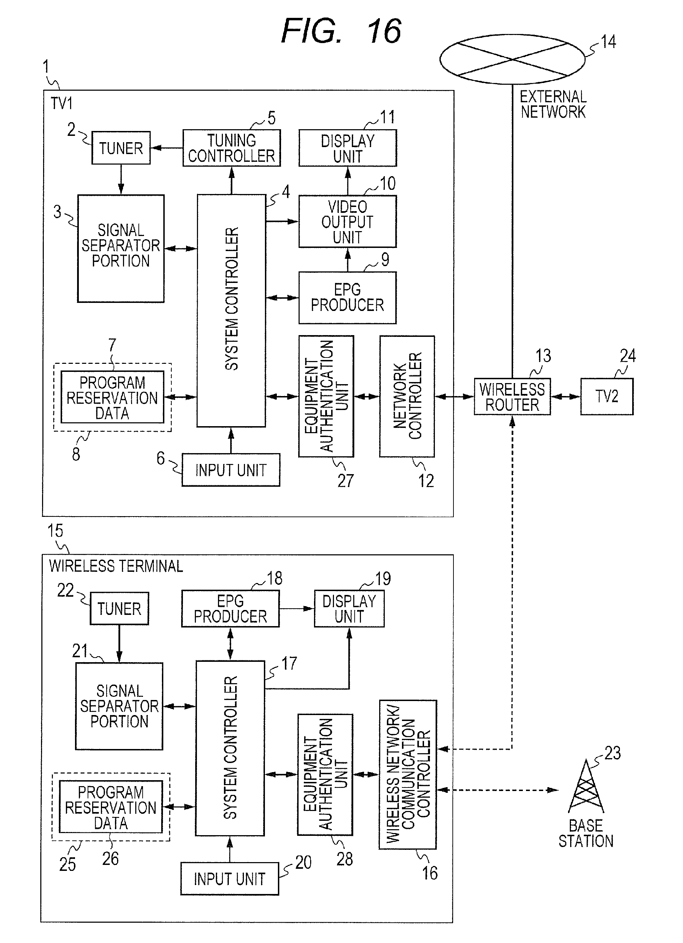

Hereinafter, explanation will be given on a fourth embodiment, according to the present invention, by referring to Figs. 16-20.

However, in the present embodiment, explanation will be made by emphasizing the differences in comparison with the third embodiment.

Fig. 16 is a block diagram for showing an embodiment of the network terminal system, according to a fourth embodiment.

The network terminal system according to the present embodiment, similar to the third embodiment shown in Fig. 1, is constructed with the television receiver 1, the wireless terminal 15, the wireless router 13 and the external network 14.

The television receiver 1 is constructed with the tuner 2, the signal divider portion 3, the system controller portion 4, the tuning controller portion 5, the input means 6, the program reservation data 7, the memory device 8, the EPG producer portion 9, the video output portion 10, the display portion 11 and the network controller portion 12.

The wireless terminal 15 is constructed with the wireless network/communication controller portion 16, the system controller portion 17, the EPG producer portion 18, the display portion 19, the input means 20, the signal divider portion 21, a tuner 22, a memory device 25 and a program reservation data 26.

In the present embodiment, comparing to the third embodiment, on the television receiver 1 and the wireless terminal 15 are provided equipment authentication portions 27 and 28, respectively.

The equipment authentication portion 28 is controlled by the system controller portion 17, and for receiving an authentication from the television receiver 1, it transmits authentication information, such as, a user, a password, etc., which are determined within the television receiver 1, in advance, to the equipment authentication portion 27, via the wireless network/communication controller portion 16 and the network controller portion 12.

The equipment authentication portion 27 allows the equipment authentication portion 28 to connect with, when the authentication information from the equipment authenticationportion 28 is correct authentication information. On the other hand, when the authentication information is an erroneous one, then the equipment authentication portion 27 does not allow the equipment authentication portion 28 to connect with.

Next, explanation will be given on case where a program reservation is made from a program table displayed on the EPG screen of the display portion 19, by means of the input means 20.

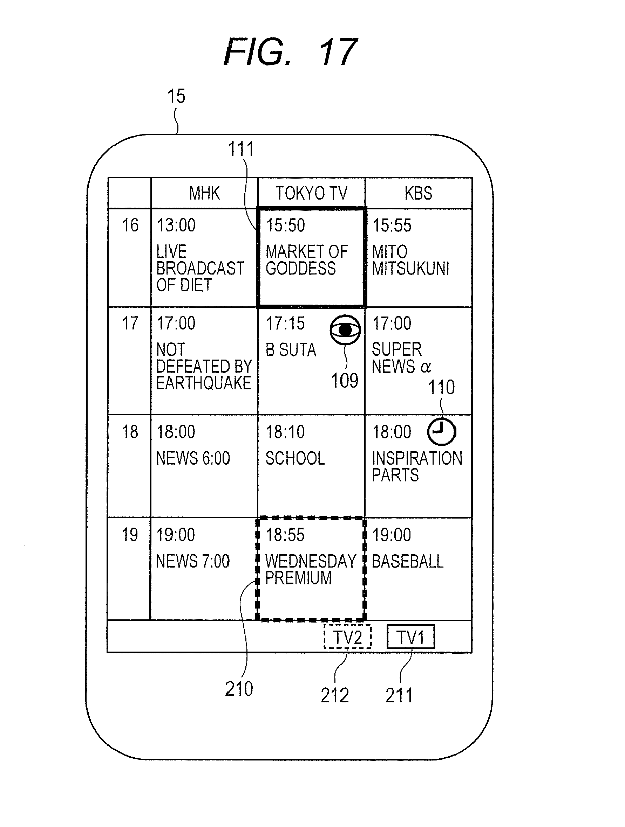

Fig. 17 shows an example of display of the EPG screen when a program 210 is selected on the EPG screen shown in Fig. 6. The program 210 indicates a selection portion, in the present embodiment, and is surrounded by a square frame of broken lines.

The system controller portion 17 makes an equipment authentication to the television receiver 1, and if the authentication information is correct one, it displays an authentication equipment display 211 or 212 on the EPG display of the display portion 19. On the EPG screen shown in Fig. 17, each the authentication equipment display 211 or 212 shows the condition of the television receiver 1 or the television receiver 24, of being authenticated or have been authenticated in the past, and in the present embodiment, it is indicted that the television receiver 1 is authenticated at present (i.e., a frame of solid lines) and the television receiver 24 was authenticated in the past (i.e., a frame of broken lines), and also a history of authentication is displayed at the same time.

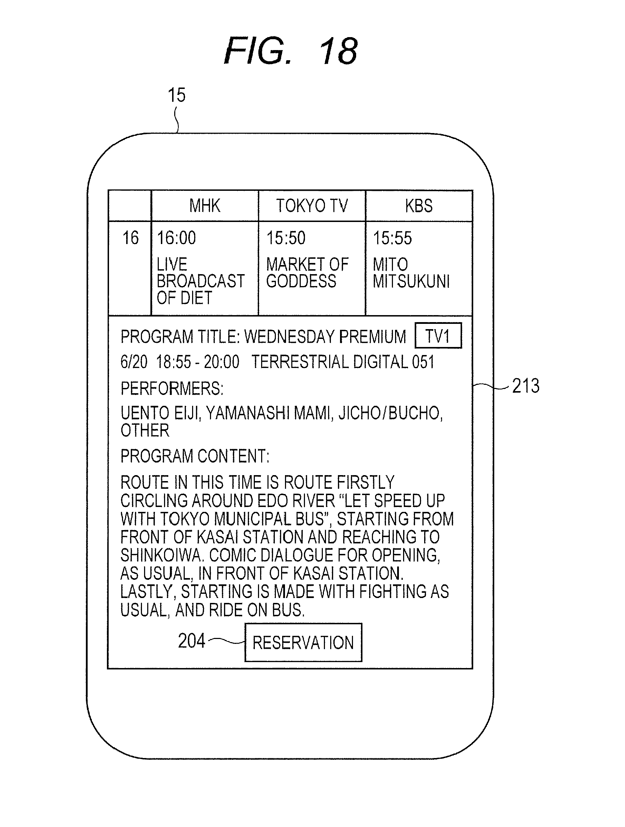

Fig. 18 is a view for sowing an example of display of a reservation setting screen 213 of the equipments connected with, which are authenticated at present. When a program 210 "Wednesday premium" is selected in Fig. 17, the reservation setting screen 213 is displayed, as is shown in Fig. 18, and therefore the program reservation can be made thereon, in the similar manner to that of the third embodiment. The operations for reservation are same to those of the third embodiment, and therefore, the detailed explanation thereof will be omitted herein.

Next, explanation will be given on case of the television receiver 24, which was tried to connect with, but not being authenticated with, at present, yet. As such an example is assumed a case where connecting equipment is located far from, so that Wi-Fi communication cannot be made, where it is in the condition of waiting under a sleep mode, or where it obtains the program information from a communication network outdoor.

In Fig. 17, the authentication display 212 of the television receiver 24 is displayed by the frame of broken lines, and therefore indicating that it was authenticated in the past (i.e., the frame of broken lines). Since the connecting equipment, being authenticated at present, is selected under a default condition, normally, there is no necessity of selecting the connecting equipment; however, if there is equipment not be authenticated yet, there is a necessity of selecting the connecting equipment in advance to the reservation.

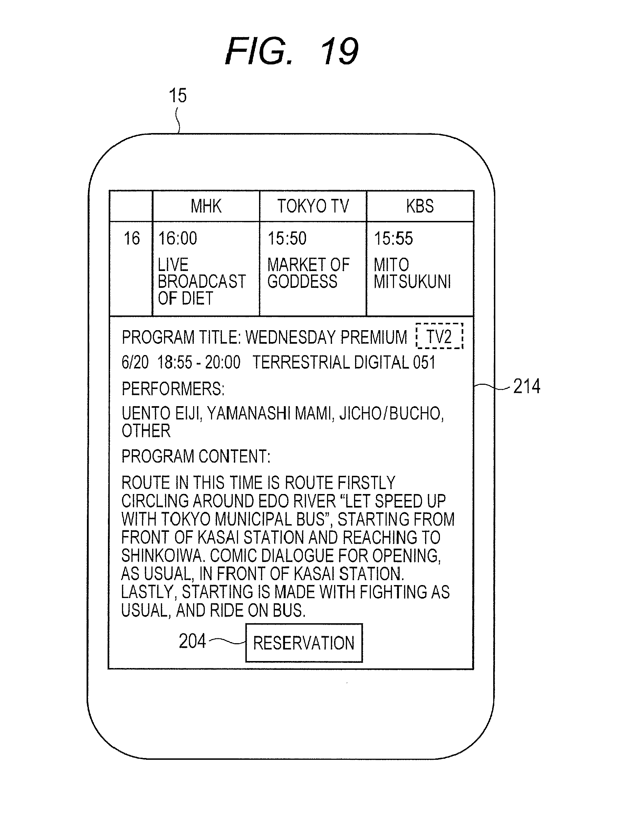

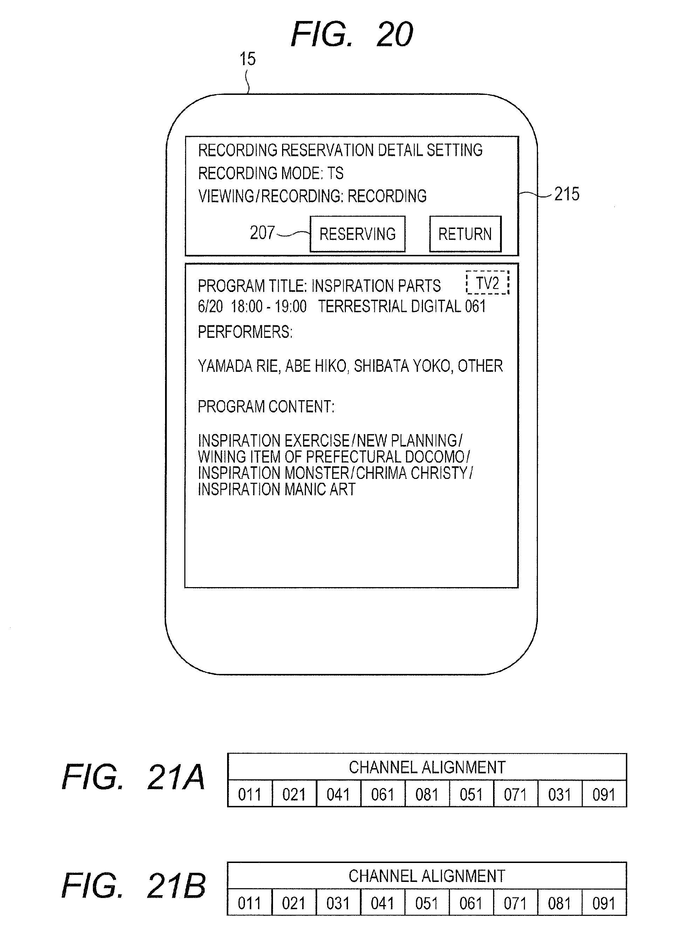

Fig. 19 is a view for showing an example of display of a reservation setting screen 214 for the connecting equipment, not being authenticated, yet, at present. Fig. 20 is a view for showing an example of display of a reservation details setting screen 215 for the connecting equipment, not being authenticated, yet, at present.

In Fig. 17, when the program 210 "Wednesday premium" is selected, as was mentioned above, the reservation setting screen 214 is displayed, as is shown in Fig. 19, while the reservation details setting screen 215, as is shown in Fig. 20, when the "reservation button" 204 is selected.

Herein, when the "reserving button" 207 shown in Fig. 20 is selected, since no connecting equipment is authenticated, the reserving operation is ended after storing the reservation information in the program reservation data 26 of the memory device 25, temporally.

Thereafter, where an access can be made, such as, when the wireless terminal 15 enters from an outside of Wi-Fi communication area into an inside of that area, etc., the equipment authentication portion 27 of the television receiver 24 and the equipment authentication portion 28 of the wireless terminal 15 authenticate, mutually, and the system controller portion 17 transmits the reservation information, which is stored in the program reservation data 26, to the television receiver 24, via the communication controller portion 16, so that it is reserved as the program reservation into the program reservation data 7 of the television receiver 24. Also, if a starting time of the reservation information, which is stored in the program reservation data 26 is in the past than the present time, or if the reservation information is the past one, it is also possible to display error information on the display portion 19, before transmission of the reservation data to the television receiver 24.

In the present embodiment, although the explanation was given on the example, in which two (2) sets of the television receivers are connected with the network; however, there is no limitation in connecting plural numbers of sets therewith. Also, the explanation was given on the example, where the reservation information stored in the program reservation data 26 is transmitted to the television receiver 24, automatically, when the television receiver 24 can be authenticated; however, the reservation information may be transmitted, manually, at the time when the television receiver 24 can be authenticated. Further, when the reservation information is stored in the program reservation data 26, temporally, a condition thereof, i.e., being stored, temporally, may be displayed with using an icon, etc., for showing that condition.

In this manner, the reservation can be made thereon, on that occasion when a program is found to be recorded, such as, when the user makes a search of program on the EPG screen, while obtaining the program information from the communication network outdoor, etc., for example, and therefore for the user, it is possible to transmit the program reservation to the television receiver, automatically or manually, when the wireless terminal is in the condition of being connectable with the network within a house after she/he comes back home.

### <Embodiment 5>

Hereinafter, explanation will be given on a fifth embodiment, according to the present invention, by referring to Fig. 1.

However, in the present embodiment, explanation will be made by emphasizing the differences in comparison with the first embodiment.

The network terminal system according to the present embodiment, similar to the first embodiment shown in Fig. 1, is constructed with the television receiver 1, the wireless terminal 15, the wireless router 13 and the external network 14.

Herein, the structure of each portion of the television receiver 1 or the wireless terminal 15 is same to that of the first embodiment, and therefore the explanation thereof will be omitted herein.

The EPG producer portion 9 produces a matrix-like EPG by aligning or allocating the event information (i.e., the programs) for each service ID (i.e., the channel number) in the horizontal direction, while allocating the event information in the time-sequential order thereof, in the vertical direction as the time axis.

Figs. 21A and 21B are views for showing an example of channel allocation information. For channel allocation may be applied a method, such as, a method of aligning the digital broadcasting in the order of the channels of the analog broadcasting, or a method of aligning those in the order of the service IDs (i.e., the channel numbers) of the digital broadcasting. That shown in Fig. 21A is an example of the former, while that shown in Fig. 21B is an example of the latter.

The system controller portion 4 obtains the channel allocation information of the service IDs (i.e., the channel numbers) in the horizontal direction, from the EPG screen, which is produced by the EPG producer portion 9. This channel allocation information is transmitted to the system controller portion 17, via the network controller portion 12, the wireless router 13 and the wireless network/communication controller portion 16. The system controller portion 17 delivers the channel allocation information received to the EPG producer portion 18, so as to display the EPG screen on the display portion 19, in accordance with the channel allocation information being same to the EPG of the television receiver 1.

Figs. 5 and 6 of the first embodiment show the television receiver 1 and the channel allocation of EPG of the wireless terminal 15, respectively.

In this manner, because of the same channel allocation on the EPG screen, even when the channel allocation differs from, on the television receivers or the wireless terminals, the user can operate the EPG screen with a similar feeling, and therefore increasing usability or operability thereof.

### <Embodiment 6>

Hereinafter, explanation will be given on a sixth embodiment, according to the present invention, by referring to Figs. 9, 13 and 14.

However, in the present embodiment, explanation will be made by emphasizing the differences in comparison with the third embodiment.

The network terminal system according to the present embodiment, similar to the third embodiment shown in Fig. 1, is constructed with the television receiver 1, the wireless terminal 15, the wireless router 13 and the external network 14.

Herein, the structure of each portion of the television receiver 1 or the wireless terminal 15 is same to that of the third embodiment, and therefore the explanation thereof will be omitted herein.

In the present embodiment, the system controller portion 4 has a function of transmitting the EPG data of EPG, which is produced in the EPG producer portion 9, and the program state information of the program(s), to the system controller portion 17, via the wireless network/communication controller portion 16. Also, the system controller portion 17 has a function of producing the EPG screen in the EPG producer portion 18 upon the EPG data received, and further a function of displaying the EPG screen and the program state information of the program(s) on the display portion 19.

The system controller portion 17 is able to store the reservation information, such as, the recording reservation on the program, which is made on the EPG, which is produced in the EPG producer portion 18, into the program reservation data 26, temporally, and to transmit the reservation information stored to the system controller portion 4, via the wireless network/communication controller portion 16 and the network controller portion 12.

In this manner, since the EPG data can be obtained from the television receiver, it is possible to conduct the program reservation, in the similar manner to that shown in Figs. 13 and 14.

### <Embodiment 7>

Hereinafter, explanation will be given on an example of a communication terminal system including therein a television receiver and a terminal device therein, being attached with a digital broadcast receiving function, for receiving digital broadcasting waves, including the service information (i.e., the event information) therein, and for displaying the electronic program table (EPG) of the digital broadcasting, upon basis of the service information received.

On BS digital broadcasting, CS digital broadcasting and terrestrial digital broadcasting, which are operated in Japan, transmission is made by multiplexing plural numbers of transport streams (hereinafter, being abbreviated by "TS") onto one (1) transponder (i.e., a frequency channel). The TS has data structures according to a standard regulation of Association of Radio Industries and Businesses (ARIB), i.e., being constructed with TS packets, to which the service information as the event information is added to be a header thereof, for an elementary stream (ES) as content data.

The data structure of the service information is according to ARIB STD-B10 "Standard of service information for digital broadcasting system", being the ARIB standard. The service information is built up with PSI (Program Specific Information), being transmission control information defined in a regulation of MPEG (Moving Picture Expert Group)-2 system, and SI (Service Information) for building up EPG, etc.

The SI is made up with four (4) pieces of tables, i.e., BIT (Broadcaster Information Table), SDT (Service Description Table), EIT (Event Information Table) and TOT (Time Offset Table).

The BIT describes the information relating to broadcasting stations (e.g., the broadcasters) in a network. The SDT is divided into a TS information portion and a service information portion, wherein the TS information portion includes a network ID for identifying the network and a TS ID (Identifier) for identifying the TS.

The network ID is assigned with the network ID, being different from each other, for a BS network, a CS1 network and a CS2 network, respectively. Also, in case of the terrestrial digital broadcasting, within the same area, the network ID having a value different from each other, for each of the broadcasting stations (the broadcasters). The service information portion includes a service ID (so-called, a channel number) therein, as an identifier for identifying the services (or, the channels) respectively within the network.

The EIT describes therein the program information for each event (i.e., so-called the program), and is divided into a service information portion and an event information portion. The service information portion includes therein a service ID (so-called, the channel number), i.e., being the identifier for identifying the service (the channel), respectively, within the network. The event information portion includes therein; an event ID, an event start time, an event continuation time, a name of an event (so-called a program title), a genre of the event, etc. The TOT describes therein the present time.

Although the explanation was given on the digital broadcasting, being operated in Japan, in the above; however, the program information similar to that of the service information mentioned above, in the digital broadcasting operated in each of other countries. Therefore, the present invention, which will be explained hereinafter, is applicable to the broadcasting operated in each of the other countries.

Hereinafter, explanation will be given on a seventh embodiment, according to the present invention.

### <System Configuration>

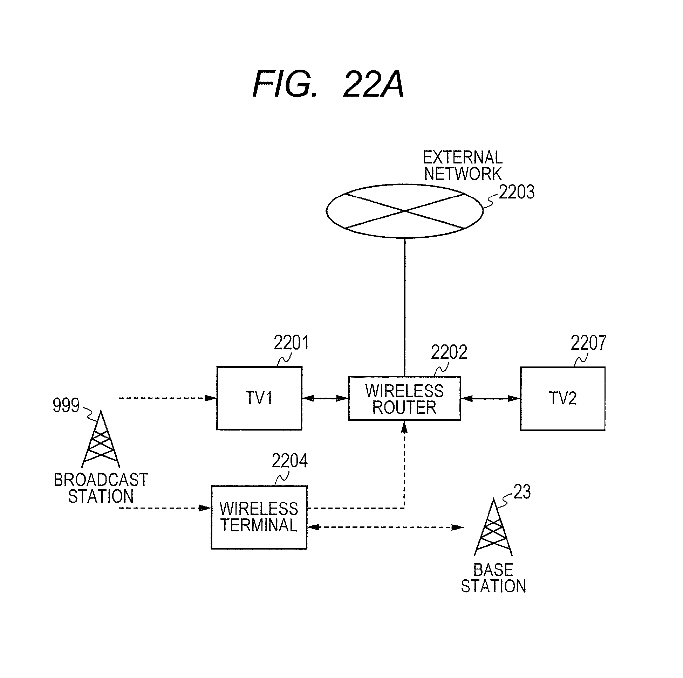

Fig. 22A is a block diagram for showing an embodiment of the communication terminal system according to a seventh embodiment.

The communication terminal system according to the present embodiment is made up with a television receiver 2201, a wireless terminal 2204, a wireless router 2202, and an external network 2203. An example shown in the figure is a case where a user of the wireless terminal 2204, being a mobile communication terminal, such as, a portable telephone, etc., as an information communication terminal, views/listens a television program on the television receiver 2201, at a home or a shop, etc., while bringing that wireless terminal 2204 with.

The wireless router 2202 has a wireless LAN function, such as, Wi-Fi, etc., and can be connected with an external network, via a communication network. Also, the wireless router 2202 is connected with the television receiver 2201, a television receiver 2207, the wireless terminal 2204 and the external network 2203, and the television receivers 2201, therefore the television receiver 2207, or the wireless terminal 2204 can obtain information from the Internet network.

The wireless router 2202 is connected with the television receiver 2201 or the television receiver 2207 through a wired LAN or a wireless LAN, and is assumed to be connected with the wireless terminal 2204 through the wireless LAN. Herein, the Wi-Fi is a standard regulation of wireless LAN (Local Area Network), which is formulated by a regulation "IEEE 802.11a/IEEE 802.11b" of IEEE (The institute of Electrical and Electronics Engineers, Inc.)

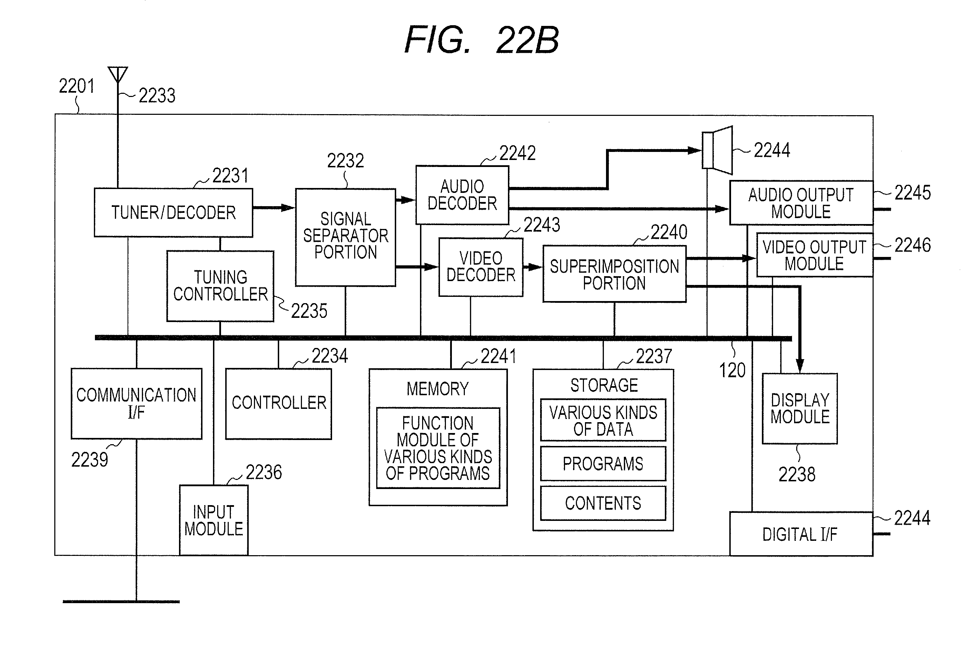

Fig. 22B shows an example of the structure of the television receiver 2201.

The television receiver 2201 is connected with an antenna 2233, and includes a tuner/decoder portion 2231, a signal divider portion 2232, a controller portion 2234, a tuning controller portion 2235, an input means 2236, a storage 2237, a memory 2241, amultiplexerportion 2240, a display portion 2238, a communication I/F 2239, an audio decoder portion 2242, a video decoder portion 2243, a speaker 2244, an audio output portion 2245, a video output portion 2246, etc. Those processor portions are connected with, via a buss 2248.

Also, the television receiver 2201 is able to store an application program(s) in the storage 2237, so that the controller portion 2234 can expand the program(s) mentioned above from the storage 2237 onto the memory 2241, to execute that program, and thereby achieving various kinds of functions. In the explanation, which will be given hereinafter, for the purpose of simplification thereof, it will made upon an assumption that each of those functions, which are achieved through execution of the application program(s) by the controller portion 2234, be achieved by each program function portion.

However, the application program(s) may be stored into the storage 2237, in advance, until when the television receiver 2201 is shipped, or may stored into a medium, for example, an optical medium, such as, a CD (Compact Disk), a DVD (Digital Versatile Disk), etc., or a semiconductor memory, etc., so as to be installed into the television receiver 2201, via a medium connector portion not shown in the figure. Or, it is also possible to install it/them through downloading thereof from the external network 2203 via the communication I/F 2239 and the wireless router 2202.

Also, each of the various functions of the application programs can be achieved in hardware, as a processor portion having the similar function thereof. When achieving them in hardware, each of the functions is achieved by the each processor portion, mainly.

The input means 2236 is an input means for receiving an operation (s) to the television receiver 2201 from the user, thereby inputting control information relating to the operation(s) inputted, and this may be achieved by, for example, a pointing device, such as, a remote controller, a keyboard, a mouse, etc.

The controller portion 2234 receives an operation request of the user via the input means 2236, and controls each of blocks, i.e., the signal divider portion 2232, the tuning controller portion 2235, the storage 2237, the multiplexer portion 2240 and the communication I/F 2239.

The storage 2237 is controlled by an instruction of the controller portion 2234, and is able to store the application program(s) therein. Also, this stores various kinds of information therein, which are produced by the application program(s). Further, this may store contents, such as, video/audio stream or the like, being obtained from the signal (s) received by the tuner/decoder portion 2231 and/or the communication I/F 2239.

The memory 2241 is controlled by an instruction of the controller portion 2234. On the memory 2241 are/is expanded the function portion(s) of the application program(s), which is/are stored in the storage 2237.

The tuner/decoder portion 2231 receives a broadcast signal from a broadcasting station, through tuning up to a channel of a desired service, by means of the tuning controller portion 2235, and demodulates the broadcast signal; thereby obtaining a transport stream. However, in the example shown in Fig. 22B, for the purpose of simplification of the explanation, there is shown the configuration of having one (1) tuner/decoder portion 2231. However, when trying to install a function of conducting the viewing/listening and the recording, in parallel with, or a function of viewing/listening contents of plural numbers of channels, differing from in the transmission frequencies thereof, at the same time, the tuner/decoder portion 2231 may be installed in a plural number thereof. Accordingly, in the explanation, which will be given hereinafter, there is no necessity that all of the tuner/decoder portions 2231 be the same one. They may be tuner/decoder portions 2231, being different from depending on the processes, respectively.

The tuning controller portion 2235 receives an instruction for tuning up a service via the input means 2236, and controls the tuner/decoder portion 2231 so that it exchanges the channel to be tuned, depending on the instruction. Also, the tuning controller portion 2235 can receive an instruction from each of the various function portions, and controls the tuner/decoder portion 2231 so that it exchanges the service (i.e., the channel number), on which the event (i.e., the program) being on air at present is broadcasted, and the broadcast, to which the service belongs, by a unit of presentation thereof.

The communication I/F 2239 is connected with the wireless router 2202, through the wired LAN or the wireless LAN. Also, the communication I/F 2239 may be configured in such a manner that it can communicate with external equipment, directly, i.e., without passing through the wireless router 2202, in accordance with the method, such as, the wireless LAN, such as, Wi-Fi (®), or IrDA (®), Bluetooth (®), NFC (Near Field Communication), etc., in addition to or in the place of the communication function between the wireless router 2202. The communication I/Fmay installs chips, each for conducting the communication method differing from, respectively. Or, it may be installed in a form of one (1) piece of chip, for dealing with plural numbers of communication method therewith. Hereinafter, although the explanation will be given on an example, in which the communication I/F 2239 transmits various kinds of communication between the television receiver 2207 or the wireless terminal 2204, via the wireless router 2202, however it may transmit the various kinds of communication, not passing through the wireless router 2202, as was mentioned above. Also, the communication I/F 2239 is able to transmit the various kinds of information between the apparatus (es) or device(s), which is/are connected to the external network via the wireless router 2202. For example, it is possible to receive the content stream (i.e., video/audio stream), in the form of an IP broadcast or a video on demand, etc., from a server connected with the external network. Also, it is possible to download the video stream or the application program from the server, which is connected with the external network. The information downloaded is stored, for example, in the storage 2237.

The signal divider portion 2232 divides the transport stream, being obtained in the tuner/decoder portion 2231, or the stream of contents, being obtained via the communication I/F 2239, into each of kinds thereof, such as, video data, audio data, caption character data, program information, for example. It also has a function of obtaining the program information (for example, the service information SI), so as to transmit it to other processing block(s). Further, it transmits data designated to an origin of the request, when a data transmission request is made from other processor portion(s).

The audio decoder portion 2242 decodes the audio data, which is divided in the signal divider portion 2232. The audio information decoded in the audio decoder portion 2242 is outputted from the speaker 2244. The audio information decoded in the audio decoder portion 2242 may be outputted from the audio output portion 2245 to external equipment.

The video decoder portion 2243 decodes the video data, which is divided in the signal divider portion 2232. The video information decoded in the video decoder portion 2243 is transmitted to the multiplexer portion 2240.

The multiplexer portion 2240 multiplexes or superimposes the pictures, etc., such as, an EPG picture and/or an OSD picture, which is/are produced in the various program function portions, or a picture(s), which is/are produced from various kinds of information (i.e., caption information, caption superimposing, data broadcast data, etc.) divided, from the signal divider portion 2232, on the decoded video information, which is transmitted from the video decoder portion 2243.

The video information passing through the multiplexer portion 2240 is displayed on the display portion 2238. The display portion 2238 is constructed with, for example, a display or a liquid crystal panel, etc., of a television or a personal computer. Also, the video information passing through the multiplexer portion 2240 may be outputted to the external equipment from the video output portion 2246.

Also, a digital I/F 2247 may be provided for dividing the transport stream in relation to a predetermined program in the signal divider portion 2232, and thereby outputting the video and the audio without decoding thereof.

The structure of each portion of the television receiver 2207 is same to the television receiver 2201, and therefore the explanation thereof will be omitted herein. In the present embodiment, although explanation will be given that a reference numeral 2201 depicts the television receiver; however this can be substituted by a recorder, etc., and in this case, it is possible to omit the speaker 2244 and/or the display portion 2238 from the structures of the television receiver shown in Fig. 22B.

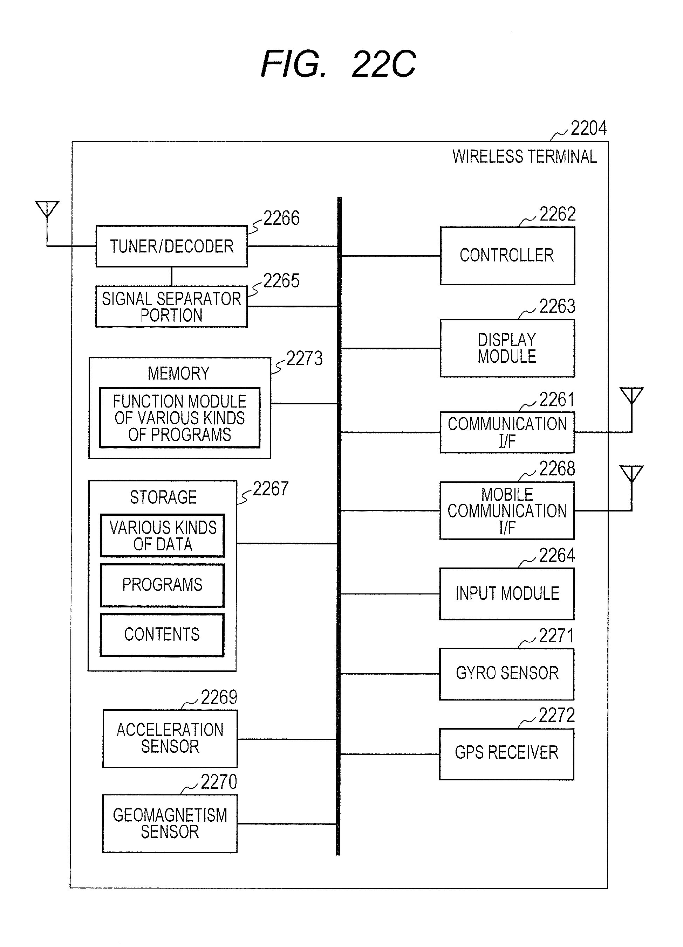

Fig. 22C shows an example of the configuration of the wireless terminal 2204.

The wireless terminal 2204 is constructed with, for example, a communication I/F 2261, a controller portion 2262, a display portion 2263, an input means 2264, a signal divider portion 2265, a tuner/decoder portion 2266, a storage 2267, a mobile communication I/F 2268, a memory 2273, an acceleration sensor portion 2269, a geomagnetism sensor portion 2270, a GPS receiver portion 2271 and a gyro sensor portion 2272, and each processor portion is connected to the bass via a buss 2260.

Also, the wireless terminal 2204 is able to store an application program(s) in the storage 2267, so that the controller portion 2262 can expand the program(s) mentioned above from the storage 2267 onto the memory 2273, to execute that program, and thereby achieving various kinds of functions. In the explanation, which will be given hereinafter, for the purpose of simplification thereof, it will made upon an assumption that each of those functions, which are achieved through execution of the application program(s) by the controller portion 22 62, be achieved by each program function portion.

However, the application program(s) may be stored into the storage 2267, in advance, until when the wireless terminal 2204 is shipped, or may stored into a medium, for example, an optical medium, such as, a CD (Compact Disk), a DVD (Digital Versatile Disk), etc., or a semiconductor memory, etc., so as to be installed into the wireless terminal 2204, via a medium connector portion not shown in the figure. Or, it may be installed it/them through downloading thereof from the external network 2203 via the communication I/F 2261 and the wireless router 2202. Or, alternately, via the communication I/F 2261, it may be downloaded from a distributor via the base station 2206, to be installed. Further, while connecting an external equipment connection I/F not shown in the figures to a personal computer (PC), obtaining the application program(s) via the network, it is also possible to install it/them into the wireless terminal 2204 from the PC by copying or moving it/them.

Also, each of the various functions of the application programs can be achieved in hardware, as a processor portion having the similar function thereof. When achieving them in hardware, each of the functions is achieved by the each processor portion, mainly.

The communication I/F 2261 is connected with the wireless router 2202, through the wireless LAN, etc. In addition to or in the place of the communication function between the wireless router 2202, it is possible to communicate with other equipment, such as, the television receiver 2201 or 2207, directly, without passing through the wireless router 2202, in accordance with the method, such as, the wireless LAN, such as, Wi-Fi (®), or IrDA (®), Bluetooth (®), NFC (Near Field Communication), etc. The communication I/F conducts the transmission of various kinds of information between the communication I/F 2239 of the television receiver 2201. And, the communication I/F 2261 is connected with the external network via the wireless router 2202, so that it conducts the transmission of information between the server, etc., on the external network. The communication I/F may installs chips, each for conducting the communication method differing from, respectively. Or, it may be installed in a form of one (1) piece of chip, for dealing with plural numbers of communication method therewith. The mobile communication I/F 2268 is connected with the communication network passing through the base station 2206, with using a GSM (Global System for Mobile Communications) method, a W-CDMA (Wideband Code Division Multiple Access) method or a CDMA 2000 method, a third generation mobile communication system (hereinafter, being described"3G"), suchas, aUMTS (Universal Mobile Telecommunitions System) method, etc., or a mobile communication network, such as, a LTE (Long Term Evolution) method, etc., and therefore is able to communicate information between the server on the communication network.

The controller portion 2262 receives the operation request of the user passing through the input means 2264, and controls various kinds of program functions, such as, the signal divider portion 2265, the display portion 2263, and the communication I/F 2261.

Further, the controller portion 2262 is also able to extract the program information from the external network 2203, via the communication I/F 2261 and the wireless router 2202, or from the external network 2203, via the mobile communication I/F 2268 and the base station 2206, thereby to obtain the service information SI, and has a function of delivering it to the portions of various kinds of functions.

In the present embodiment, although the explanation will be given on the case where the program information of the digital broadcasting is extracted in the signal divider portion 2265, thereby obtaining the service information SI; however, it is also possible to obtain the service information SI from the external network or the distributor via the communication I/F 2261 or the mobile communication I/F 2268. In this case, it is possible to omit the signal divider portion 2265 and the tuner/decoder portion 2266 from the structure of the wireless terminal 2204.

The storage 2267 is controlled by the instruction of the controller portion 2262, and is able to store the application program(s) therein. It also stores various kinds of information, which are produced by the application program(s) therein. Also, it may store the contents therein, such as, the video/audio stream, etc., from the signals receiver through the communication I/F or the mobile communication I/F 2268.

The memory 2273 is controlled by the instruction of the controller portion 2262. By the controller portion 2262 are expanded the function portion (s) of the application program(s), which is/are stored in the storage 2267 on the memory 2273.

The display portion 2263 displays the screen and/or the picture. The screen and/or the picture to be displayed may be that, which is produced by the application program, or that, which is received through the tuner/decoder portion 2266, or that, which is received from the server on the external network via the communication I/F 2261, or that, which is distributed from the television receiver 2201 via the communication I/F 2261, or that, which is distributed from the server on the external network via the mobile communication I/F 2268. Also, the display portion 2263 may be constructed, for example, in one (1) body together with a touch panel, etc., which will be mentioned below.

The input means 2264 is an input means for receiving an operation (s) to the wireless terminal 2204 from the user, thereby inputting control information relating to the operation(s) inputted, and this may be achieved by, for example, a physical button, a touch panel, etc. Hereinafter, explanation will be given on an example of applying the touch panel, in the present embodiment; however it may be constructed so that the physical button is applied for each of the functions.

Upon conduction of an operation, i.e., moving an arbitrary object (i.e., an icon) or the like, on the touch panel, under the condition of touching a finger thereon (e.g., a dragging operation), or an operation for moving it, like flicking the finger on the screen (e.g., a flicking operation), it is possible to mover the object or the like, freely. Also, upon conduction of an operation, i.e., tapping the object or the like by the finger, one (1) time (e.g., a tapping operation), or an operation of tapping it two (2) times (e.g., a double-tapping operation), it is also possible to activate the object (i.e., the icon) or change to other screen. In the present embodiment, explanation will be given while calling those operations mentioned above, "dragging operation", "flicking operation" and "tapping operation", respectively.

The tuner/decoder portion 2266 and the signal divider portion 2265 have functions, being same to those of the tuner/decoder portion 2231 and the signal divider portion 2232 of the television receiver 2201, respectively. Those functions are already explained, and therefore the explanation of which will be omitted herein.

The acceleration sensor portion 2269 measures an acceleration applied onto the wireless terminal 69. The controller portion 2262 is able to know, i.e., which portion of the wireless terminal 2204 lies in the upper, through measuring a gravity acceleration, for example, by means of the acceleration sensor portion 2269, and also, with displaying the screen on the display portion 2263 while fitting the upper of that screen to the upper, which is measured through the acceleration sensor portion 2269, it is possible to display the screen fitting to a manner of holding the wireless terminal 2204 by the user.

The geomagnetism sensor portion 2270 measures the geomagnetism, for example, by using plural numbers of magnetic sensors, etc.

The GPS receiver portion 2271 receives signals, which are transmitted by plural numbers of satellites, withusingGPS (Global Positioning System). The controller portion 2262 is able to calculate the position information of the wireless terminal 2204, upon basis of the signals received by the GPS receiver portion 2271. The controller portion 2262, when obtaining the service information SI from the network, via the communication I/F or the mobile communication I/F, for example, transmits the position information of the wireless terminal 2204 to the transmitter of the service information SI, and therefore the transmitter of the service information SI can transmit that service information SI corresponding to an area, in which the wireless terminal 2204 lies.

The gyro sensor portion 2272 measures an angular velocity of the wireless terminal 2204, generating when the user moves the wireless terminal 2204 or the like.

### <Authentication/Connection/Initial Setting>

Hereinafter, explanation will be given on an example of operations of authentication of equipment, an initial setting, etc., when the wireless terminal 2204 is used, firstly, by referring to Figs. 22A-22C, 23A and 23B, 24A-24C and Figs. 25-29.

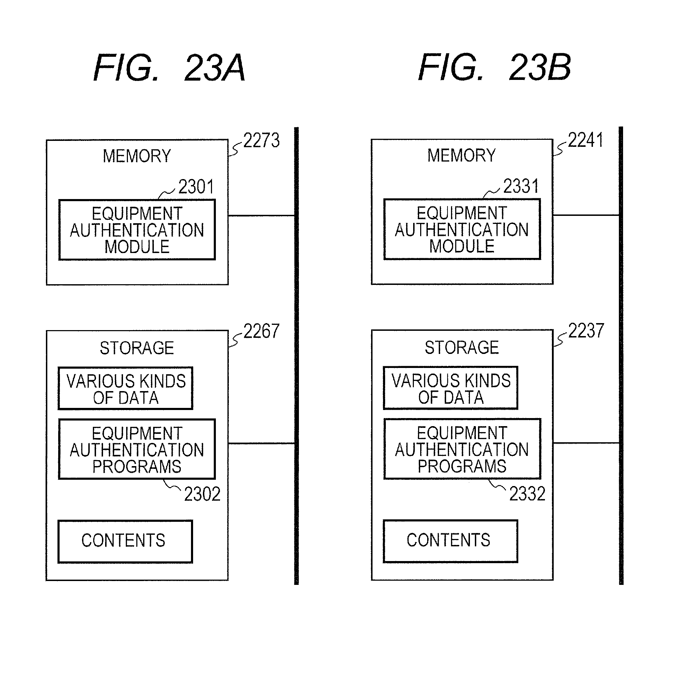

Fig. 23A is a view for explaining the function of an equipment authentication program of the wireless terminal 2204. In Fig. 23A are only shown the storage 2267 and the memory 2273 among the contractual elements of the wireless terminal 2204. Fig. 23A shows a condition where the storage 2267 stores the equipment authentication program 2302 therein, and also the controller portion 2262 is expanding the equipment authentication program 2302 on the memory 2273, as the equipment authentication portion 2301. The equipment authentication program 2302 may be stored in the storage 2267 at the time when the product is shipped out, or may be downloaded via the communication I/F 2261 or the mobile communication I/F 2268.

Fig. 23B is a view for explaining the function of the equipment authentication program 2302 of the television receiver 2201. In Fig. 23B are only shown the storage 2237 and the memory 2241 among the contractual elements of the television receiver 2201. Fig. 23B shows a condition where the storage 2237 stores the equipment authentication program 2332 therein, and also the controller portion 2234 is expanding the equipment authentication program 2332 on the memory 2241, as the equipment authentication portion 2331. The equipment authentication program 2332 may be stored in the storage 2237 at the time when the product is shipped out, or may be downloaded via the communication I/F 2239 or the digital broadcast wave.

Hereinafter, explanation will be given on the function achieved by that equipment authentication portion 2301 or 2331.

Upon the equipment authentication, it is assumed that in the storage 2237 is memorized the authentication information, such as, the user ID and the password, etc., which are determined through an input made by the user with using the input means 2236, or which is determined in advance, for example, before the television receiver 2201 is shipped out, etc., and that the equipment authentication portion 2301 can refer those. Also, the authentication information mentioned above can be produced, automatically, when the present function is used on the side of the television receiver 2201. And, it is also assumed that the authentication information mentioned above can be displayed on the display portion 2238 through the operation made by the user, or can be confirmed by the user on a document, etc., being attached when she/he purchases the television receiver 2201.

The equipment authentication portion 2301 of the wireless terminal 2204 transmits the authentication information, being inputted through operation by the user, which is accepted by the input means 2264, via the communication I/Fs 2261 and 2239, to the equipment authentication portion 2331, for the purpose of receiving the authentication from the television receiver 2201.

The equipment authentication portion 2331 of the television receiver 2201 compares the authentication information, which is memorized in the storage 2237, and the authentication information, which is transmitted from the equipment authentication portion 2301, and if the authentication information transmitted from the equipment authentication portion 2301 is the correct one, then it issues a connect approval for allowing the equipment authentication portion 2301 to connect with. On the other hand, if the authentication information is an erroneous one, the equipment authentication portion 2331 dose not issue the connect approval to the equipment authentication portion 2301.

Also, with the authentication operation at 2^{nd} time or thereafter, since it is enough that the authentication is allowed only when the authentication information is coincident with, it is also possible to simplify the steps for the authentication operation by adding the authentication information to the information, such as, the reservation information from the wireless terminal 2204. When the authentication information is changed on the television receiver 2201 side, it is sufficient to re-determine the authentication information, newly, from the input means 2264 on the wireless terminal 2204.

The mentioned above is an example of the method for authentication, and therefore other technologies may be applied therein, such as, a method for authentication or a method for encoding the information to be transmitted when succeeding authentication, etc., for example, applying an authentication/encoding method with using a SSID (Service Set Identifier) and a WEP key or a WPS key when connecting the television receiver 2201 and the wireless terminal 2204 through the wireless LAN.

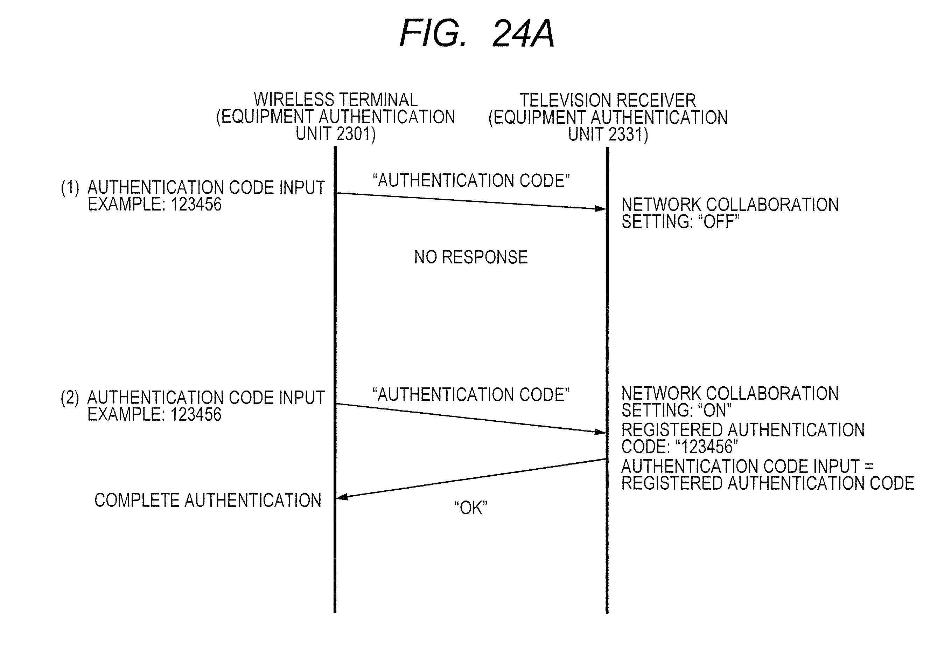

Hereinafter, explanation will be given on a sequence of operations, which are achieved upon collaboration of each of hardware of the equipment authentication program 2302 and of the wireless terminal 2204 and collaboration of each of hardware of the equipment authentication program 2332 and of the television receiver 2201, by referring to Figs. 24A-24C.

Fig. 24A is a view for showing an example of a sequence of operations when receiving the authentication approval of the television receiver 2201 by inputting an authentication code at first.

In the example of the present sequence, the television receiver 2201 has a "network cooperation setting" function, on a menu setting or the like thereof, for switching the network cooperation "ON"/"OFF" or setting up WOL (Wake On LAN) to "ON"/"OFF". In an example shown in Fig. 24A- (1) is shown a sequence of operations when the "network cooperation setting" is set to "OFF" because this function will not be used. Although the authentication code inputted by operation of the user, which the input means 2264 accepts from the wireless terminal 2204, is transmitted to the television receiver 2201, however since the "network cooperation setting" is set to "OFF", the television receiver 2201 does not respond to an approval of connection. The wireless terminal 2204, after confirming that no response is made within a determined time-period, can display a message that no response is made from the television or that connection cannot be made, etc.

In an example shown in Fig. 24A- (2) is shown a sequence of operations when the correct authentication code is inputted while the "network cooperation setting" is set to "ON". When the equipment authentication portion 2301 of the television receiver 2201 determines that the authentication code, which is inputted in the equipment authenticate portion 2301 of the wireless terminal 2204 and transmitted therefrom, is coincident with that, which is registered in the television receiver 2201, then the authentication is succeeded. In this instance, a user name and a MAC address of the wireless terminal 2204 may be stored into the storage 2237, or a non-volatile memory not shown in the figure, etc., of the television receiver 2201, as the information of collaborating equipment.

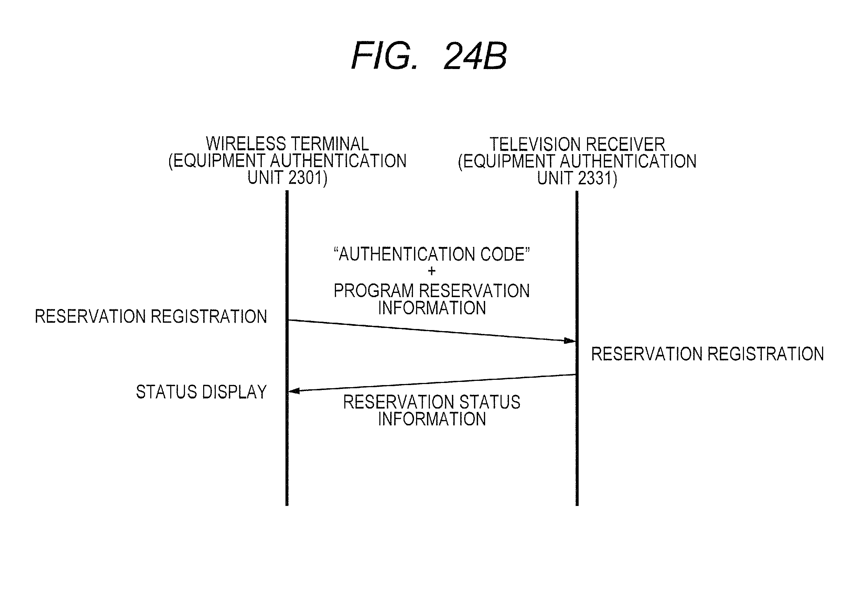

Fig. 24B is a view for showing an example of a sequence of operations for conducting the authentication, at a second (2^{nd}) or thereafter. Sincethe authentication code inputted is coincident with the authentication code, which is registered in advance, connection is approved or allowed.

In an example of the present sequence is shown case when receiving the approval of authentication by adding the authentication code to the program reservation information when registering the reservation. In case where the reservation is registered by conducting reservation of the program on the EPG, which is produced in an EPG producer portion 3002 of the wireless terminal 2004, the authentication code is transmitted to the television receiver 2001 together with the program reservation information, and reservation status information is returned from the television receiver 2201 when the reservation is registered; therefore, it is possible to confirm that the reservation is made, correctly. Since operations of the EPG producer portion 3002 and the program reservation will be mentioned in an embodiment of <Reservation (Recording) from Program Table Display>, which will be mentioned later, the explanation about the details thereof will be omitted here. In this manner, transmission of the authentication code together with various kinds of information, when they are transmitted from the wireless terminal 2204 to the television receiver 2201, it is possible to achieve the control of the television receiver 2201 by means of the equipment authenticated.

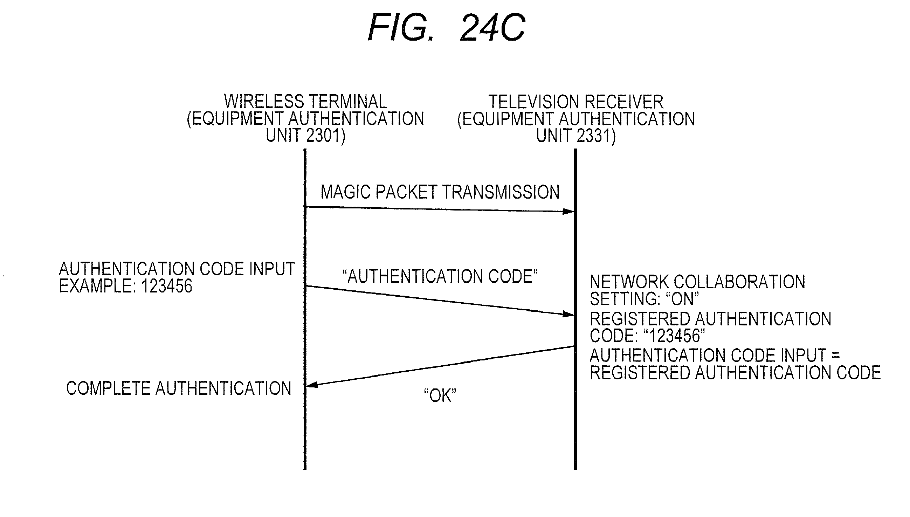

Fig. 24C is a view for showing a variation of the sequence of operations of the authentication operation.

As was mentioned previously, the television receiver 2201 may mount a function of turning a WOL (Wake On LAN) function to "ON", for example, as one of the network cooperation setting function. Even if the network function is in a standby condition due to energy saving, it is possible to start the network function of the television receiver 2001 by transmitting a magic packet, including the MAC address of the corresponding television receiver therein, from the wireless terminal 2204. With the example of the present sequence, it is possible to start up the network, in advance, by transmitting the magic packet before the authentication code is transmitted from the wireless terminal 2204 to the television receiver 2201. Also, with transmission of the magic packet to the television receiver 2201, in advance, not only the time when the authentication operation is made, but also the when an operation is made on the function, which does not relate to the television, directly, it is possible to conduct operations on the television receiver 2201, quickly.

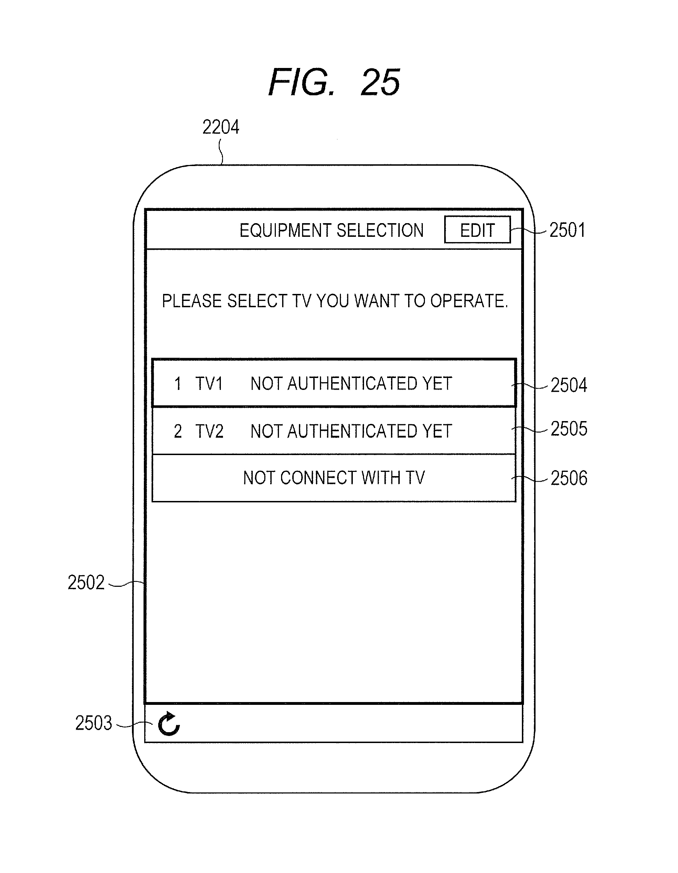

Next, explanation will be made on an example of display of an authentication screen and processing thereof, by referring to Figs. 25 to 28. However, those screens may be produced by the equipment authenticate portion 2301.

Fig. 25 is a view for showing an example of display of the authentication screen of the wireless terminal 2204.

On an equipment list 2502 is displayed the equipment, if it is found out to be connected with the network, irrespective of the fact that authentication is already made or not, and the equipment found out is stored in the storage 2267, together with the information of if authentication is already made or not. If it is the equipment, which was found out in the past, but cannot found out this time, it is also possible to display it, while changing a display color thereof, for the purpose of distinguishing the equipment name from other equipment.
are displayed the followings, in the present example,
On an equipment lookup list 2502 are displayed the followings; i.e., in the present embodiment, "TV 2201 (the television receiver 2201) " display 2504, a "TV 2207 (the television receiver 2207)" display 2505, and a "no television connection" display 2506. For example, as an order of display, "equipment already authenticated", "equipment not yet authenticated" and "no connection of television", in that order, and/or "equipment already authenticated" may be displayed at the top. Also, the equipment, excluding that of the "no connection of television" display 2506, may be assigned with a series of numbers, in the order from the top thereof, or may change a display color thereof, depending on the condition of authentication, i.e., "already authenticated" or "not yet authenticated", so that the condition thereof can be recognized, easily.

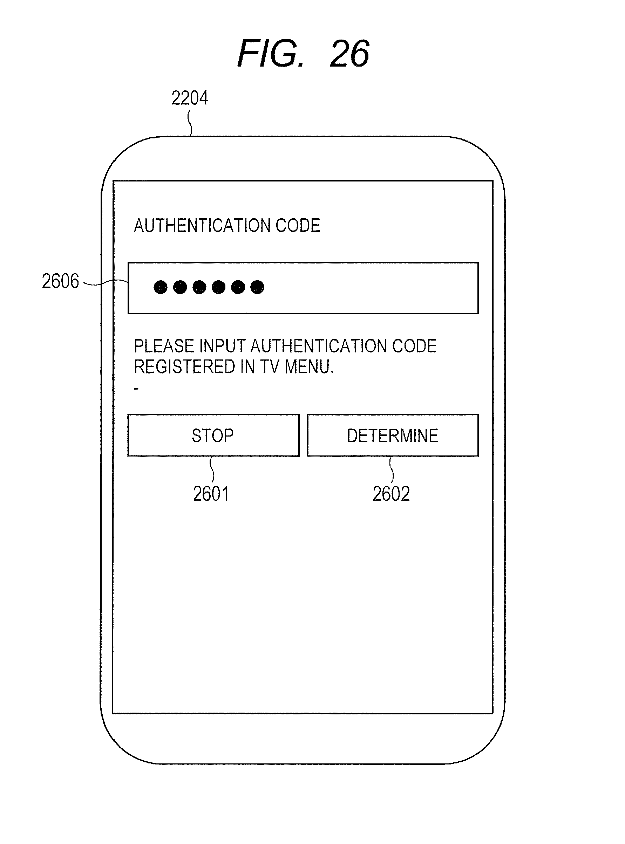

Next, explanation will be given on the case where the authentication is made on the "TV 2201 (the television receiver 2201)" display 2504. In Fig. 25, if the user selects the "TV 2201" display 2504 on the screen of the wireless terminal 2204 through the tapping operation, the wireless terminal 2204 displays such an authentication code input screen as is shown in Fig. 26.

Fig. 26 is a view for showing an example of display of the authentication code input screen of the wireless terminal 2204.

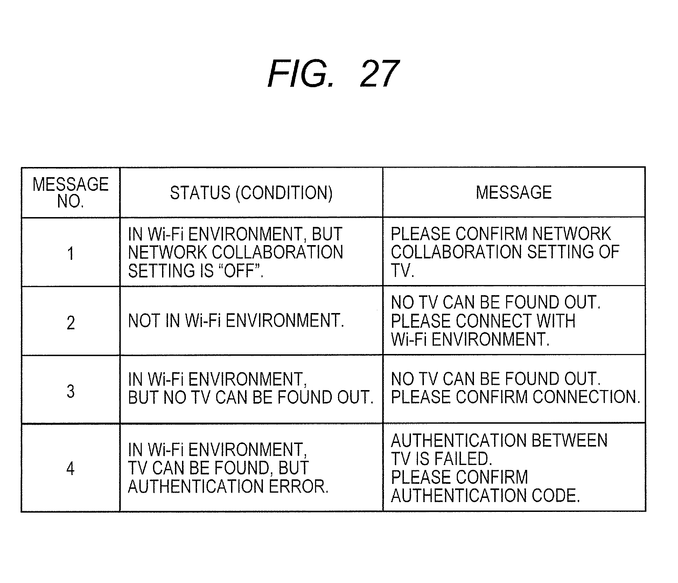

When an authentication code frame 2503 is selected through the tapping operation, a soft keyboard (not shown in the figure in the present embodiment) is displayed, so as to input the authentication code with using half-width (or, a single byte) alphabetic and numeral characters. For preventing a full-size (or, a double-byte) character or a pictograph, etc., frombeing inputted, erroneously, it is also possible to prohibit the authentication made through an input using the characters unusable as the authentication code, or a copy & paste. As a process for prohibition, it is enough to inhibit those characters, etc., frombeing inputted by themselves, or to execute a process of bringing a decision button 2602 to be inoperable, although it can be inputted, etc. When a stop button 2601 is selected, the authentication code input screen is ended with doing nothing. When the decision button 2602 is selected, the authentication process is executed between the TV 2201, as is shown in Fig. 24A. Also, depending on the status (or, the condition) when authenticating is displayed such a message as is shown in Fig. 27. This Fig. 27 is a view for showing an example of display of an error message, depending on Wi-Fi environment of the wireless terminal 2204 or an installation condition of the television receiver. Depending on the condition, such as, the Wi-Fi environment, the installation environment of the television receiver, etc., it is possible to display the error message(s). However, in the example shown in Fig. 27, although the explanation is given on an example, in which the wireless terminal 2204 and the television receiver 2201 communicate through the Wi-Fi communication; however it may be replaced by the other wireless communication methods, which are already explained, previously.

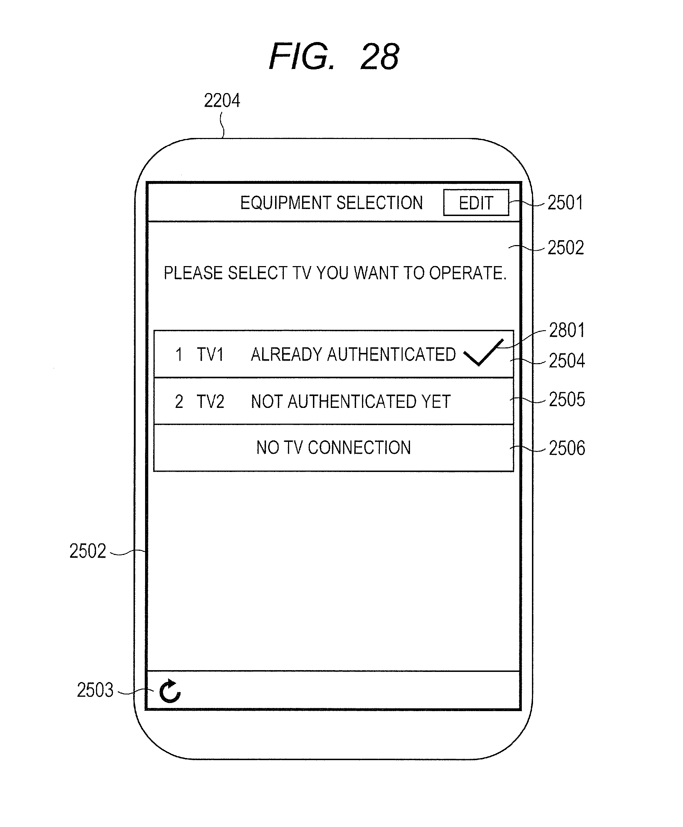

Fig. 28 is a view for showing an example of display of an authentication screen when authentication is made on the "TV 2201 (the television receiver 2201)" display 2504 on the wireless terminal 2204.

A check mark 2801 is displayed for the authenticated equipment, on which the selection is made, so that determination can be made on which equipment the selection is made. In the place of the check mark 2801, an icon may be added to the number thereof, to modify the design thereof, so that it can be distinguished from.

Also, even with the equipment, on which the authentication is already made, the authentication code input screen can be displayed, by selecting a selection item through the tapping operation. This is effective for revising the authentication code, in particular, when the authentication code is changed on the side of the equipment.

Also, when a re-reading button 2503 is selected, it is possible to read the equipment lookup list 2502, again. In this instance, such error message as is shown in Fig. 27 may be displayed depending on the status (or, the condition), such as, the installation environment, etc. Fig. 27 shows, as was explained previously, an example of the error message(s), depending on the wireless communication environment of the Wi-Fi, or the installation of the television receiver, etc. This may be used, when executing the authentication process, in case where connection cannot be made, correctly, for example, when re-reading the equipment lookup list 2502, when configuration of the equipment is changed, etc.

In Fig. 25, if the selection is made on the "no connection of television" display 2506, then no authentication process is conducted between the equipment. In this instance, the wireless terminal 2204 maybe so constructed that it displays a sample screen, such as, the reservation program list, the recording program list, etc., only on the side thereof. With doing so, under the condition of not being connected with the television receiver 2201, it is possible to operate the television receiver 2201 in the similar manner to that under the condition of being connected with the television receiver 2201. Before she/he purchases the television receiver 2201 or when everything is not in place, etc., for the user, it is possible to make a simulation on operations on the side of the wireless terminal 2204, i.e., she/he can try the functions of the wireless terminal 2204 or the program(s) downloaded; achieving preferable usabilityoroperabilitythereof. The data of the sample screen may be stored in the storage 2267.

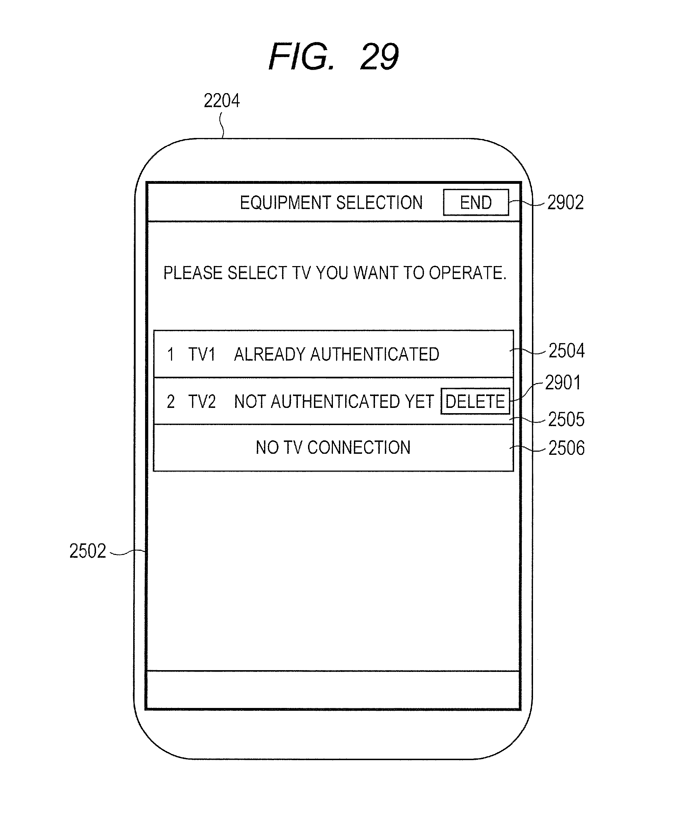

Fig. 29 is a view for showing an example of display of an editor screen to be used when an edition (e.g., deletion) is made of authentication target equipment on the equipment lookup list of the wireless terminal 2204.

In Fig. 28, when an editor button 2501 is selected, then such editor screen as shown in Fig. 29 is displayed, and a delete button 2901 is displayed for "not yet authenticated" equipment. When selection is made on the delete button 2901 of the equipment to be deleted through the tapping operation, then the corresponding equipment is deleted from an equipment selector screen of the wireless terminal 2204. When deleting, for the purpose of preventing it from being deleted, mischievously, there can be applied an operation of two (2) steps, i.e., the deletion button appears after selection is made on the equipment to be deleted. When an end button 2902 is selected through the tapping operation, the editor screen is closed.

The equipment deleted is not displayed if it cannot be found out within the network, but it is displayed on the equipment lookup list 2502, as the equipment not yet authenticated, if it can be found within the network. Also, when the authentication should be executed from other application, while plural numbers of programs for the equipment authentication are stored in the wireless terminal 2204, such a distinction may be made, that re-authentication is necessary even in case where it is the equipment, upon which the authentication was already made with using other application program(s) in advance.

### <Program Table Display>

Hereinafter, explanation will be given on an example of operations when the wireless terminal 2204 display a program table thereon, by referring to Figs. 22A-22C, 30A and 30B, and 31-36.

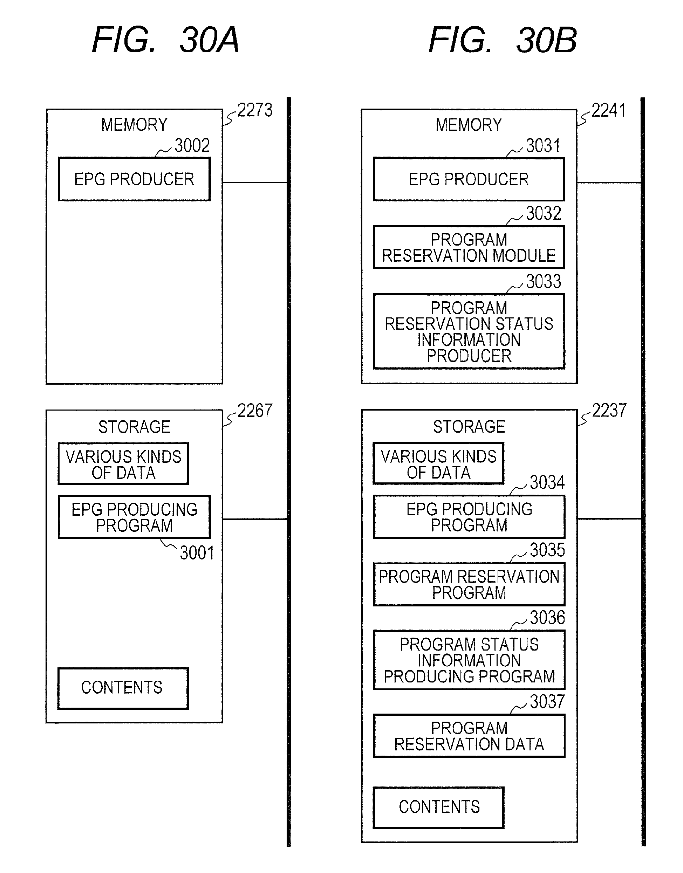

Fig. 30B is a view for explaining the functions of an EPG production program, a program reservation program and a program status production program of the television receiver 2201. In this Fig. 30B are shown only the storage 2237 and the memory 2241 among the configurations of television receiver 2201. In Fig. 30B, the EPG production program 3034, the program reservation program 3035 and the program status production program 3036 are stored in the storage 2237. There is shown a condition, in which the controller portion 2234 is expanding the EPG production program 3034, the program reservation program 3035 and the program status production program 3036, on the memory 2241, as an EPG producer portion 3031, a program reservation portion 3032 and a program status information producer portion 3033, respectively. However, the EPG production program 3034, the program reservation program 3035 and the program status production program 3036 may be stored in the storage 2237 at the time when the product is shipped out, or may be downloaded via the communication I/F 2239 or the digital broadcast wave.

Program reservation data 3037 is the information, which is produced by the program reservation portion 3032, and it includes reservation information, such as, detailed information of reservation for each program, etc. The reservation information includes therein identification information, including the network ID and the service ID and the event ID for identifying the program, being a target of reservation, uniquely, information of indicative of being the reservation of viewing/listening or the reservation of recording, and in particular, when recording the target program, information indicative of setting of picture quality (for example, information distinguishing any one of plural numbers of picture qualities, each having a compression rate differing from) and reservation status information being necessary when executing the reservation of viewing/listening or the reservation of recording, such as, information indicative of a destination of recording (for example, the storage 2237, or the external storage connected with the digital I/F 2247, etc.)

The EPG producer portion 3031 obtains the service information, which is divided in the signal divider portion 2232, and aligns the service IDs, horizontally, upon basis of the service information obtained; thereby producing an electronic program table aligning program columns into the lower direction along time series for each service ID. In each column of program of the electronic program table can be arranged a port or all of details of contents of the program(s) included in the service information, etc.

The program reservation portion 3032 produces GUI (Graphical User Interface) for use of conducting the program reservation, and also produces the reservation information in accordance with the operation information, which is inputted by the user through the input means 2236 responding to the GUI display, so as to store it into the program reservation data 3037, i.e., thereby for managing it. Also, in accordance with contents of the reservation information, which are described on the program reservation data 3037, it transmits the service ID of the channel, which will broadcast the program reserved to the tuning controller portion 2235 when reaching to the time reserved, in the case where the program reservation is the reservation of viewing/listening, so that the program, which is indicated by the service ID mentioned above, can be viewed/listened on the display portion 2238 and via the speaker 2244, passing through processing of the tuner/decoder portion 2231 under the control of the tuning controller portion 2235, processing of the signal divider portion 2232, the video decoder portion 2243 and the audio processor portion 2242, etc., under the control of the controller portion 2234. If the program reservation is the reservation of recording, in the similar manner to the above, the service ID of the channel, on which the program reserved will be broadcasted, is transmitted to the tuning controller portion 2235. In this instance, if no change is made on the compression ratio of the broadcast contents when recording, video information and audio information of the target contents, which are divided in the signal divider portion 2232, are stored into the storage 2237 without being decoded in the video decoder portion 2243 and the audio decoder portion 2242. Upon setting of the picture quality when recording, if the compression ratio of the broadcast contents is changed when recording, the video decoder portion 2243 and the audio decoder portion 2242 decode the video information and the audio information of the target contents, which are divided in the signal divider portion 2232, and store them into the storage 2237, after encoding the video information and the audio information, which are decoded, again, at the compression ratio corresponding to the setting of the picture quality of recording.

The program status information producer portion 3033 obtains identification information of the program(s) having a predetermined property, among from the identification information described in the service information SI, which is divided from the received signal by the signal divider portion 2232, and adds or attaches a property to the identification information obtained, and thereby producing the program status information.

Fig. 30B is a view for explaining the function of the EPG producing program of the wireless terminal 2204. In Fig. 30A are shown the storage 2264 and the memory 2273 among the constituent elements of the wireless terminal 2204. In Fig. 30A is shown the condition that an EPG producing program 3001 is stored in the storage 2267, and that the controller portion 2262 is expanding the EPG producing program 3001 on the memory 2273 as theEPGproducerportion 3002. The EPG producing program 3001 may be stored in the storage at the time when the product is shipped out, or may be downloaded through the communication I/F 2261 or the mobile communication I/F 2268.

The EPG producer portion 3002 is similar to the EPG producer portion 3031 of the television receiver 2201, and therefore the explanation thereof will be omitted herein.

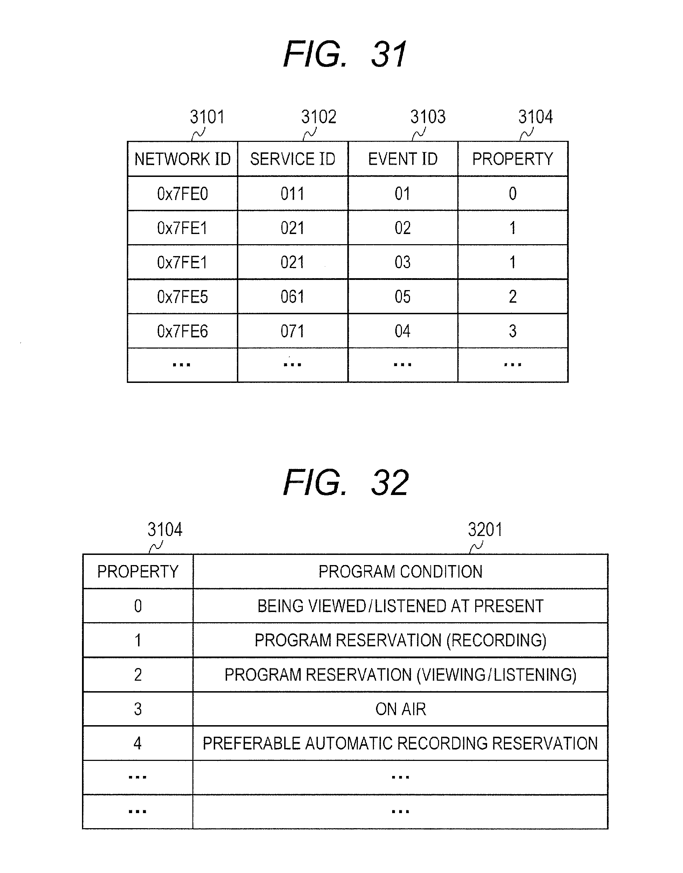

Figs. 31 and 32 show the data format relating to the communication terminal system according to the present embodiment.

Fig. 31 is a view for showing an example of the data format of the program status information.

The program status information is constructed, as is shown in Fig. 31, with the formats of, such as, a network ID 3101, a service ID 3102, an event ID 3103 and a property 3104. This can be stored for plural numbers of events (i.e., the programs).

Fig. 32 is a view for showing an example of the details of the property 3104 of the program status information shown in Fig. 31. The property 3104 indicates a program condition 3201 of the television receiver 2201, in particular, the viewing/listening or the recording, etc., thereof. Herein, a program, being broadcasted at present, is "3", and the program, being a program of the channel, to which the tuner/decoder portion 2231 is tuned up by the tuning controller portion 2235, and being under the condition of on-air at present, is "0", programs, the network ID, the service ID and the event ID thereof being registered in the reservation information managed by a program reservation potion 2102, which will be mentioned later, are "1", "2" and "4", wherein it is "1" if being the reservation of recording, "2" if being the reservation of viewing/listening, and "4" if being reservation of an automatic reservation for preference.

Thus, the program status information shown in Fig. 31 includes the identification information about the plural numbers of events (i.e., the programs), which will be broadcasted at present or in future, and information indicative of the condition of the television receiver 2201, such as, a condition of processing (for example, being under the condition of the viewing/listening, etc.) or a schedule of processing (for example, the viewing/listening or the reservation).

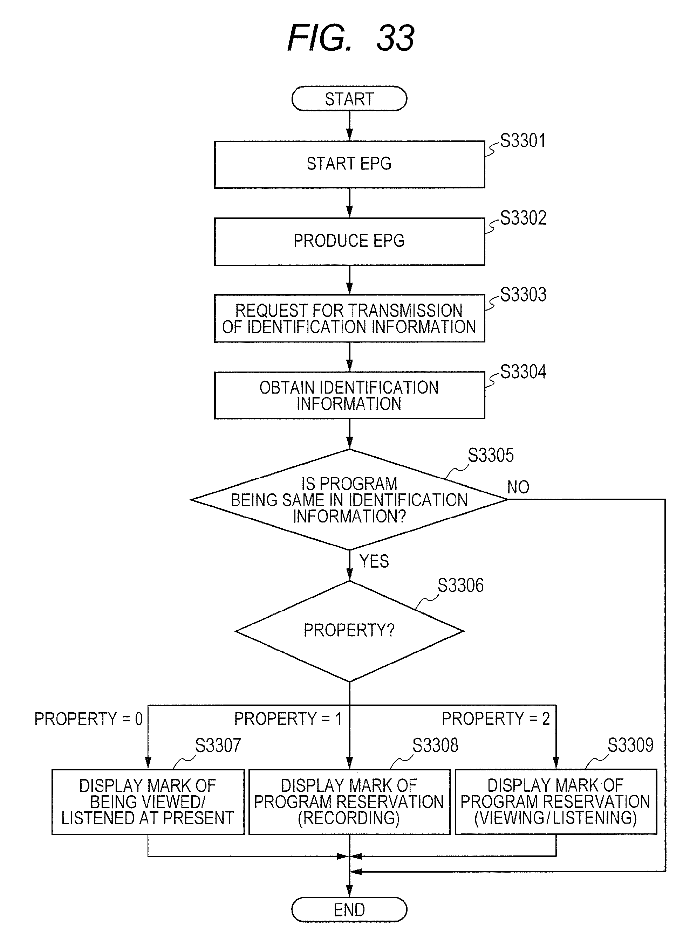

Next, explanation will be given on an example of the case where the wireless terminal 2204 displays the EPG on the display portion 2263, upon receipt of an operation from the user through the input means 2264, by referring to Figs. 22A to 22C and 33.

Fig. 33 is a view for showing an example a sequence of operations, in particular, for the EPG producer portion 3002 of the wireless terminal 2204, to execute an identification display of the property for each program on the EPG. Thus, the sequence of operations shown in Fig. 33 is achieved through the collaboration between the EPG producing program 3001 and each of hardware of the wireless terminal 2204, and the collaboration between the program status information producer portion 3036 and each of hardware of the television receiver 2201.

The EPG producer portion 3002, when receiving an instruction of starting the EPG through the input means 2264 (S3301), obtains the service information SI from the external network or the distributor via the tuner/decoder portion 2266 or the communication I/F 2261 or the mobile communication I/F 2268. The EPG producer portion 3002 produces an EPG screen upon basis of the EIT, which is included in the service information SI (S3302), and displays the EPG screen on the display portion 2263. Also, the EPG producer portion 3002 requests the television receiver 2201, via the communication I/F 2261, to transmit the program status information (S3303).

The program status information producer portion 3033 of the television receiver 2201, when receiving the request for transmitting the program status information from the wireless terminal 2204 via the communication I/F 2239, obtains the identification information of the program(s), upon which the reservation of recording and/or the reservation of viewing/listening is/are made, by referring to the program reservation data 3037, which is recorded in the storage 2237. Also, it obtains the identification information of the program(s) under the condition of being viewed/listened and the program(s) on-air at present, which are included in the service information SI. And, it produces the program status information, by adding or attaching the property depending on the condition of each of the programs, onto the identification information obtained, and transmits it to the EPG producer portion 3002 of the wireless terminal 2004, via the communication I/F 2239 and the communication terminal 2261.

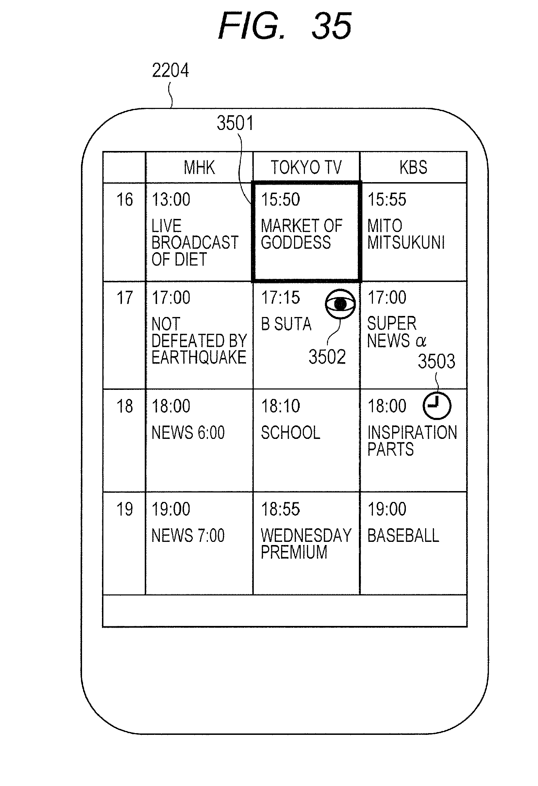

The EPG producer portion 3002 of the wireless terminal 2004 receives the program status information, being transmitted from the program status information producer portion 3033 (S3304), and if there is one, being coincident with the identification information described in the program status information received, in the identification information included within the service information SI received in the step S3302 (S3305: "YES"), it produces the EPG screen, adding an identification display of the property for that program(s), as is shown in Fig. 35, depending on the property 3104 of that program(s) included in the program status information received, so as to display it on the display portion 2263. In this instance, the program(s), being "0" in the property of the program status information (i.e., under the condition of viewing/listening at present), is/are displayed together with a mark indicative of being under the condition of viewing/listening at present (S3306), the program(s), being "1" in the property thereof (i.e., the program reservation (of recording)), is/are displayed together with a mark indicative that the program reservation (of recording) is already made (S3307), and further the program(s), being "2" in the property thereof (i.e., the program reservation (of viewing/listening)), is/are displayed together with a mark indicative that the program reservation (of viewing/listening) is alreadymade (S3308). Details of the display will be given, later, by referring to Fig. 35. With doing in this manner, upon the EPG display on the wireless terminal 2204, it is possible to display the condition of the television receiver 2201, i.e., the viewing/listening or the reservation, etc., thereof, on the display screen of the wireless terminal 2204, at the same time, in addition to the information included in the service information SI, which is obtained from the external network or the distributer via the tuner/decoder portion 2266, or via the communication I/F 2261 and/or the mobile communication I/F 2268.

In this instance, if the wireless terminal 2204 does not have the tuner/decoder portion 2266, the television receiver 2201 produces one (1) piece of the EPG screen, by combining the program status information, which is produced in addition to the condition of the television receiver 2201, and the service information SI, which the wireless terminal 2204 obtains from the external network and/or the distributor via the communication I/F 2261 or the mobile communication I/F 2268, upon basis of the service information SI included in the digital broadcast signal, which is received by the tuner/decoder portion 2231. With doing in this manner, there is no necessity of transmitting the service information SI itself from the television receiver 2201 to the wireless terminal 2204. Also, even in case where the television receiver 2201 and the wireless terminal 2204 obtain the service information SI, respectively, through different routes, it is possible to display a desired program with attaching a mark indicative of the property thereof, by confirming coincidence of the identification information, such as, the network ID 3101, the service ID 3102 and the event ID 3103, etc., which are stored in the program status information.

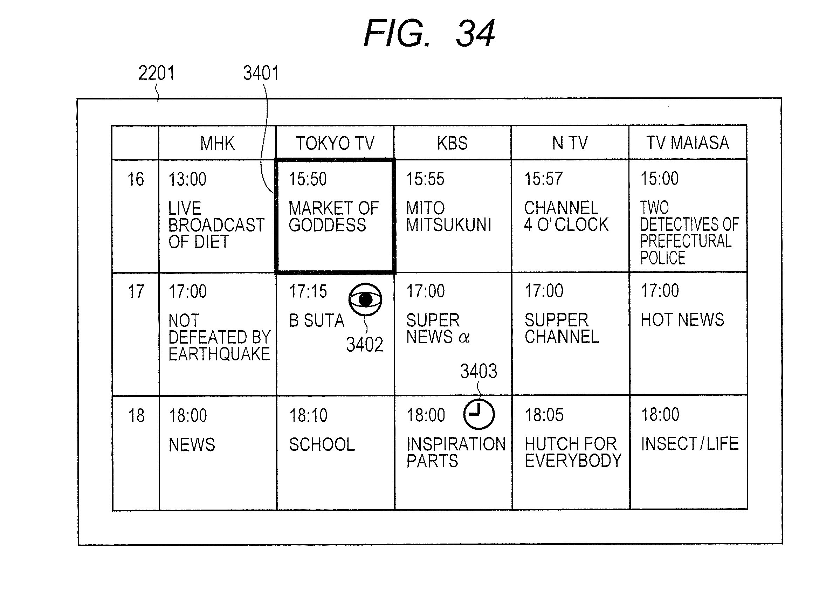

Fig. 34 is a view for showing an example of a screen display when the EPG screen is displayed on the television receiver 2201. A mark 3402 is that for indicating the reservation of viewing/listening, and a mark 3403 is that for indicating the reservation of recording; i.e., it is possible to determine the condition of reservations of the program(s), which is/are displayed on the EPG. Also, a square frame 3401 is that for indicting that the program is under the condition of being viewed/listened at present.

In the explanation of the present embodiment, Fig 34 is for explaining the screen in comparison with that of the EPG, which is displayed on the wireless terminal 2204, and therefore operations and the explanation of the operations thereof will be omitted herein.

Fig. 35 is a view for showing an example of the screen display of the EPG, which is displayed on the wireless terminal 2204. A square frame 3501 indicates the program(s) being under the condition of being viewed/listened at present, a mark 3502 is that for indicating the reservation of viewing/listening, and a mark 3503 is that for indication the reservation of recording. As is shown in Figs. 34 and 35, patterns of the marks 3502 or 3503 shown in Fig. 35 correspond to the patterns of the marks 3402 or the 3403 shown in Fig. 34, respectively. Also, the square frame 3501 corresponds to the square frame 3401 shown in Fig. 34. As is in the present embodiment, it is preferable to apply such mark or frame, being similar in the shape thereof, as the example of display for identification of the property, on the television receiver 2201 and the wireless terminal 2204, since this enables the user to understand the meaning of the mark easily. However, it does not matter if they differ from in the shape thereof on the television receiver 2201 and the wireless terminal 2204, respectively. Also, other than changing display of the mark or configuration of the frame lines, it is possible to display the program having no property 3104 and the programhaving the property 3104, to be distinguishable from each other, for example, by adding a color within the frame or chaining a font of the program name, etc.

There are cases where the EPG displayed on the television receiver 2201, as shown in Fig. 34, and the EPG displayed on the wireless terminal 2204, as shown in Fig. 35, must be different from each other in a layout thereof, depending on the difference of the capacity of display (i.e., a display aspect ratio, a number of display pixels, etc.) between the display portion 2238 and the display portion 2263. For example, for the event information (the program), being arranged in a matrix manner for each channel, in accordance with the time sequence thereof, there is case of being different from in the arrangement thereof. Also, there is case that a numbers of the service ID (i.e., the channels numbers), which can be displayed at the same time, and a number of the event ID (i.e., the programs) differs from, between the television receiver 2201 and the wireless terminal 2204, depending on a display area of the EPG.

In the examples shown in Figs. 35 and 34 of the present embodiment, too, the service ID (i.e., the channels numbers) in the horizontal direction and a display of time axis in the vertical direction are different from each other, i.e., "5 channels" and "3 hours", on the television receiver 2201, and "3 channels" and "4 hours", on the wireless terminal 2204, respectively. However, since the information of the program(s), to be displayed on the TV 2201 and the wireless terminal 2204, being viewed/listened or the reservation thereof being made, is shared in common, for the user, it is possible to recognize the program(s), being viewed/listened or the reservation thereof being made, without comparing both the EPG on the television receiver and the EPG on the wireless terminal.

However, as is in the examples shown in Figs. 35 and 34, i.e., where the event information (the programs) are arranged in the matrix manner, it is preferable to share the kinds, on a line in the horizontal direction (i.e., the channels in the examples shown in Figs. 35 and 34), and the kinds, on a line in the vertical direction (i.e., the time axis in the examples shown in Figs. 35 and 34), in the arrangement of the event information (the programs), at least between the television receiver 2201 and the wireless terminal 2204. This is because the user can understand a relationship of correspondences of the both. Although the explanation was made that the program status information is produced when it is requested from the wireless terminal 2204 in the above; however, the controller portion 2234 renews the program status information, every time when the program condition is changed, while producing the program status information, in advance, in the program status information producer portion 3033 of the television receiver 2201, and thereby the program status information may be transmitted to the wireless terminal 2204 when the request is made from the wireless terminal 2204.

Also, it may be so configured that only the program status information, in particular, "viewing program (i.e., under the condition of being viewed/listened at present)" and "present program (i.e., under the condition of being on-air) " shown in Fig. 35, which are renewed, frequently, be produces when the request is made from the wireless terminal 2204, while other program status information be produced in advance, before that request from the wireless terminal 2204. In this case, it is possible to conduct the processing, effectively, by changing the timing of production and/or renewals thereof, depending on the frequency of renewals on the program property. Further, it may be so configured that the television receiver 2201 records the program status information, including date/time when the program status information is produced and/or renewed into the program status information. In this instance, it may be so configured, when the wireless terminal 2204 request to transmit the program status information, not to transmit the program status information, which is not renewed after the previous request for transmission of the program status information from the wireless terminal 2204. On the wireless terminal 2204 is received the program status information, which is renewed after the previous request for transmission of the program status information from the wireless terminal 2204, and then it is possible to renew the program status information of the wireless terminal 2204 into the newest one, by renewing that program status information for the corresponding program, even if the program status information is as it was when it is received, previously, about other program(s). With this, it is possible to simplify the information to be communicated between the television receiver 2201 and the wireless terminal 2204, and to achieve effectiveness in the processes of production and transmission of the program status information, even in case where the request is made from the wireless terminal 2204, frequently, and thereby it is possible to quicken a response speed.

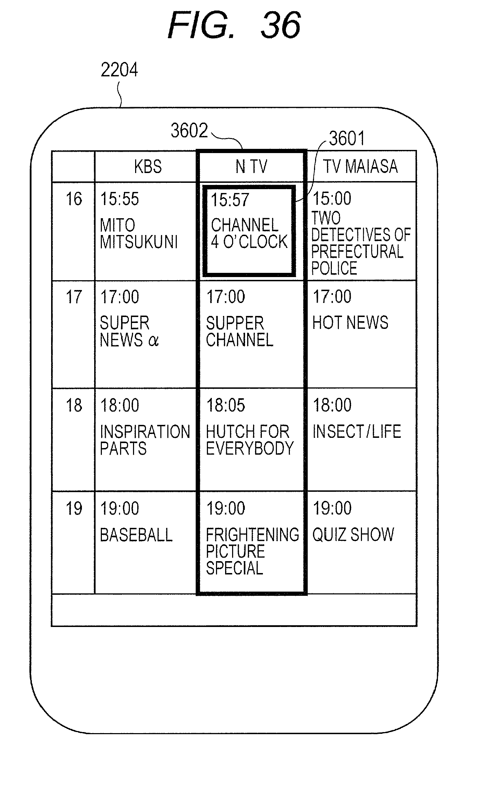

Fig. 36 is a view for showing an example of a screen display relating to a method of arrangement of the EPG to be displayed on the wireless terminal 2204.

An example shown in Fig. 36 is that the controller portion 2262 controls the service ID included in the identification information of a program to be aligned at a center of the display portion 2263, prior to the other service ID, if there is the program having the property 3074 of "0", indicative of "viewing program (i.e., under the condition of being viewed/listened at present)", within the program status information received in the similar manner, and in particular, if there is the program, the identification information thereof included in the program status information being coincident with the identification information included in the service information obtained in the step S3302 shown in Fig. 33.

On the EPG display on the display portion 2263 of the wireless terminal 2204, according to the present embodiment, although the events are disposed along with the time sequence thereof, in the vertical direction, while disposing the service ID in the horizontal direction; however, display is made in such a manner, that a program 3601 of the service ID (broadcasting station: N television), including a program 3602 of "viewing program" (i.e., under the condition of being viewed/listened at present) (for example, when being the channel 4), is aligned to the center of the EPG display prior to the other service ID. In case where an even number of broadcasting stations are aligned in the horizontal direction, on the display portion 2263, for example, when displaying four (4) stations, it may be aligned near to the center at the second position or the third position from the left. Thus, in the example mentioned above, the terminal may be configured to display a part of arrangement of the matrix-like program information mentioned above, in such a manner, that the program 3601 of the service ID (broadcasting station: N television) including the program 3602 of "viewing program" (i.e., under the condition of being viewed/listened at present) on the television receiver 2201 comes to the center, on the EPG display of the wireless terminal 2204, even in the case of the matrix-like arrangement of program information, displaying a broadcasting station "MHK" at the left-end, for example, if aligning it in the order of the service ID, as was in the example of display of the EPG on the television receiver 2201 shown in Fig. 35.

However, display of the service ID of the program(s) of "viewing program" (i.e., under the condition of being viewed/listened at present) is sufficient to be easily re cognizable by the user, and the position of display thereof should not be restricted to the center. For example, the service ID of the program(s) of "viewing program" (i.e., under the condition of being viewed/listened at present) may be displayed at the left-end or the right-end of the display portion 2263. Further, it is preferable to configure those in such a manner, that the service ID of the program(s) of "viewing program" (i.e., under the condition of being viewed/listened at present) is displayed, on an initial screen, when an operation is made for displaying the EPG screen, at least.

Namely, from a viewpoint of easy recognition by the user, it is desirable to locate the service IDof the program(s) of "viewing program" (i.e., under the condition of being viewed/listened at present) at a predetermined position on the display portion 2263 of the wireless terminal 2204.

Accordingly, for brining the program(s) of "viewing program" (i.e., under the condition of being viewed/listened at present) to be recognizable by the user, easily, on the EPG display of the wireless terminal 2204, it is enough to pick up a portion(s) differing from, in comparison with the EPG display of the television receiver 2201, on the matrix-like arrangement of the program information.

In this manner, it is possible for the user, to confirm the program information of the channel, on which viewing/listening is made at present, preferablymuchmore, by aligning the program(s) of "viewing program" (i.e., under the condition of being viewed/listened at present) on the television receiver at the predetermined position, such as, the center on the EPG of the wireless terminal 2204. This also enables the user to make a search or a reservation on the program, which she/he desires to view/listen, with respect to the program(s), which is/are planned to be broadcasted in future or broadcasted on the channel in front or behind, centering around the program or the channel of "viewing program" (i.e., under the condition of being viewed/listened at present), and therefore bringing about superior usability or operability for the user.

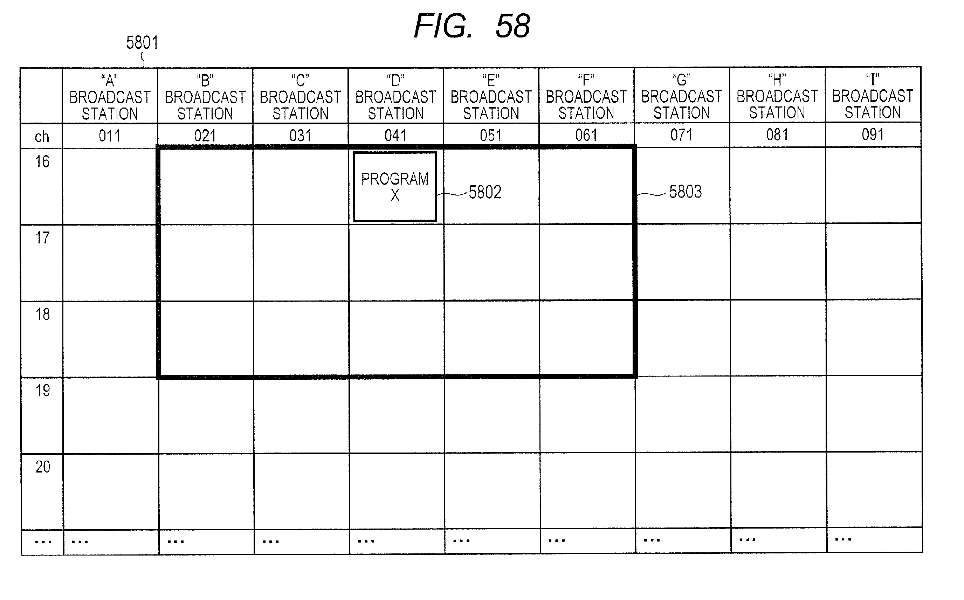

Further, explanation will be given on detailed examples of the EPG displays on the television receiver 2201 and the wireless terminal 2204 mentioned above, by referring to Figs. 58, 59A and 59B, 60A and 60B, and 61A and 61B.

First of all, Fig. 58 is a view for showing the relationship between the arrangement and the display of the EPG information on the television receiver 2201. An arrangement 5801 of the EPG information is produced by the television receiver 2201, upon basis of the service information SI included in the digital broadcast signal, which is received by the tuner/decoder portion 2231. A horizontal axis shows the broadcasting stations while a vertical axis broadcasting times. There is shown an example of the case where the present time lies between 16:00 and 17:00. In an example shown in Fig. 58, a program "X" of a "D" broadcasting station (ch041) is under the condition of being viewed/listened. Among the arrangement 5801 of that EPG information, a list of program(s) within a frame 5803 is displayed, on the television receiver. In this instance, the EPG display is conducted, by displaying, not only informing within a range of the frame 5803, but also including the information on the horizontal axis and the vertical axis corresponding to that range, in addition to the program(s) in the range of the frame 5803. The program "X" is displayed under the condition of being emphasized by a square frame 5802, which indicates the program being under the condition of being viewed/listened.

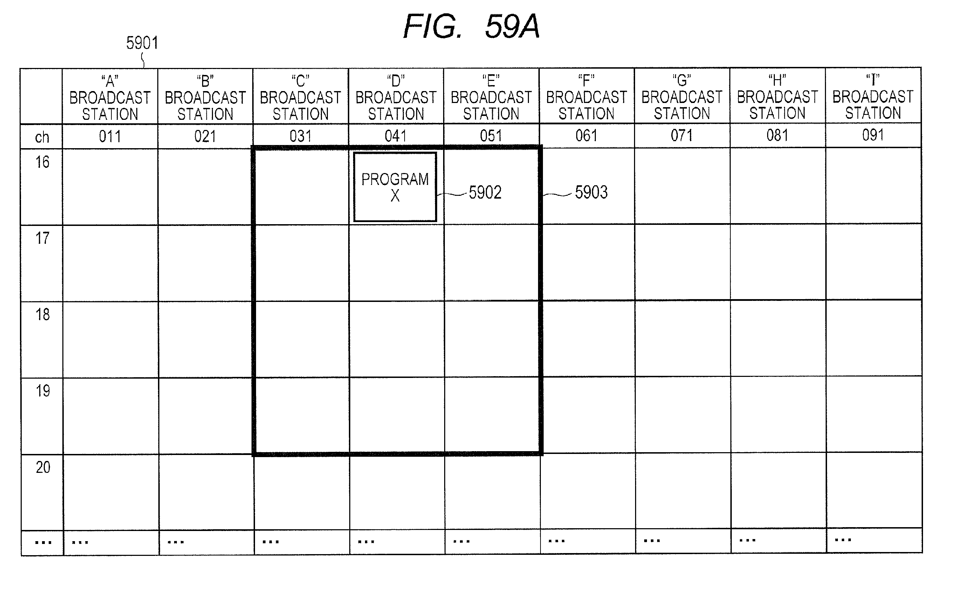

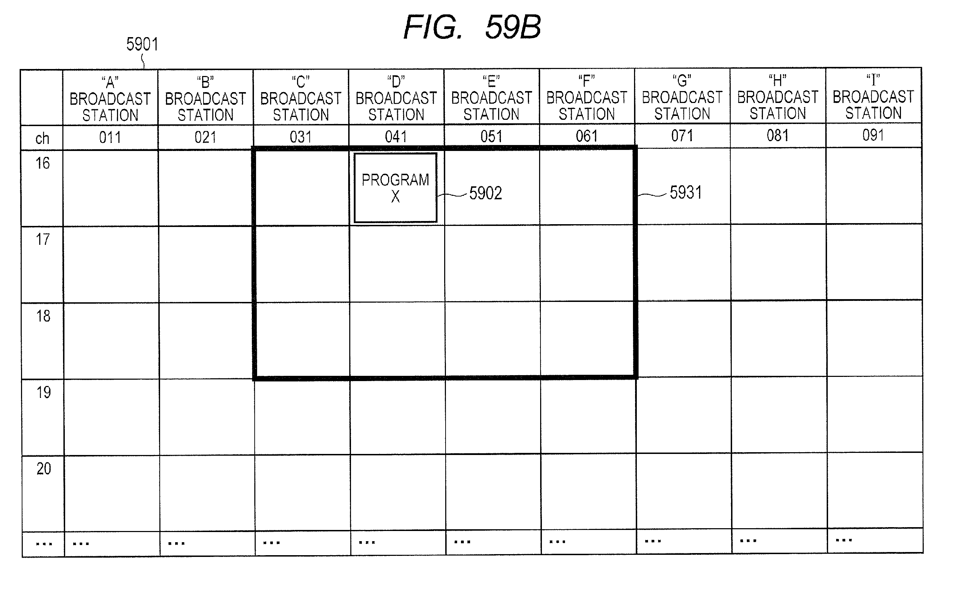

On the contrary to this, Figs. 59A and 59B are views for showing the relationship between the arrangement and the display of the EPG information, on the wireless terminal 2204, at the same time-period. The arrangement 5901 of the EPG information seems to be same to the arrangement 5801 of the EPG information on the television receiver 2201, at a glance; however, as was mentioned in the above, it is not to be received from the television receiver 2201m, but is produced by the wireless terminal 2204, uniquely, upon basis of the service information SI, which is obtained from the external network or the distributor via the tuner/decoder portion 2266 or the communication I/F 2261 and/or the mobile communication I/F 2268.

Herein, depending on a regulation of digital broadcasting, there are cases where different broadcasts are broadcasted, respectively, in broadcasting areas, and cases there is assumed a program table, each being different depending on the receiving areas. In such cases, local identification information is registered, respectively, for identifying the receiving area, such as, an area code, etc., when an initial setting is made in the television receiver 2201 and the wireless terminal 2204, respectively. When displaying the EPG, it is enough to obtain the service information SI corresponding to the local identification information, such as, the area code, etc., of that area, and thereby producing the arrangement 5801 of the EPG information mentioned above and the arrangement 5901 of the EPG information, respectively. As a method for registering the local identification information in the television receiver 2201 may be applied the followings methods: (1) inputting an area code of the corresponding area, which is described in a user's manual, (2) registering the corresponding area code as the local identification information, through prompting the user to input her/his address, while holding a correspondence table between the addresses and the area codes in advance, in the equipment, and (3) registering the corresponding area code as the local identification information, through prompting the user to input a zip code, while holding a correspondence table between zip codes and the area codes in advance, in the equipment, etc.

As a method for registering the local identification information in the wireless terminal 2204, in addition to those of (1), (2) and (3) mentioned above, may be applied a method, (4) registering the corresponding area code as the local identification information with using address information obtained in the GPS receiver portion. The local identification information registered may be stored in volatile memories, etc., not shown in the figure, respectively.

Herein, in case where the local identification information, which is registered in the television receiver 2201, indicates an area differing from that, which is indicated by the local identification information registered in the wireless terminal 2204, there is a possibility that an alignment of the broadcasting stations differs from, which are shown on the horizontal axis of the arrangement, between the arrangement 5801 of the EPG information and the arrangement 5901 of the EPG information. Then, when the EPG is displayed on the wireless terminal 2204, the controller portion 2262 of the wireless terminal 2204 obtains the local identification information registered in the television receiver 2201 via the communication I/F 2261 and/or the communication I/F 2239, to compare it to the local identification information registered in the wireless terminal 2204, and may be so configured that it makes a display noticing that a local setting differs from, between those in the television receiver 2201 and the wireless terminal 2204, or that the local setting should be reset in the television receiver 2201 and the wireless terminal 2204. With this, it is possible to prompt the user to make a reset, so as to unify the local setting between those in the television receiver 2201 and the wireless terminal 2204, and so that the broadcasting stations shown on the horizontal axis are aligned into the same order, between the arrangement 5801 of the EPG information and the arrangement 5901 of the EPG information. Although the EPG display on the television receiver 2201 and the EPG display on the wireless terminal should not be displayed at the same time, necessarily; however, if the broadcasting stations are aligned in the same order, which are shown on the horizontal axis of the arrangement 5801 of the EPG information and that of the arrangement 5901 of the EPG information, it is possible to reduce an uncomfortable feeling, which is generated when the user sees the EPG display on the wireless terminal 2204.

Herein, Fig. 59A shows therein an example, for the wireless terminal 2204 to make the EPG display while turning a longitudinal direction of the display scream upside-down (i.e., a vertically screen display), corresponding to the direction of the gravity, which is determined within the acceleration sensor portion 2269. In this instance, the example shown in Fig. 59A shows the case where the program "X" on a "D" broadcasting station (ch041) is in the condition of being viewed/listened, similar to that shown in Fig. 58. Among the arrangement 5901 of the corresponding EPG information, a program(s) within the range of a frame 5903 is/are displayed in the form of a list, on the longitudinal display screen of the wireless terminal 2204. In this instance, the EPG display is made including, not only that/those within the range of the frame 5903, but also the information on the horizontal and vertical axes corresponding to that region, in addition to the information of the programs within the region of the frame 5903. The program "X" is displayed, being emphasizing by a square frame 5902 for indicating the program in the condition of being viewed/listened at present. Herein, the EPG producer portion 3002 of the wireless terminal 2204 determines the range of the frame 5903, in such a manner that, the program "X" under the condition of being viewed/listened at present comes to a position where the user can see it easily (an example of a center thereof is shown in the figure), within the ranges on the left-side and the right-side of the frame 5903, for example, on the initial screen of the EPG display. However, in the vertical direction, since the program "X" under the condition of being viewed/listened at present should come to a top of the time axis (i.e., the vertical axis in the figure), it is enough to dispose the program "X" under the condition of being viewed/listened at present on a top of the range of the frame 5903.

Herein, Fig. 59B shows therein an example of conducting the EPG display, while turning the longitudinal direction of the display screen to left and right (i.e., a wide screen display), corresponding to the direction of the gravity, which is determined in the acceleration sensor portion 2269. In this case, the program "X" on the "D" broadcasting station (ch041) is also in the condition of being viewed/listened at present. Among the arrangement 5901 of the corresponding EPG information, a program(s) within the range of a frame 5931 is/are displayed in the form of a list, on the wide display screen of the wireless terminal 2204. In this instance, the EPG display is made including, not only that/those within the range of the frame 5931, but also the information on the horizontal and vertical axes corresponding to that region, in addition to the information of the programs within the region of the frame 5931. Inthiscase, also the EPGproducerportion 3002 of the wireless terminal 2204 determines the range of the frame 5903, in such a manner that, the program "X" under the condition of being viewed/listened at present comes to a position where the user can see it easily (an example of approaching to the center much more is shown in the figure), within the ranges on the left-side and the right-side of the frame 5903, for example, on the initial screen of the EPG display.

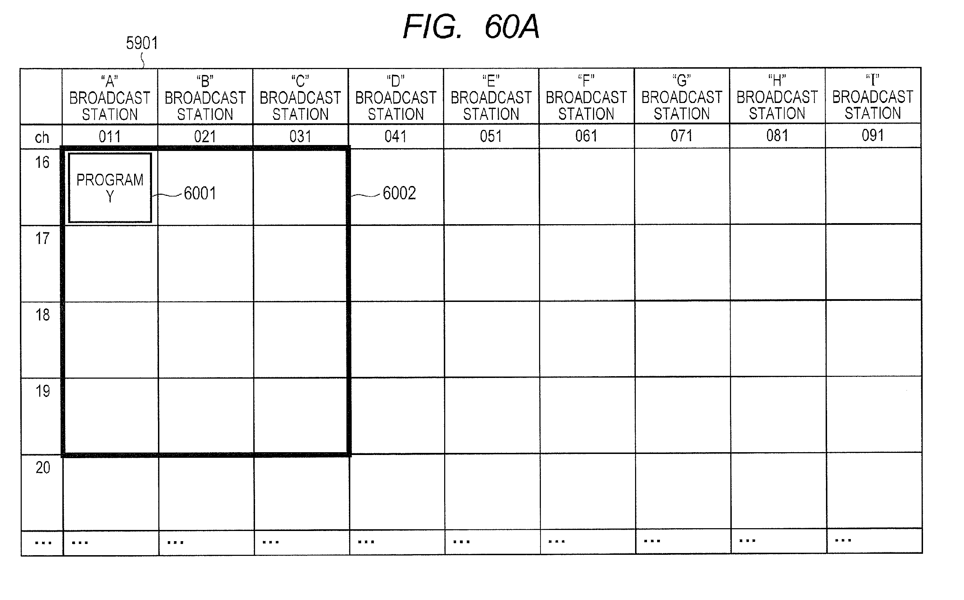

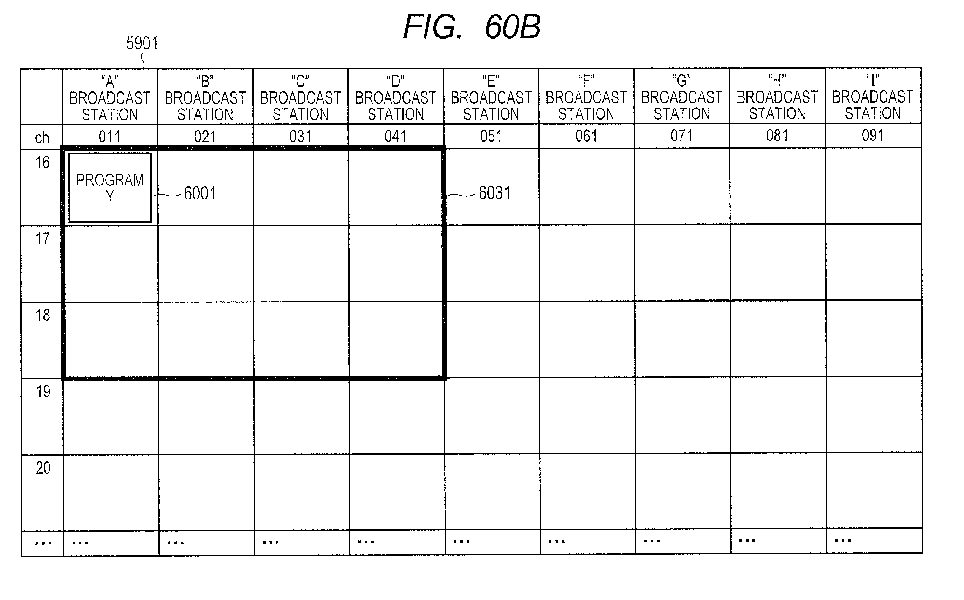

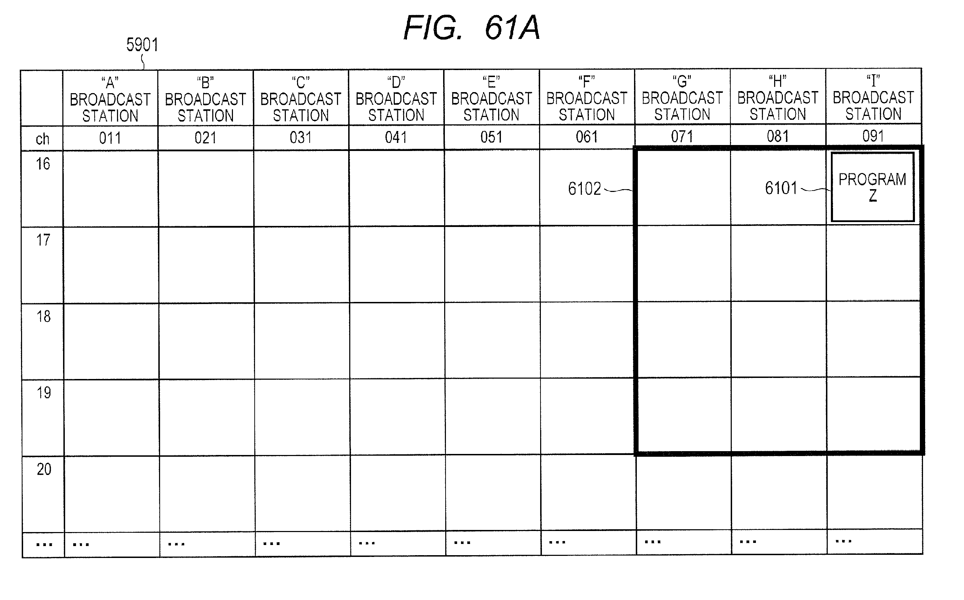

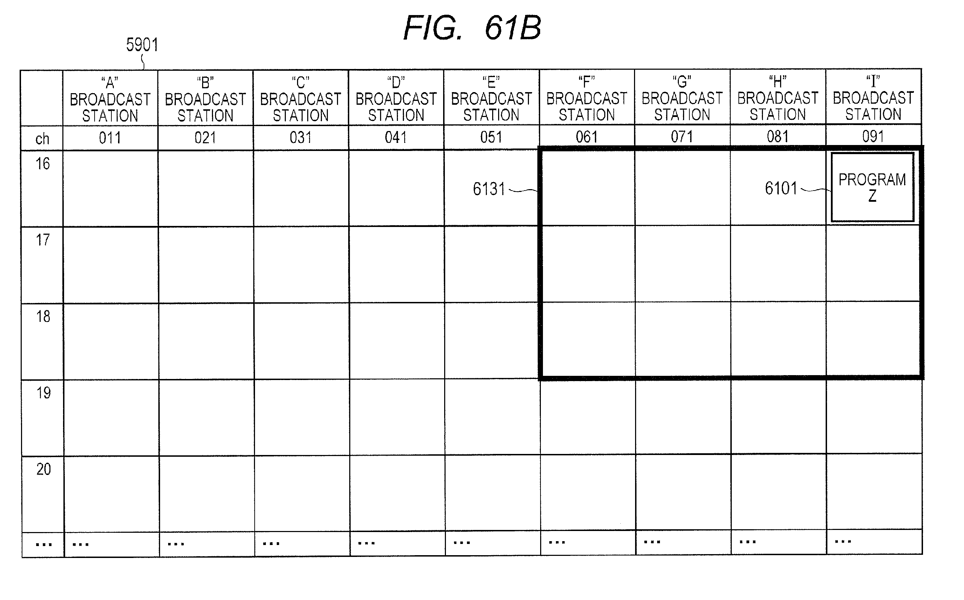

However, depending on the position of the program(s) in the condition of being viewed/listened within the arrangement 5901 of the EPG information, there is a necessity of chaining the method for determining the range of the initial screen. For example, Figs. 60A and 60B show the case where the program in the condition of being viewed/listened is the program "Y" (a square frame 6001 is shown) of "ch011" disposed at the left-end on the arrangement 5901 of the EPG information. Fig. 60A shows the initial screen of the EPG display when the wireless terminal 2204 displays the longitudinal screen, wherein a range of display is determined as a frame 6002 does. Fig. 60B shows the initial screen of the EPG display when the wireless terminal 2204 displays the wide screen, wherein a range of display is determined as a frame 6031 does. In any case, it is possible to display the programs in the form of the list, by a number being larger than that when disposing the program(s) in the condition of being viewed/listened at the center of the display screen, and therefore being superior in the usability or operability for the user. Similarly, Figs. 61A and 61B show the case where the program in the condition of being viewed/listened at present is a program "Z" (a square frame 6102 is shown) of "ch091" to be disposed at the right-end of the arrangement 5901 of the EPG information. Fig. 61A shows the initial screen of the EPG display when the wireless terminal 2204 displays the longitudinal screen, wherein a range of display is determined as a frame 6101 does. Fig. 61B shows the initial screen of the EPG display when the wireless terminal 2204 displays the wide screen, wherein a range of display is determined as a frame 6131 does.

As was explained in the above, if the EPG information is aligned in the same order, between those to be displayed on the television receiver 2201 and the wireless terminal 2204, then for the user, it is possible deal with the EPG display on the wireless terminal 2204, with a feeling as if displaying a part of the EPG display of the television receiver 2201 thereon, in spite of the fact that the EPG screen on the wireless terminal 2204 is produced upon basis of the service information SI, which is obtained through the route differing from that of the service information SI received by the television receiver 2201, i.e., being superior in the usability or operability thereof. Further, by sharing a motif or design, in common, between the display marks for identifying the properties of each program to be displayed on the television receiver 2201 and the wireless terminal 2204, as shown in Figs. 34 and 35, it is possible to increase the feeling of displaying a part of the EPG display of the television receiver 2201 thereon, furthermore, for the user, and thereby to increase the usability or operability thereof.

Further, the range for aligning the EPG information to be displayed on the initial screen of the EPG display on the wireless terminal 2204 is determined, depending on the position within the arrangement of the EPG information of the program(s) in the condition of being viewed/listened at present, and the longitudinal direction of the display screen on the wireless terminal 2204. With this, it is possible to display a list of the program information, much more, while bringing the program(s) in the condition of being viewed/listened at present to be seen easily.

As was explained in the above, with the television receiver 2201 and the wireless terminal 2204, according to the present invention, it is possible to display the program table, being superior in the usability or operability for the user.

### <Tuning from Program Table>

Hereinafter, explanation will be given on an example of operations for tuning up a program on air among from the programs of the wireless terminal 2204, by referring to Figs. 22A-22C, 37A-37C and 38 attached herewith.

The function of the EPG producing program on the wireless terminal 2204 and the television receiver 2201 is same to that shown in Figs. 30A and 30B, therefore the explanation thereof will be omitted herein.

The EPG producer portion 3002 of the wireless terminal 2204, when receiving an instruction of starting the EPG through the input means 2264, obtains the service information SI from the external network or the distributer via the tuner/decoder portion 2266, or via the communication I/F 2261 and/or the mobile communication I/F 2268. The EPG producer portion 3002 produces the EPG screen of the program on air, aligning the events (the programs) on air for each service ID (the channel number) in the horizontal direction, upon basis of the EIT, which is included in the service information SI, and displays the EPG on the display portion 2263. Also, the EPG producer portion 3002 requests the television receiver 2201 to transmit the program status information.

The program status information producer portion 3033 of the television receiver 2201, when receiving the request for transmitting the program status information, obtains the identification information of the program(s), upon which the reservation of recording and/or the reservation of viewing/listening is/are made, by referring to the program reservation data 3037, which is recorded in the storage 2237. Also, it obtains the identification information of the program(s) under the condition of being viewed/listened and under the condition of on-air at present, which are included in the service information SI. Next, it produces the program status information, by adding or attaching the property depending on the condition thereof, to each of the programs, and transmits it to the EPG producer portion 3002 of the wireless terminal 2204, via the communication terminal 2261 thereof.

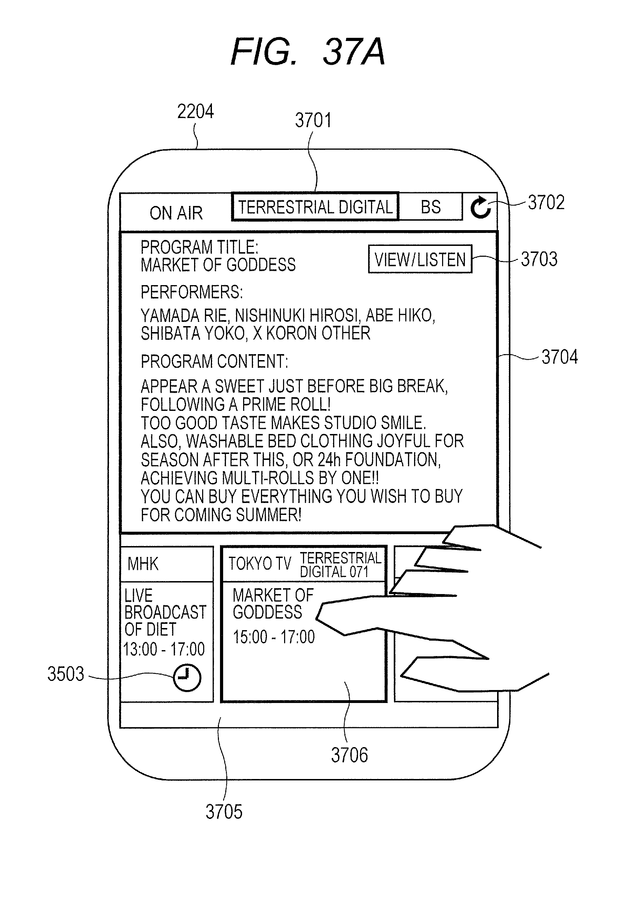

The EPG producer portion 3002 of the wireless terminal 2204 receives the program status information transmitted from the program status information producer portion 3033 of the television receiver 2201, and if there is one, being coincident with the identification information described in the program status information received, within the identification information included in the service information SI, which is obtained from the external network and/or the distributor via the tuner/decoder portion 2266, or via the communication I/F 2261 and/or the mobile communication I/F 2268, it displays the recording reservation mark 3503 on the column of program, as is shown in Fig. 37A, depending on the property 3104 of that program included in the program status information received.

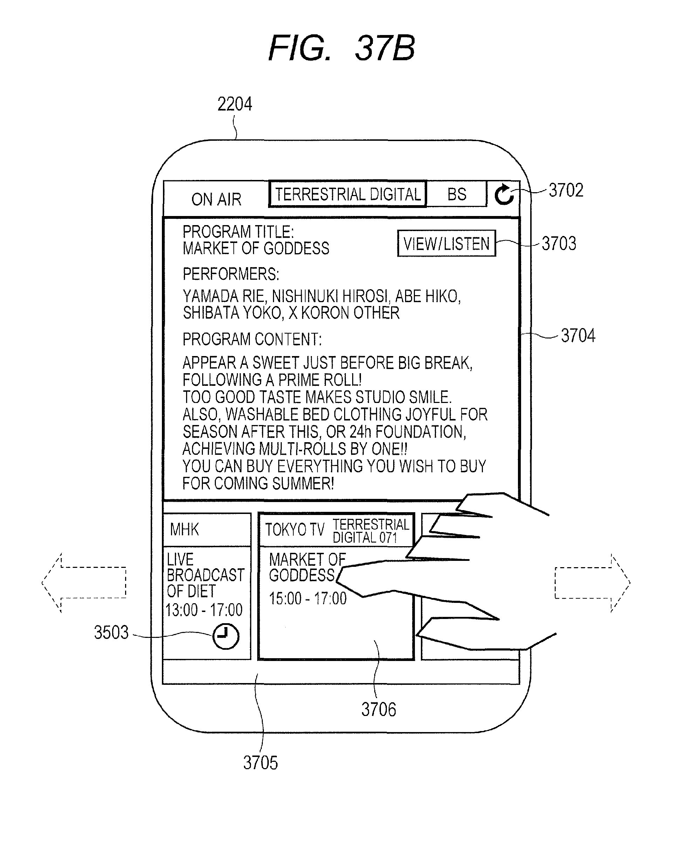

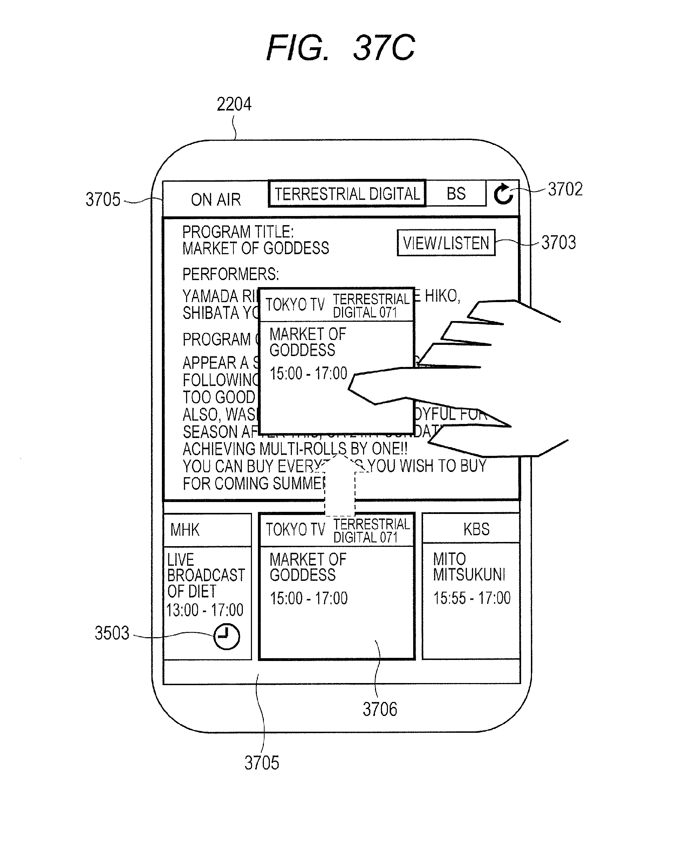

Fig. 37 shows a screen for conducting the tuning thereon, from a list of the programs, which are under the condition of being viewed/listened at present. For example, on the screen of that function are displayed program details of the programs under the condition of being viewed/listened at present, as an initial display thereof. The program details 3704 can include a performer and contents of that program, etc., therein, and when obtaining the service information from the broadcasting wave via the tuner/decoder portion 2266 or the tuner 22, it displays the contents of a part or all of the program details included in the EIT. Also, when obtaining the service information from the external network 2203 via the communication I/F 2261 or the mobile communication I/F 2268, a part of all of the information relating to the programs, which can be provided in the form of XML, etc., from the external network 2203, is/are displayed as the program details. Also, the display 3701 of the network ID display (e.g., terrestrial digital, BS, CS, etc.) indicates that selection is made on the program, being "terrestrial digital" at present, among plural numbers of broadcasting networks.

In the example shown in Fig. 37, since a program 3706 (market of a goddess) is the program under the condition of being viewed/listened at present, then the program details of this program are displayed as the initial display when starting. Also, a square frame of the program 3706 is for indicating that it is the program under the condition of being viewed/listened at present, in the similar manner to that shown in Fig. 35. In case where the television receiver 2201 is used for viewing/listening the contents of external equipment, through a video input, etc., i.e., not for viewing/listening the program on air thereon, it is also possible to display the program, which was displayed at last on the wireless terminal 2204, as the initial display.

Next, explanation will be given on the tuning operations from the program table.

Fig. 37A is a view for showing an example of a screen display when a tapping operation is made on the program on air at present, which is displayed on the wireless terminal 2204. Fig. 37B is a view for showing an example of operations when a dragging operation or a flicking operation is made, to the left and the right, on the program on air at present, which is displayed on the wireless terminal 2204.

The programs on air at present are aligned in the horizontal direction for each channel number, and they can be confirmed while scrolling to the left and the right on a list of the programs on air at present, through the dragging operation or the flicking operation to the left and the right on a program display column 3705, as is shown in Fig. 37B. Also, as is shown in Fig. 37A, it is possible to display the contents of the program details on the program details 3704 through the tapping operation made on any one of the programs on the program display column 3705.

Also, Fig. 37A is a view for showing an example of operations when the tuning is made on a program on the EPG. Also, upon making selection on a "button to view/listen" 3703, tuning information, including therein the information for enabling to identify the program under the condition of being selected at present, uniquely, is transmitted from the wireless terminal 2204 to the television receiver 2201. The controller portion 2234 of the television receiver 2201, upon receipt of the tuning information, controls the tuner/decoder portion 2231 via the tuning controller portion 2235, so as to display the selected program on air on the display portion 2238. Also, the flicking operation made on the program display frame into an upper direction conducts an animation display, as if a copy of a portion of the program display column jumps out to the direction above the screen, i.e., tuning of that program can be made in the similar manner. With this, it is possible to conduct the tuning display, which can be visibly understood, easily, for the user.

Herein, the tuning information to be transmitted from the wireless terminal 2204 to the television receiver 2201 may include the network ID and the service ID (the channel number), as an example thereof. The event ID may be included or omitted therein/from.

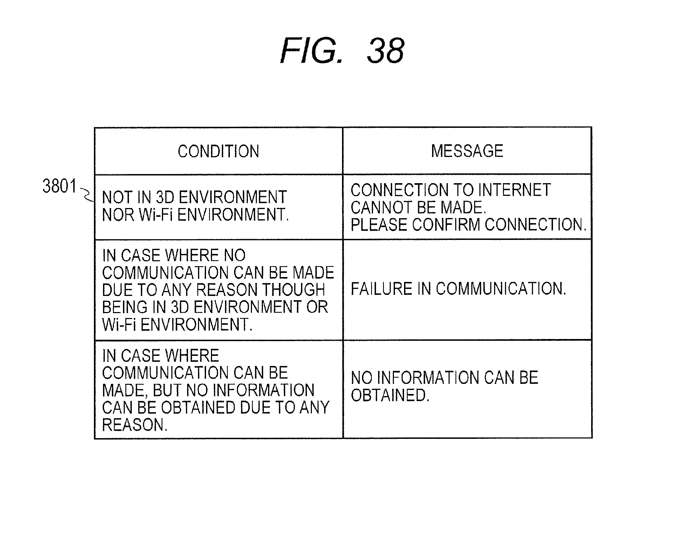

A re-read button 3702 is for conducting read-in of the list of the program(s) on air, upon the tapping operation thereon, and in this instance, it is possible to display a message depending on a situation, for example, when the wireless communication environment, such as, Wi-Fi, etc., shown in Fig. 38, which will be mentioned later, or the communication environment of a mobile communication network, such as, 3G, etc., is changed.

The display 3701 of the network ID display (terrestrial digital, BS, CS, etc.) indicates that the program of "terrestrial digital" is selected at present.

Fig. 38 is a view for showing an example of display of an error message due to the wireless communication, such as, the Wi-Fi, etc., or the communication environment of the mobile communication network, such as, the 3G, etc. Since the service information SI can be obtained from the external network or the distributor via the communication I/F 2261 and/or the mobile communication I/F 2268, then in case where it cannot be obtained from any one of them, it is possible to make a display as the error message 3801.

In this manner, arrangement of the program(s) under the condition of being viewed/listened on the television receiver in the center of the EPG, with priority, enables the confirmation on the program information of the channel, through which the program is viewed/listened at present, and also enables to search or tune up a program, centering around the program or the channel under the condition of being viewed/listened at present, with the broadcast programs of the channels in front or behind.

In the examples shown in Figs. 37A-37C, as is apparent from those figures, of course, with conduction of scrolling in the horizontal direction as shown in Fig. 37B, such a display is achieved that a program aligned in the horizontal direction of (or beside) the program 3706 (market of goddess) slides. Therefore, scrolling corresponding to the dragging operation or the flicking operation in the horizontal direction enables such a display, that the program to be located to the right of the program 3706 (market of goddess) moves to the center, or that that the program to be located to the left of the program 3706 (market of goddess) moves to the center.

The user can conduct a tuning process (i.e., a transmission process of the tuning information), upon a program at her/his desire, through such a flicking operation into the upper direction as shown in Fig. 37C, after displaying a display indicating the program at her/his desire on a screen, on such a scroll display as shown in Fig. 37B through the dragging operation or the flicking operation in the horizontal direction. However, in case where selection will be made on the program to be received on the television receiver through the network, that "tuning process" may be called a "program selection process". Also, in this case, the "tuning information" may be called "program selection information". Hereinafter, in order to simplify the explanation, the explanation will be given by presenting those concepts "tuning process" and "tuning information" collectively.

Herein, in the examples shown in Figs. 37A-37C, scrolling of the EPG is the flicking operation or the dragging operation to the left or the right direction, and the flicking operation for the transmission process of the tuning information is in the upper direction. Explanation will be given on an effect of setting them in those directions.

First of all, in case when aligning plural numbers of the frames for displaying the programs of the EPG, being on air at present, in the horizontal direction, it is apparent that no uncomfortable one is generated in the feelings of operations by the user, if displaying the plural numbers of the frames for displaying the programs of the EPG are displayed to slide to the left direction and the right direction, respectively, depending on the flicking operation or the dragging operation to the left direction or the right direction. Next, in the examples shown in Figs. 37A-37C, the tapping operation on the frame for displaying the program is recognized to be a display of detailed content of the program.

Herein, since the transmission process of the tuning information is a process for exchanging the display picture of the television receiver, if error operation information is transmitted, frequently, this results into frequent exchange of the display picture on the television receiver; therefore being uncomfortable for the user. Therefore, for a touch panel, being the input means 2264, it is necessary to make an operation for scrolling the EPG and/or an operation for displaying the program detailed contents, hardly cognizable as the operation for the transmission process of the tuning information, erroneously.

Then, in the example shown in Fig. 37C, a flicking operation towards the upper direction, staring from the display frame of the program at her/his desire on the EPG display, is determined to be an operation for recognition for the transmission process of the tuning information. Because of being the flicking operation, it is separate one from the tapping operation for displaying the program detailed content; therefore, they are difficult to be recognized erroneously. Also, even if the user, trying to make the flicking operation, but finishes by the tapping operation, erroneously; however, on the screen of the wireless terminal 2204, there will be made only the display of the program detailed content, no such an occasion occurs that the displaypicture on the television receiver is exchanged, frequently. Also, the flicking operation to the upper direction for the transmission process of the tuning information is in a relationship; i.e., being orthogonal to the flicking operation or the dragging operation, to the left or the right direction, for scrolling the EPG. With this, the touch panel can achieve an effect that the operation for scrolling the EPG be hardly recognized, erroneously, to be the operation for the transmission process of the tuning information.

Because of being mentioned above, for the touch panel, to make the operation for scrolling the EPG hardly cognized erroneously, as the operation for the transmission process of the tuning information, it is sufficient to bring both to be orthogonal with each other in the direction of operations. Accordingly, the present invention should not be limited to the example shown in Figs. 37A-37C. For example, on the EPG for aligning plural numbers of frames for displaying the programs on air at present, in the vertical direction, it is possible to obtain the similar effect even if the flicking operation or the dragging operation in the vertical direction (i.e., the upper direction or the lower direction) is assigned to the operation for scrolling the EPG, while assigning the flicking operation in the horizontal direction (i.e., the left direction or the right direction) to the operation or the transmission process of the tuning information.

Also, in the examples shown in Figs. 37A-37C, the plural numbers of frames, for displaying the programs on air at present, are aligned linearly in the horizontal direction; however there is no necessity of aligning linearly, always. The plural numbers of frames, for displaying the programs on air at present, may be aligned along a curved line, such as, an arc of a circle or an oval, or "S" shape, etc. Also, the arrangement should not be restricted to the display for expressing them on a plane. Thus, with using the three-dimensional expression, it is possible to make such a display that the frames for displaying the programs to be displayed in the center can be seen in front.

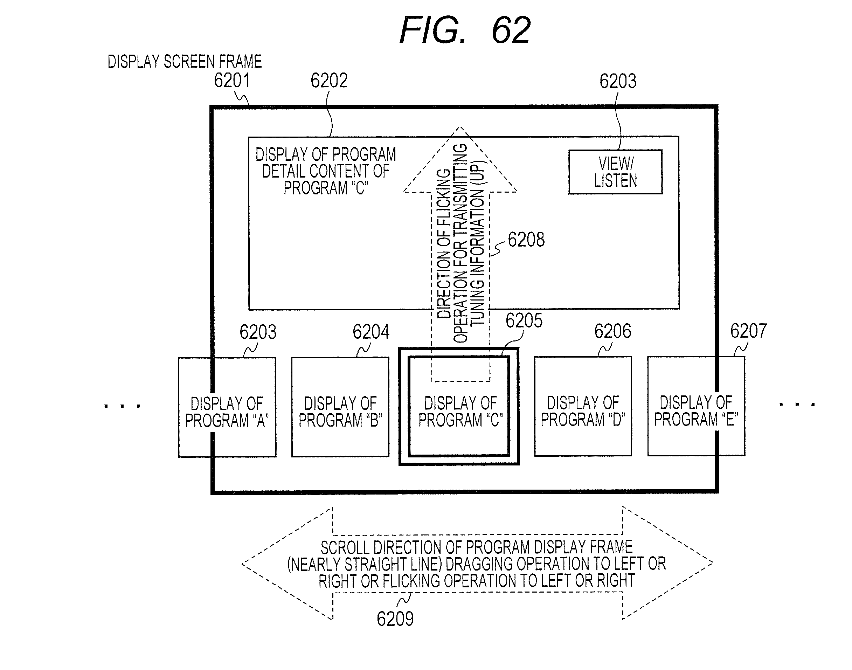

Explanation will be given on examples, combining those display layouts and setting of operations, by referring to Figs. 62, 63, 64 and 65.

In an example shown in Fig. 62, there are displayed display frames 6203-6207 for displaying plural numbers of programs (A-E) on the EPG. Those displays 6203 and 6207 for showing part of the programs (A, E) are displayed, but only part thereof. For showing this in an easily understandable manner, regarding the display for the programs, only a part of the program display frame thereof being displayed, it shows, not only an inside of a display screen frame 6201, but also an outside of the display screen frame 6201, conceptually. Herein, in the present figure, the input means 2264 recognizes the tapping operation onto the program "C", and only the display frame of the program "C" is displayed surrounding by a double frame, differing from other programs, so that the program selected can be distinguished from the other programs easily. Also, there is shown the condition of displaying the program detailed content of the program "C", which is selected through the tapping operation, within a frame 6202.

Herein, in the example shown in Fig. 62, the plural numbers of program display frames are horizontally disposed on a straight line. The direction to recognize the dragging operation or the flicking operation for use of the scrolling operation of the program display frame lies in the left direction or the right direction (see an arrow 6209 in the figure). Also, a scroll direction of the program display frame, corresponding to that dragging operation or the flicking operation in the left direction or the right direction, similarly, lies in the left direction or the right direction (see an arrow 6209 in the figure), and is displayed so as to scroll in the direction of a straight line or an about straight line. In the example shown in Fig. 62, on the contrary to this, the flicking operation (see an arrow 6208 in the figure) into the upper direction, i.e., being the direction orthogonal to that left or right direction, is recognized to be the operation for the transmission process of the tuning information. In this manner, with such determination of the direction of the flicking operation for the transmission process of the tuning information that it intersects with the dragging operation or the flicking operation for the scrolling operation of the program display frame, it is possible to reduce the erroneous recognition of an operation input through the input means 2264.

However, even the example shown in Fig. 62 is so constructed that the transmission process of the tuning information can be made when recognizing the tapping operation on a "view/listen" button 6203 within the frame 62202. This is similar to that shown in Fig. 37C.

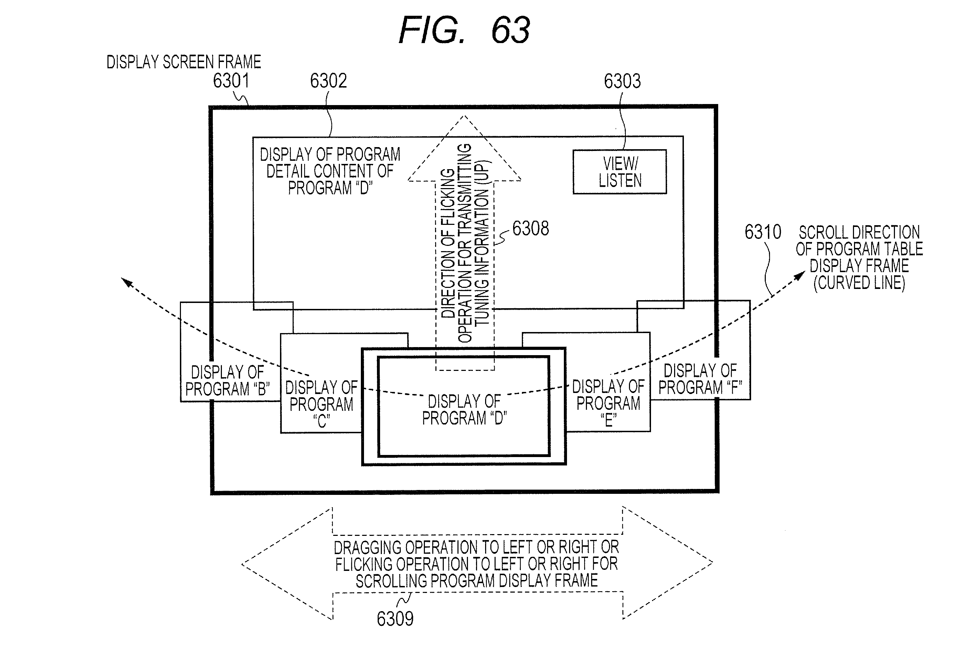

Next, in an example shown in Fig. 63, there are displayed display frames (reference numerals thereof being omitted herein) for showing plural numbers of programs (B-F) on the EPG. Those displays (reference numerals thereof being omitted), for showing part of the programs (B, F), are displayed, but only part thereof. Similar to Fig. 62, for easily understandable showing, regarding the display for the programs, only a part of the program display frame thereof being displayed, it shows, not only an inside of a display screen frame 6301, but also and outside of the display screen frame 6301, conceptually. Herein, in the present figure, the input means 2264 recognizes the tapping operation onto the program "D", and only the display frame of the program "D" is displayed surrounding by a double frame, differing from other programs, so that the program selected can be distinguished from the other programs easily. Also, there is shown the condition of displaying the program detailed content of the program "D", which is selected through the tapping operation, within a frame 6302.

Herein, also in an example shown in Fig. 63, the direction to recognize the dragging operation or the flicking operation for scrolling operation of the plural numbers of program display frames is, similar to that shown in Fig. 62, the left or the right direction (see an arrow 6309 in the figure). Further, the direction of the flicking operation for the transmission process of the tuning information directs to the upper direction, similar to that shown in Fig. 62(see an arrow 6308 in the figure). In this manner, determining the directions of both to intersect with each other, orthogonally, enables to reduce the erroneous recognition of the operation input through the input means 2264, in the similar manner to that shown in Fig. 62. However, in the example shown in Fig. 63, the plural numbers of frames for displaying the programs are aligned along a curved line, such as, an arc of a circle or an oval, etc. Also, in the present figure, for achieving a pseudo-3D display, such an expression is applied that the display for showing the program "D" selected can be sensed in front at the most, by displaying the display for showing the program "D" selected, in front of the displays of other programs, piling up thereon. Also, changing the size of display frame to be large as it comes to the front enables to achieve a display giving a stereoscopic effect much more. Herein, in the example shown in Fig. 63, the direction for displaying the scroll of the program display frame (see an arrow 6310 in the figure) is a curved line, such as, an arc of a circle or an oval, etc., and goes along the direction of alignment of the plural numbers of program display frames.

In this manner, there is no necessity that the direction for displaying the scroll of the plural numbers of program display frames is always coincident with the direction of the dragging operation or the flicking operation for the scrolling operation. For example, in case where the direction of scroll is not the straight line, a display can be made in such a degree that the user can understand that operation even if the route of the scroll is not the straight line, if constructing in such a manner that a component of displacement in the direction 6308 of the dragging operation for the scrolling operation of the plural numbers of programdisplay frames is larger than that in the direction 6309 of the flicking operation for the transmission process of the tuning information, regarding the maximum displacement on the screen in the scroll direction 6310 of the program display frame, from the position at a center of the plural numbers of program display frames, on the scroll display of the program display frame.

Further, also in the example shown in Fig. 63, it is similar to that shown in Fig. 37C, i.e., the "view/listen" button 6303 within the frame 6303 is constructed in such the manner that it can conduct the transmission process of the tuning information even when it recognizes the tapping operation thereon.

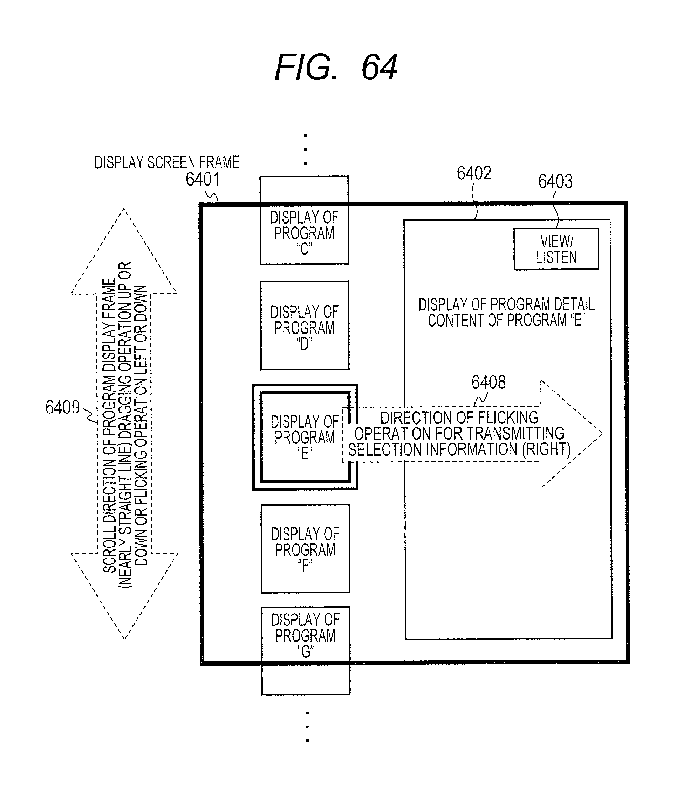

Next, in the example shown in Fig. 64, there are shown the display frames (reference numerals thereof being omitted herein) for showing plural numbers of programs (C-G) on the EPG. Those displays (reference numerals thereof being omitted), for showing part of the programs (C, G), are displayed, but only part thereof. Similar to Fig. 62, for easily understandable showing, regarding the display for the programs, only a part of the program display frame thereof being displayed, it shows, not only an inside of a display screen frame 6401, but also and outside of the display screen frame 6401, conceptually. Herein, in the present figure, the input means 2264 recognizes the tapping operation onto the program "E", and only the display frame of the program "E" is displayed surrounding by a double frame, differing from other programs, so that the program selected can be distinguished from the other programs easily. Also, there is shown the condition of displaying the program detailed content of the program "E", which is selected through the tapping operation, within a frame 6402.

Herein, in the example shown in Fig. 64, the direction to recognize the dragging operation or the flicking operation for the operation for scrolling the plural numbers of program display frames, differing from that shown in Fig. 62, lies in the upper or lower direction (see an arrow 6409 in the figure). Further, the direction of the clicking operation for the transmission process of the tuning information lies in the right direction (see an arrow 6408 in the figure). In this manner, determining the directions of both to intersect with each other, orthogonally, enables to reduce the erroneous recognition of the operation input through the input means 2264, in the similar manner to that shown in Fig. 62. Also, in the example shown in Fig. 64, the plural numbers of program display frames are aligned, linearly, in the vertical direction, and the direction for scroll display of the program display frames (see an arrow 6409 in the figure) lies in the vertical direction, similar to that of the dragging operation or the flicking operation for the scroll operation of the plural numbers of program display frames. However, the direction of the flicking operation for the transmission process of the tuning information, since it is enough to intersect the direction to recognize the dragging operation or the flicking operation for the scroll operation of the plural numbers of program display frames, may direct to the left direction, but not the right direction.

Also in the example shown in Fig. 64, the "view/listen" button 6403 within the frame 6402 in such the manner that it can conduct the transmission process of the tuning information even when it recognizes the tapping operation thereon. This is similar to that shown in Fig. 37C.

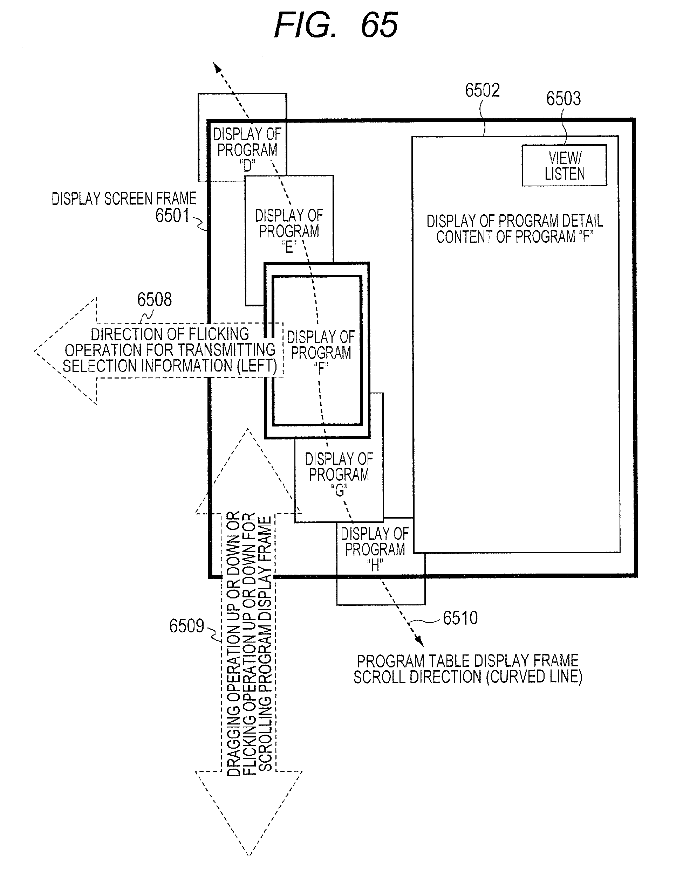

Next, in an example shown in Fig. 65, there are shown the display frames (reference numerals thereof being omitted herein) for showing plural numbers of programs (D-H) on the EPG. Those displays (reference numerals thereof being omitted), for showing part of the programs (D, H), are displayed, but only part thereof. Similar to Fig. 64, for easily understandable showing, regarding the display for the programs, only a part of the program display frame thereof being displayed, it shows, not only an inside of a display screen frame 6501, but also and outside of the display screen frame 6501, conceptually. Herein, in the present figure, the input means 2264 recognizes the tapping operation onto the program "F", and only the display frame of the program "F" is displayed surrounding by a double frame, differing from other programs, so that the program selected can be distinguished from the other programs easily. Also, there is shown the condition of displaying the program detailed content of the program "F", which is selected through the tapping operation, within a frame 6502.

Herein, also in the example shown in Fig. 65, the direction to recognize the dragging operation or the flicking operation for the operation for scrolling the plural numbers of program display frames, similar to that shown in Fig. 64, lies in the upper or lower direction (see an arrow 6509 in the figure). Further, the direction of the clicking operation for the transmission process of the tuning information lies in the left direction (see an arrow 6508 in the figure). In this manner, determining the directions of both to intersect with each other, orthogonally, enables to reduce the erroneous recognition of the operation input through the input means 2264, in the similar manner to that shown in Fig. 64. However, in the example shown in Fig. 65, the plural numbers of program display frames are aligned in accordance with the "S" shaped curved line. Also, in the present figure, for achieving a pseudo-3D display, such an expression is applied that the display for showing the program "F" selected can be sensed in front at the most, by displaying the display for showing the program "F" selected, in front of the displays of other programs, piling up thereon. Also, changing the size of display frame to be large as it comes to the front enables to achieve a display giving a stereoscopic effect much more. Herein, in the example shown in Fig. 65, the direction for displaying the scroll of the program display frame (see an arrow 6510 in the figure) is the "S" shaped curved line, and goes along the direction of alignment of the plural numbers of program display frames.

In this manner, also in case of Fig. 65, similar to that shown in Fig. 63, there is no necessity that the direction for displaying the scroll of the plural numbers of program display frames is always coincident with the direction of the dragging operation or the flicking operation for the scrolling operation. For example, in case where the direction of scroll is not the straight line, as shown in Fig. 65, in the similar manner to that shown in Fig. 63, a display can be made in such a degree that the user can understand that operation even if the route of the scroll is not the straight line, if constructing in such a manner that a component of displacement in the direction 6508 of the dragging operation for the scrolling operation of the plural numbers of program display frames is larger than that in the direction 6509 of the flicking operation for the transmission process of the tuning information, regarding the maximum displacement on the screen in the scroll direction 6510 of the program display frame, from the position at a center of the plural numbers of program display frames, on the scroll display of the program display frame.

Further, also in the example shown in Fig. 65, it is similar to that shown in Fig. 37C, i.e., the "view/listen" button 6503 within the frame 6302 is constructed in such the manner that it can conduct the transmission process of the tuning information even when it recognizes the tapping operation thereon.

However, in the example shown in Fig. 37C, only the display selected, showing the program 3706 "market of goddess", moves into the upper direction, responding to the flicking operation into the upper direction for the transmission process of the tuning information. In this manner, with moving only the display for showing the target program of the flicking operation responding to the flicking operation, while restricting the displays for showing other program(s) from being moved in the direction of the flicking operation, for the user, it is possible to recognize that operation to be different one from the scroll operation of the EPG, easily. Although the explanation is omitted in Figs. 62 to 65, about movement of the display(s) of the target program(s) of tuning, responding to that flicking operation for the transmission process of the tuning information; however, it may be done in Figs. 62 to 65. Conduction of such displaymakes the user easily understand a recognition result of the operation through the input means 2264; being superior in the usability or operability thereof.

However, the upper/lower direction and/or the left/right direction on the screen display of the EPG, which are mentioned in the above, may be considered upon basis of the condition where the user sees the screen of the wireless terminal 2204 in such a direction that she/he can read the characters displayed thereon.

However, in the explanation given in the above, although "frame for showing program" is displayed surrounding by the square frame; however, there is no necessity that it be the square one. Also, it is not necessary to display a frame line, clearly. Thus, it does not matter if it is display in any shape or in any way, as far as, there is an area for enabling to recognize each program therein.

Also, in the explanation given in the above, it is said that the operation for the transmission process of the tuning information is the flicking operation; however, it may be the dragging operation.

Also, in the explanation given in the above, there are used the expressions, such as, the upper direction, the lower direction, the right direction and the left direction, etc., but there is no necessity that those are strictly coincident with the horizontal direction and the vertical direction, respectively. For the input means 2264 to recognize the operations made on the touch panel in those directions, it may be constructed in such a manner that the flicking operation and/or the dragging operation, being included within a predetermined range of angle, from the vertical direction to the screen, in a meaning of having no problem from a viewpoint of the practical use thereof, can be recognized as the operations in the upper direction or the lower direction, respectively. Also, it may be constructed in such a manner that the flicking operation and/or the dragging operation, being included within a predetermined range of angle, from the horizontal direction parallel to the screen, in a meaning of having no problem from a viewpoint of the practical use thereof, can be recognized as the operations in the right direction or the left direction, respectively. The angle of the predetermined range, for recognizing the upper direction, the lower direction, the right direction and the left direction, respectively, maybe determined in such a manner that those ranges do not overlap with.

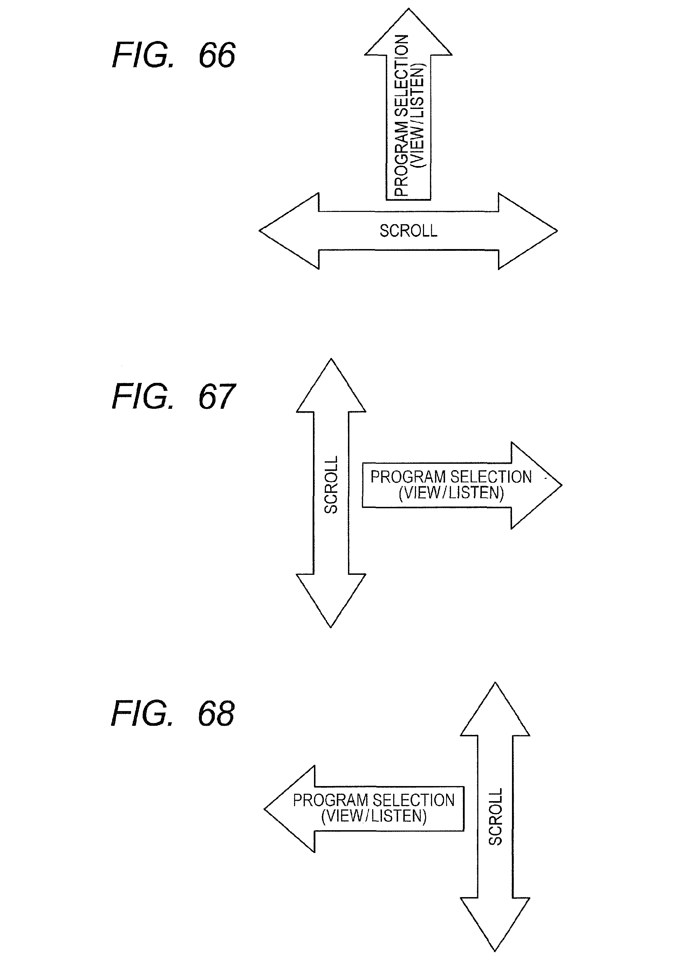

However, for increasing the usability or operability for the user, much more, a guide display may be displayed in any place on the screen, as is shown in Figs. 66, 67 and 68.

For example, Fig. 66 shows the guide display to be displayed within the screen in the examples of displays shown in Fig. 62 or 63. With this, for the user, it is possible to understand the process by means of the flicking operation or the dragging operation, intuitively, without reading the user's manual or the like. In the similar manner, Fig. 67 shows the guide display to be displayed within the screen in the example of display shown in Fig. 64, and the effect thereof is similar to that shown in Fig. 66. In the similar manner, Fig. 68 shows the guide display to be displayed within the screen in the example of display shown in Fig. 65, and the effect thereof is similar to that shown in Fig. 66. Thus, it is enough to make the guide display for showing the setting of the flicking operation or the dragging operation and indicating the direction fitting to the process.

### <Reservation (Recoding) from Program Table Display>

Hereinafter, explanation will be on an example of operations, such as, program reservation, confirmation of reservation content, etc., on the television receiver 2201, from the wireless terminal 2204, by referring to Figs. 22A-22C, 39A and 39B, and 40-46.

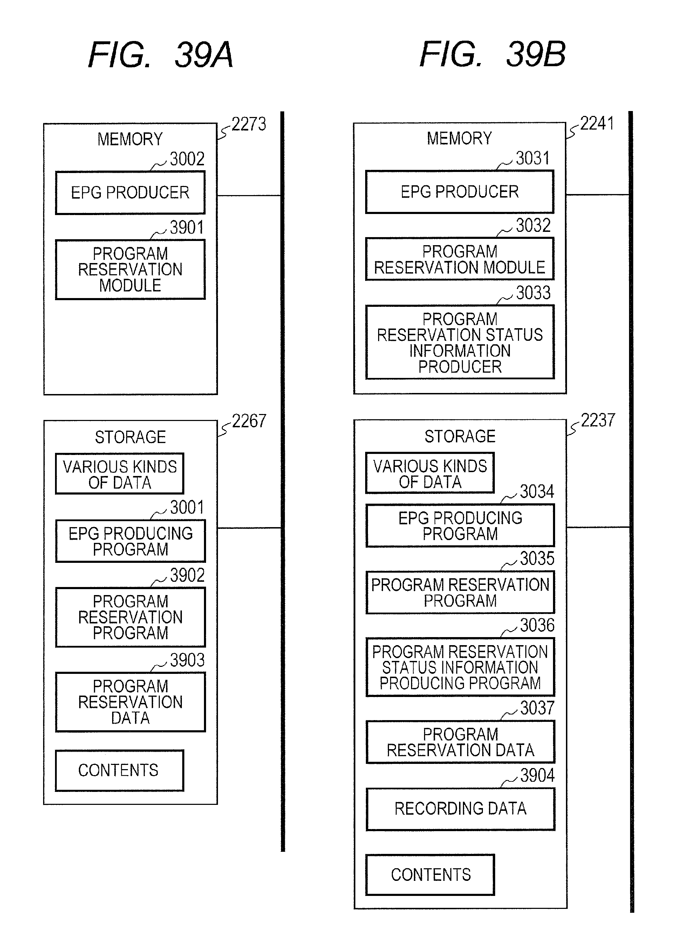

Fig. 39A is a view for explaining the functions of the EPG producing program and the program reservation program on the wireless terminal 2204. In Fig. 39A, the wireless terminal 2204 stores program reservation data 3903, the EPG producing program 3001 and program reservation program 3902, in the storage 2267, wherein is shown the condition that the controller portion 2262 is expanding the EPG producing program 3001 and program reservation program 3902 on the memory 2273, as the EPG producer portion 3002 and a program reservation portion 3901. The EPG producing program 3001 and the program reservation program 3902 may be stored in the storage 2267 in advance, at the time-point when the product is shipped out, or may be downloaded via the communication I/F 2261 and/or the mobile communication I/F 2268,

Fig. 39B is a view for explaining the functions of the EPG producing program, the program reservation program and the program status information producing program on the television receiver 2201. In Fig. 39B, comparing to Fig. 30B, the storage 2237 further comprises recoding data 3904. In the recoding data 3904 are stored remaining capacities of the storage 2237 and the external storage connected with the digital I/F 2247, and also a size predicted to be necessary for when recording the program(s) therein, the recording reservation thereof being made, etc.

Details of the program reservation data 3903 and the program reservation portion 3032 are similar to the program reservation data 3903 and the program reservation portion 3032 of the television receiver 2201 shown in Fig. 30B, in the example of <Program Display Table> mentioned previously, therefore the explanation thereof will be omitted herein.

The storage 2267 of the wireless terminal 2204 stores the reservation information, which is produced by the program reservation portion 3901 in accordance with the user operation accepted by the input means 2264, into the program reservation data 3903. Also, it stores the reservation information of the television receiver 2201, which is received via the communication I/F 2239 and the communication I/F 2261, into the program reservation data 3903m temporally,

Also, the controller portion 2262 of the wireless terminal 2204 can transmit the reservation information, which is stored in the program reservation data 3903, to the controller portion 2234 of the television receiver 2201 via the communication I/F 2261 and the communication I/F 2239.

The storage 2237 of the television receiver 2201 stores the reservation data, which is produced by the program reservation portion 3901 in accordance with the user operation received on the input means 2236, into the program reservation data 3037. Also, it has a function of storing or overwriting the reservation information of the wireless terminal 2204, which is received via the communication I/F 2261 and the communication I/F 2239, in the program reservation data 3037. Further, upon a request of the controller portion 2262, it can transmit the reservation data, which is stored in the program reservation data 3037 of the storage 2237, to the controller portion 2262, via the communication I/F 2239 and the communication I/F 2261.

The program reservation program 3902 of the television receiver 2201 produces GUI for enabling selection of setting content, with applying, such as, a pull-down method or a check box method, etc., for each column of the settings included in the reservation information, and also produces the reservation information in accordance with the user operation, which is accepted by the input means 2236.

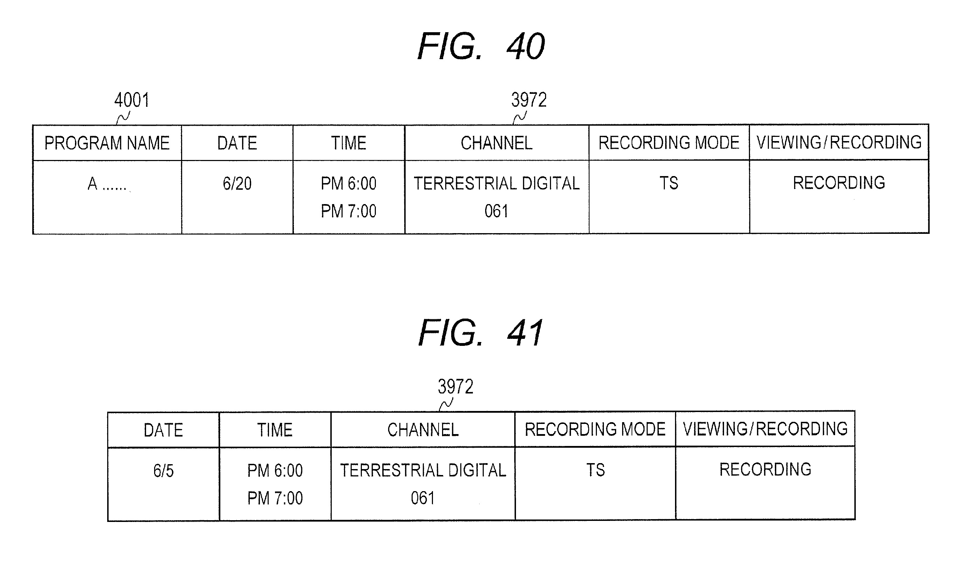

Next, explanation will be given on the data format relating to the communication terminal system, according to the present embodiment, by referring to Figs. 40 and 41.

Fig40 is a view for showing an example of the data format of the reservation information.

The reservation information is constructed, as is shown in Fig. 40, a program name 4001, date, time, channel 3972, a recording mode and data of viewing/recording. Data of the recording mode is used only when the data of viewing/recording is "recording", and it shows the quality of picture (each having a compression ratio different from, and being different in the maximum recording time), such as, TS (broadcast picture quality), TSE (high picture quality/2X recording time), TSX4 (high picture quality/4X recording time), TSE8 (high picture quality/8X recording time) and TSX24 (high picture quality/24X recording time). Also, in addition to the example mentioned above, the reservation information may include therein the followings: "every time/every week revelation" indicating to conduct the recording in the same time band every week, "renewal recording setting" indicating if the program to be recorded newly on "every time/every week revelation" be over written on the program recorded previously (i.e., delete the previous recording and record the program of this time), "folder designation" designating a folder, into which the recording data of video and audio should be stored, and "recording address" indicating an address for recording the program to be recorded on the reservation if the television receiver 2201 has plural numbers of recording addresses (e.g., HDD, DVD, etc.) and so on.

Fig. 41 is a view for showing a variation of the data format of the reservation information.

The format of the reservation information shown in Fig. 41 has no program data 4001, comparing to that shown in Fig. 40. In this example, on the wireless terminal 2204, as the channel 4002 and the date and time information, such as, the program name, etc., maybe used the information included in the reservation information, which is transmitted from the television receiver 2201 to the wireless terminal 2204, and as the information relating to other program(s) may be used the program information of the EPG, which is produced by the EPG producer portion 3002 of the wireless terminal 2204, not transmitting it from the television receiver 2201 to the wireless terminal 2204. Further, transmission may be made on the information enabling to identify the program uniquely (the identification information, etc.), such as, the network ID and the event ID, and the information relating to the reservation of the program identified (the reservation status information, etc.)

With doing in this manner, it is possible to reduce an amount or volume of the communication data between the television receiver 2201 and the wireless terminal 2204. Also, when the wireless terminal 2204 can obtain the service information from the external network or the communication network, since the volume of the program information is large much more, it is possible to display the detailed information, without increasing the volume of the communication data between the television receiver 2201 and the wireless terminal 2204.

Next, explanation will be given on case where the user makes the program reservation after starting the EPG of the wireless terminal 2204, by referring to Figs. 22A, 22B and 22C, and 42 to 44.

Explanation will be given when the user selects a program attached with the program reservation mark, by means of the input means 2264.

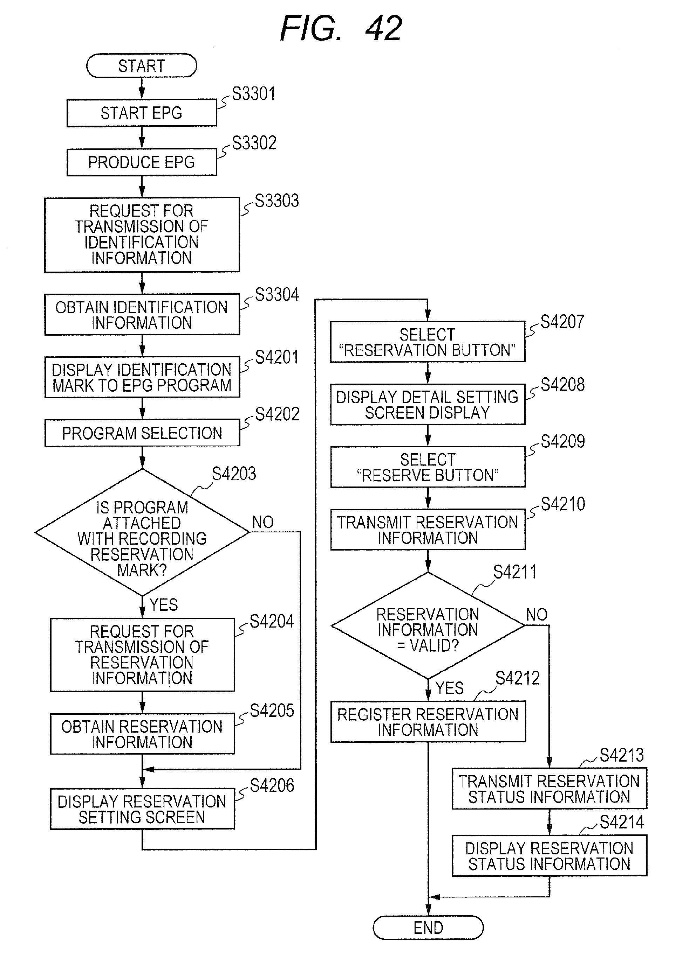

Fig. 42 is a view for showing an example of a sequence of operation when the reservation is made on the program with using the EPG. The sequence of operations shown in Fig. 42 is achieved through the collaboration among the EPG producing program 3001, the program reservation program 3902 and each of hardware of the wireless terminal 2204, and/or through the collaboration among the program reservation program 3035, the program status information producing program 3036 and each of hardware of the television receiver 2201.

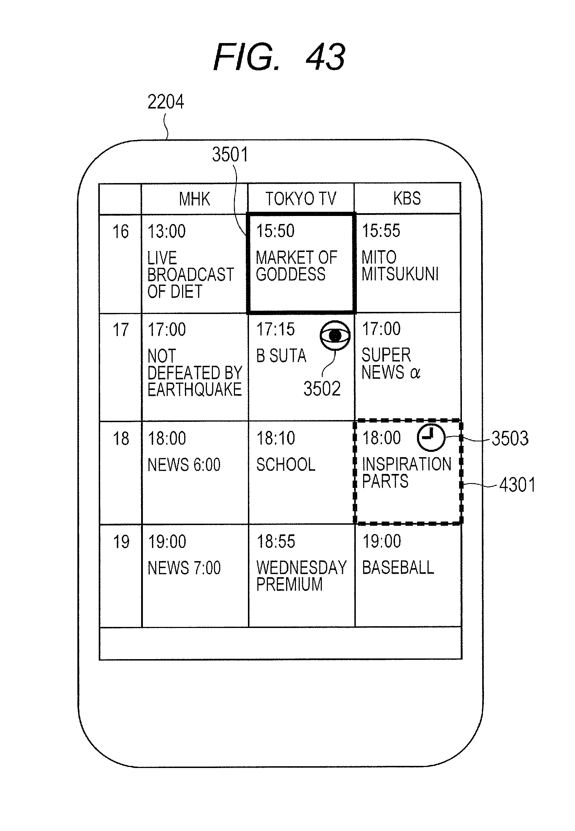

Fig. 43 is a view for showing an example of a screen display of the EPG to be displayed on the wireless terminal 2204.

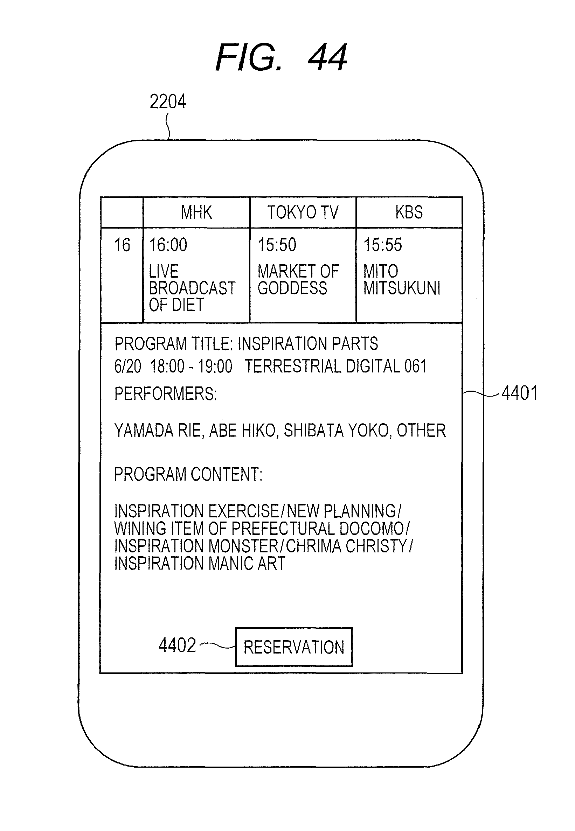

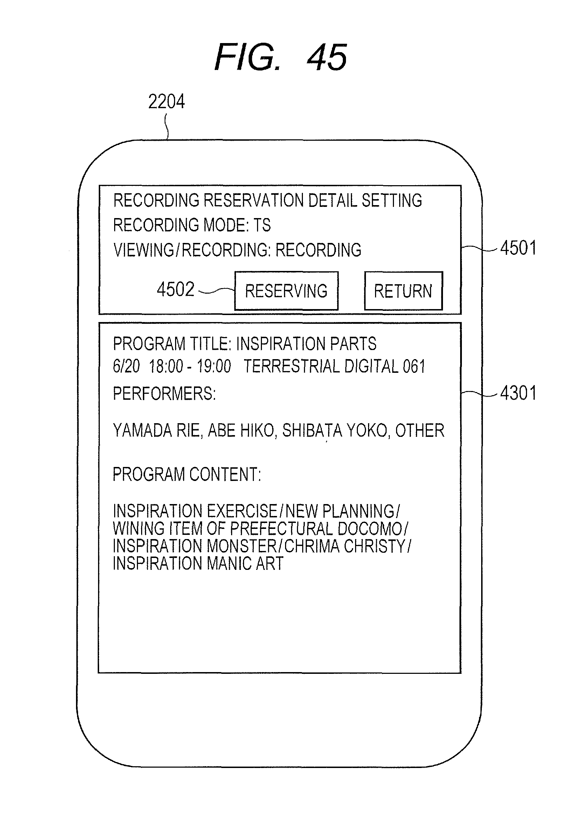

Fig. 44 is a view for showing an example display of a reservation setting screen 4401. Also, Fig. 45 is a view for showing an example of display of the reservation detail setting screen 4501.

Because of similarity to that given by referring to Fig. 33, explanation of the processes up to the obtaining of the identification information (S3304) will be omitted. After displaying the identification mark on the EPG program (S4201), selection is made on a program "inspiration parts" 4301 attached with the recording reservation mark, as shown in Fig. 43 (S4201), wherein because that program is the program attached with the recording reservation mark, in other words, the program, on which the reservation was already made on the television receiver 2201 (S4203: "YES"), then the controller portion 2262 of the wireless terminal 2204 requests the controller portion 2234 of the television receiver 2201 to transmit the reservation information of the program selected (S4204). In the request for transmitting the reservation information is included the identification information, and that identification information is obtained by the controller portion 2262 of the wireless terminal 2204 from the EPG producer portion 3002.

The controller portion 2234 of the television receiver 2201 identifies the program, transmission of the reservation information of which is requested, from the identification information included within the request for transmitting the reservation information, and transmits the reservation information of the program requested, by referring to the program reservation data 3903, to the controller portion 2262 of the wireless terminal 2204. The controller portion 2262 of the wireless terminal 2204 receives the reservation information transmitted from the controller portion 2234 of the television receiver 2201 (S4205), and displays the reservation setting screen 4401, as is shown in Fig. 44 (s4206). The reservation setting screen 4401 has a "reservation button" 4402 for shifting to the reservation details setting screen 4501 shown in Fig. 45, so as to set up the recording mode and/or the distinction between the viewing/recording.

Next, when the "reservation button" 4402 shown in Fig. 44 is selected by the input means 2264 (S4207), as is shown in Fig. 45 (S4207), the reservation detail setting screen 4501, which is produced by the controller portion 2262 of the wireless terminal 2204, is displayed on the display portion 2263 (S4202).

Since the information relating to the "recording mode" and the "viewing/recording" are included in the reservation information, according to the present embodiment, those information obtained from the reservation information are displayed on the reservation detail setting screen 4501. Those information are displayed in a changeable format, such as, a pull-down format, etc., for example, depending on an input, which is accepted by the input means 2264 of the wireless terminal 2204. In more details thereof, in the "recording mode" may be made selectable the above-mentioned "TS", "TSE", "TSX4", "TSE8" or "TSX24", etc., while the "viewing/recording" selectable between the viewing/listening reservation and the recording reservation. With this, it is possible to change the content of the reservation information, which is transmitted from the television receiver 2201, on the side of the wireless terminal 2204.

A "reserve button" 4502 is a button for re-registering the reservation into the television receiver 2201, after changing the settings, etc., on the reservation detail setting screen 4501. When the "reserve button" 4502 shown in Fig. 43 is selected by the input means 2264 (S4208), the controller portion 2262 of the wireless terminal 2204 produces a reservation setting condition as new reservation information, and transmits it to the controller portion 2234 of the television receiver 2201, via the communication I/F 2261 and the communication I/F 2239 (S4203).

The program reservation portion 3032 of the television receiver 2201 checks an amount or volume of the data necessary of the recording data 3904 of the storage 2237, a number of the program reservations, and duplication of the program reservations, etc., for determining if the reservation information received is an effective one or not (S4209). If the reservation information is effective, the reservation information is overwritten on the program reservation data of the storage 2237, and the process is ended, normally (S4209: "YES", S4204).

If it is not effective, the program reservation portion 3032 of the television receiver 2201 transmits the reservation status information to the controller portion 2262 of the wireless terminal 2204, via the communication I/F 2239 and the communication I/F 2261 (S4209: "NO", S4210). When it is not effective means, for example, when the data volume necessary for recording the program, which the reservation information indicates, exceeds the remaining capacity of the recording data 3904, when the number of the reservation programs exceeds a predetermined number, or when two (2) recoding reservations are made in the same time band, etc. However, in case where the television receiver 2201 is enabled to deal with plural numbers of programs at the same time, the reservation information is determined not to be effective if the number of the reservations is made exceeding a number of programs, on which the reservation can be made, simultaneously.

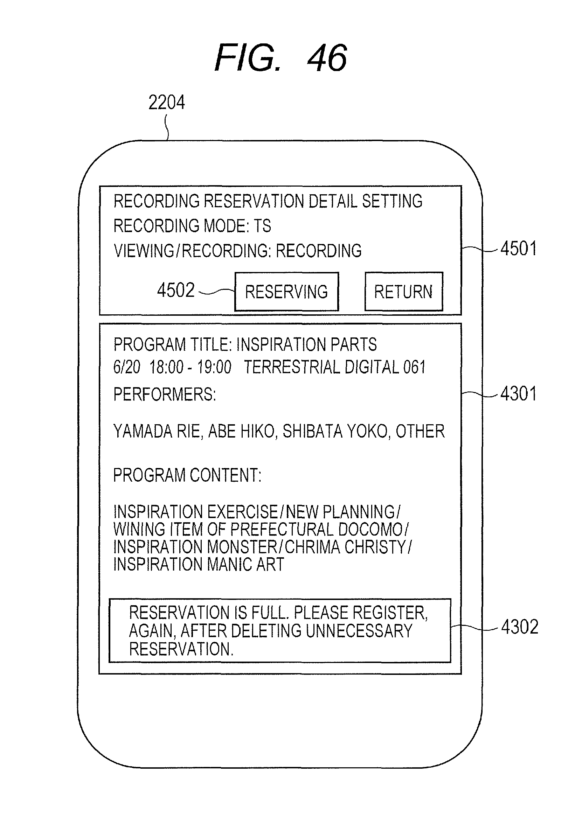

In an example where the number of the reservation programs of the recoding data 3904 of the television receiver 2201 comes up to the maximum, the program reservation portion 3901 of the wireless terminal 2204, upon receiving the reservation status information from the program reservation portion 3032 of the television receiver 2201, displays a reservation status information display 4601, as is shown in Fig. 46; i.e., showing the content of a message, such as, "full reservation", etc., to the user.

However, when no change is made in the content of the reservation, upon selection of the program attached with the program reservation mark, the reservation information is that, which was already confirmed on the side of the television receiver 2201, it is not necessary to execute the operations of the steps S4209, S4210 and S4205 mentioned above, always.

In the present embodiment, although the explanation was made on the case where selection is made on the program attached with the program reservation mark; however, in the similar manner, it is also possible to make the display upon basis of the reservation status information, when the reservation is made, newly, through selection of the program, but not attached with the program reservation mark thereon. In this case, as is shown in Fig. 42, it is enough to execute a step S4206 next to the step S4203, and then the steps S4204 and 4205 are unnecessary. Also, in this instance, though it does not matter that the details setting screen to be displayed in the step S4202 maybe similar to the reservation detail setting screen 4501 shown in Fig. 45; however, differing from that when selection is made on the program attached with the program reservation mark thereon, no reservation information is received from the television receiver about that program. Therefore, as the initial display for selections on the "recording mode" and the "viewing/recording", it is enough to display predetermined choices, so that the user can select one of the choices at her/his desire fromplural numbers of choices in the format of the pull-down format, similar to the explanation mentioned above by referring to Fig. 45. With steps other than that, because of the similarity to those when selection is made on the program attached with the program reservation mark thereon, the explanation thereof will be omitted herein.

With the processes explained in the above, it is possible to make a renewal registration of the program reservation for the television receiver on the side of the wireless terminal, and also to change the program reservation, which was already made, easily. Further, it is also possible to reduce the volume of the data communication between the wireless terminal and the television receiver. And, further, it is possible to know the reservation condition on the side of the television receiver, and therefore to display such a message to the user that she/he can make the program reservation, appropriately, by changing the setting automatically, etc.

### <Viewing/Listening of Recorded Program>

Hereinafter, explanation will be given on case where the program recorded in the television receiver 2201 is reproduced on the wireless terminal 2204, by referring to Figs. 22A-22C, 47A and 47B and 48 to 57.

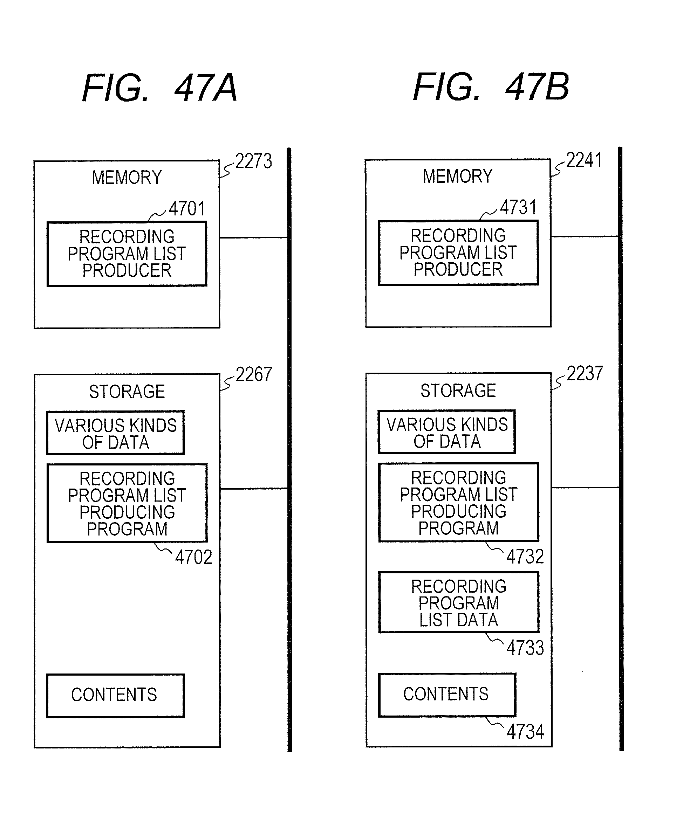

Fig. 47A is a view for explaining the function of a recording program list producing program of the wireless terminal 2204. In this Fig. 47A are shown only the storage 2267 and the memory 2273, among the constituent elements of the wireless terminal 2204. Fig. 47A shows a condition where the recording program list producing program 4702 is stored in the storage 2267 and the controllerportion 2262 is expanding the recording program list producing program 4702 on the memory 2273 as an EPG recording program list producer portion 4701. The recoding program list producing program 4702 may be stored in the storage 2267 in advance, at the time-point when the product is shipped out, or may be downloaded via the communication I/F 2261 or the mobile communication I/F 2268.

Fig. 47B is a view for explain about the function of the recording program list producing program of the television receiver 2201. In Fig. 47B are shown only the storage 2237 and the memory 2241, among the constituent elements of the television receiver 2201.

Fig. 47B shows a condition where the recording program list producing program 4732 is stored in the storage 2237 and the controller portion 2234 is expanding the recording program list producing program 4732 on the memory 2241 as a recording program list producer portion 4731. Also, in the storage 2237 are provided a content 4734 and recording program list data 4733. In the content is stored the recording program(s), which is/are recorded upon the program reservation, etc., and in the recording program list data 4733 is stored recording program list information, which is produced by the recording program list producer portion 4731. The recording program list data 4733 may be stored as a part of the content 4734. The recording program list producing program 4732 may be stored in the storage 2237 in advance, at the time-point when the product is shipped out, or may be downloaded via the communication I/F 2239 or the digital broadcasting wave.

Hereinafter, explanation will be given on the function obtained by the recording program list producer portion 4701 of the wireless terminal 2204 or the recording program list producer portion 4731 of the television receiver 2201.

Explanation will be given on the recording program, in particular, when it is reproduced, being the content 4734 stored in the storage 2237 of the television receiver 2201 of the television receiver 2201, upon the above-mentioned program reservation, etc., from the recording program list.

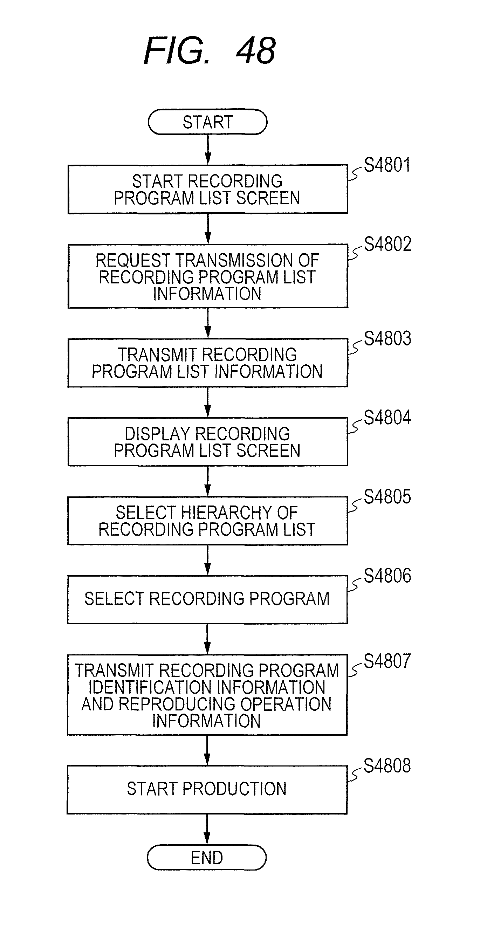

Fig. 48 is a view for showing an example of a sequence of reproducing operations for the recording program upon the recording program list. The operation sequence shown in Fig. 48 is achieved through the collaboration between the recoding program list producing program 4702 and each of the hardware of the wireless terminal 2203, and/or through the collaboration between the recoding program list producing program 4732 and each of the hardware of the television receiver 2201.

The recording program list producer portion 4701 of the wireless terminal 2204, When receiving an instruction for staring the recording program list through the input means 2264 (S4801), requests the recording program list producer portion 4731 of the television receiver 2201 to transmit the recording program list information (S4802). The recording program list producer portion 4731 of the television receiver 2201 transmits the requested recording program list information to the recording program list producer portion 4701 of the wireless terminal 2204, by referring to the recording program list data 4733 in the storage 2237, about the program, transmission of the recording program list information thereof being requested (S4803). The recording program list producer portion 4701 of the wireless terminal 2204 receives the recording program list information transmitted from the recording program list producer portion 4731 of the television receiver 2201, and display a recording program list screen (S4804). On the recording program list screen are displayed the recording programs in a hierarchical manner, and selection is made on a hierarchy of the recording program list screen through the input means 2264 (S4802 and S4805). When selection is made on a cell displaying a name of recording program (S4806), recording program identification information for identifying the recording program having that recording program name and reproduction operation information for reproducing are transmitted to the television receiver 2201 (S4803). The television receiver 2201 reproduces that recording program upon basis of the recording program identification information and the reproduction operation information (S4807).

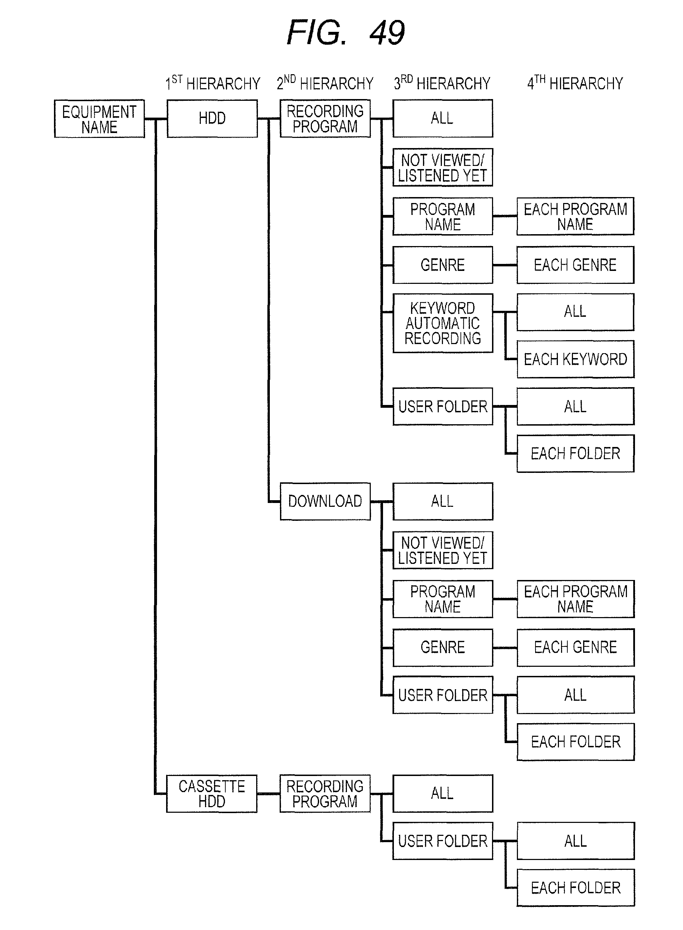

Fig. 49 is a view for showing an example of the hierarchical structure of the recording program list information on the television receiver 2201.

In Fig. 49, the hierarchical structure of the recording program list information on the television receiver 2201 is constructed with a first (1^{st}) hierarchy to a fourth (4^{th}) hierarchy, under the names of equipment; i.e., the 1^{st} hierarchy is a storage medium hierarchy, built up with HDD or a cassette HDD, the 2^{nd} hierarchy is a storage kind selection hierarchy, build up with a recording program or a download, the 3^{rd} hierarchy is a classification selection hierarchy, built up with "not being viewed/listened yet", the program name, a genre, etc., and the 4^{th} hierarchy is a selection hierarchy for the program name (i.e., a title). Below the 3^{rd} hierarchy or the 4^{th} hierarchy lies the recoding program list, respectively.

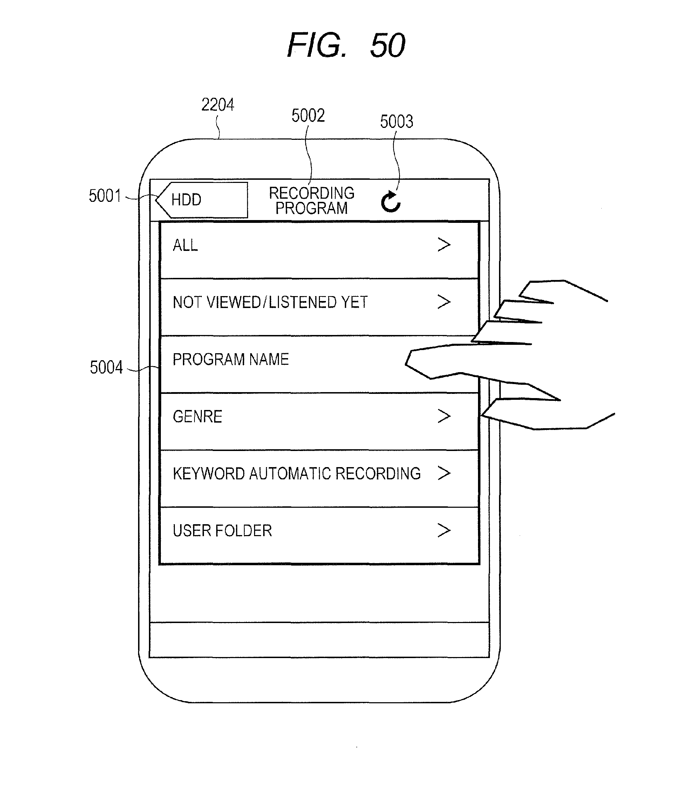

Fig. 50 is a view for showing an example of the screen display for the hierarchical structure of the recording program list, to be displayed on the wireless terminal 2204.

In Fig. 50, a "return button" 5001 is a button for turning from the tapping operation back to an upper hierarchy, and it means that it is possible to turn back to the hierarchy, which is displayed on the button. Also, a hierarchy display 5002 is for showing the hierarchy, which is selected just before, and an example shown in Fig. 50 indicates that "HDD" is selected on the 1^{st} hierarchy, that "recoding program" is selected on the 2^{nd} hierarchy, and that it lies on the 3^{rd} hierarchy at present. A class/program title display 5004 is an area, for displaying a classification of the hierarchy being selected at present or a program title thereon. A "re-read button" 5003 is used when re-reading is made on the recording program list data from the television receiver 2201.

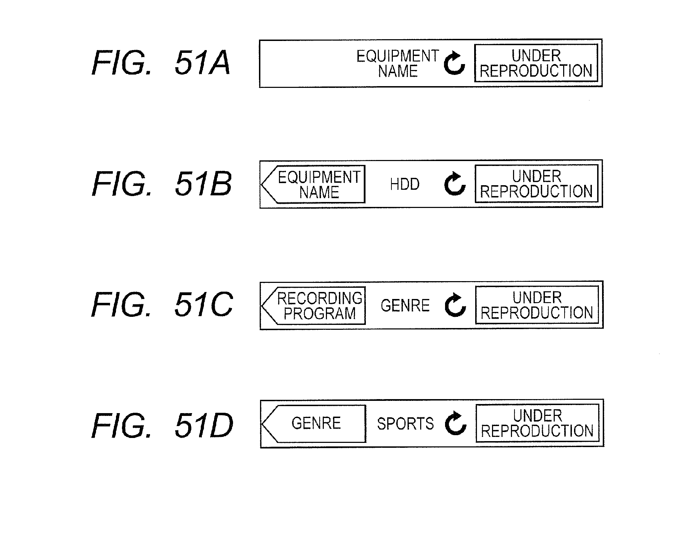

Fig. 51 is a view for showing an example of display of the hierarchy when selection is made on each hierarchy. Thus, this Fig. 51 shows an example of a part being displayed in an upper part display shown in Fig. 50.

Fig. 51A shows the display when it lies on the 1^{st} hierarchy at present, wherein nothing is displayed in the class/program title display 5004. Fig. 51B shows the display when it lies on the 2^{nd} hierarchy after selection of "HDD" on that 2^{nd} hierarchy, wherein "recording program" and "download" are displayed in the class/program title display 5004. Fig. 51C shows that the display lies on the 4^{th} hierarchy at present after selection of "HDD" on the 1^{st} hierarchy, "recoding program" on the 2^{nd} hierarchy, and "genre" on the 3^{rd} hierarchy, wherein each of genres is displayed in the class/program title display 5004. Fig. 51D shows that selection is made on "HDD" on the 1^{st} hierarchy, "recoding program" on the 2^{nd} hierarchy, "genre" on the 3^{rd} hierarchy, and "sports" on the 4^{th} hierarchy, wherein the recording program list is displayed in the class/program title display 5004.

In this manner, even in case where an area of display is narrow, like the wireless terminal, it is possible to display each of the hierarchies in an intelligible manner, so that the user can select the recording program, easily, even on the deep hierarchy.

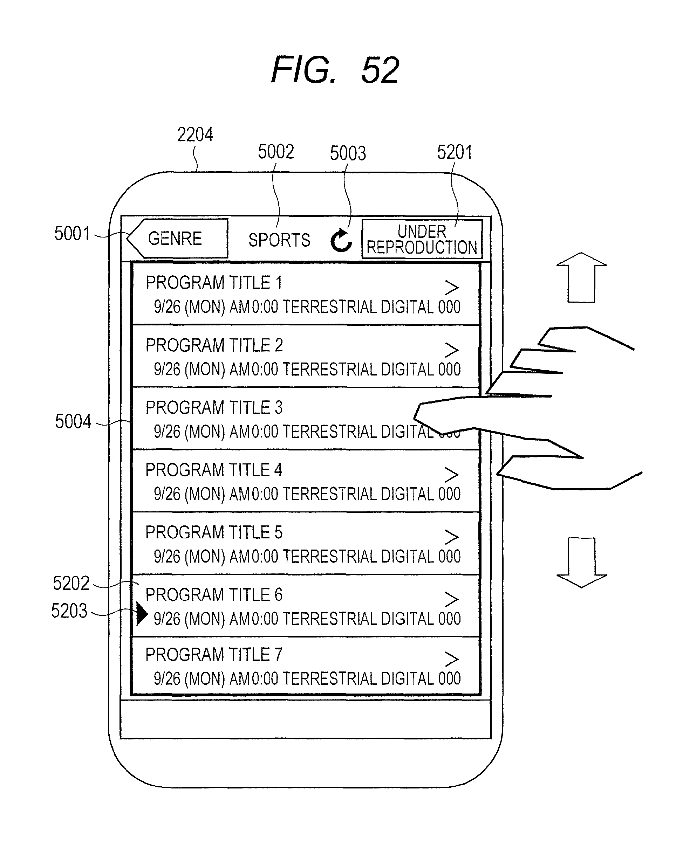

Fig. 52 is a view for showing an example of display when selection is made on the program title on the hierarchy shown in Fig. 51D.

In Fig. 52 is shown an example where "recoding program title 6" 5202 is under the condition of reproduction, and search is made on other recording program. A triangle mark 5203 indicates that this recording program is under the condition of reproduction. Also, a status display 5201 is indicative of being under the condition of reproduction at present. Also, the recording title can be scrolled up and down through the dragging operation or the flicking operation.

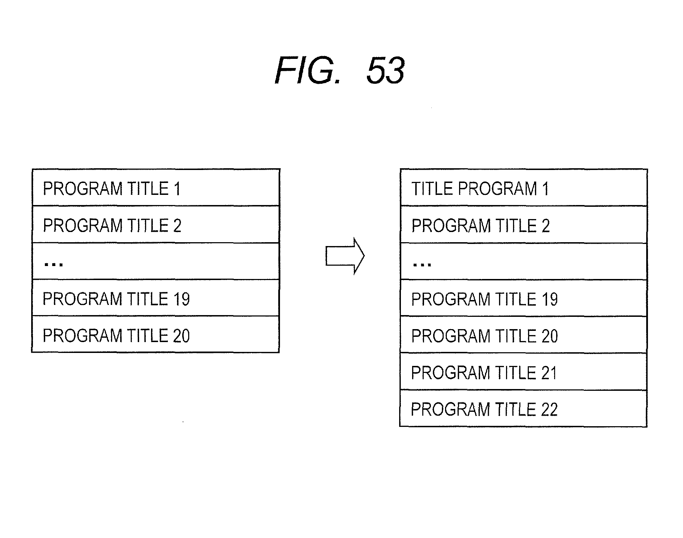

Fig. 53 is a view of an example of transition when the recoding program title is scrolled.

Thus, it shows an example where there are 22 pieces of the recording program titles in total in the case shown in Fig. 52.

When selection is made on the hierarchy shown in Fig. 51D, the recording program list producer portion 4701 of the wireless terminal 2204 obtains the recording program list information from the television receiver 2201 in accordance with the sequence shown in Fig. 48. It is so determined that the recording program title is obtained by a unit of 20 cases (or pieces), in the present example. As is shown in Fig. 53, when scrolling is made to the lower end of the recording program list, after obtaining from "program title 1" to "program title 20" at first, the recording program list producer portion 4701 of the wireless terminal 2204 obtains the remaining "program title 21" to "program title 20", so as to enable display from "program title 1" to "program title 21".

In this manner, obtaining the program titles, by a unit of 20 cases or pieces, enables a quick display of the list of recording programs, without increasing the load on the recording program list producer portion 4701 of the wireless terminal 2204 or the recording program list producer portion 4731 of the wireless terminal 2201. Also, because a next program title is obtained, automatically, when the scroll reaches to the program title at the lowest portion, the display can be made without necessity of causing the user to select "display of next 20 cases", etc., and therefore being superior in the operability of usability for the user. The number of the cases or pieces, which can be displayed at the same time, may be determined by taking the load on the recording program list producer portion 4701 of the wireless terminal 2204 or the recording program list producer portion 4731 of the wireless terminal 2201, etc., into the consideration thereof. Also, the number of the cases or pieces, which can be displayed at the same time, may be made selectable by the user. Or, the program titles may be so configured that all of them are re-read when the selection is made through the tapping operation on the re-read button 5003.

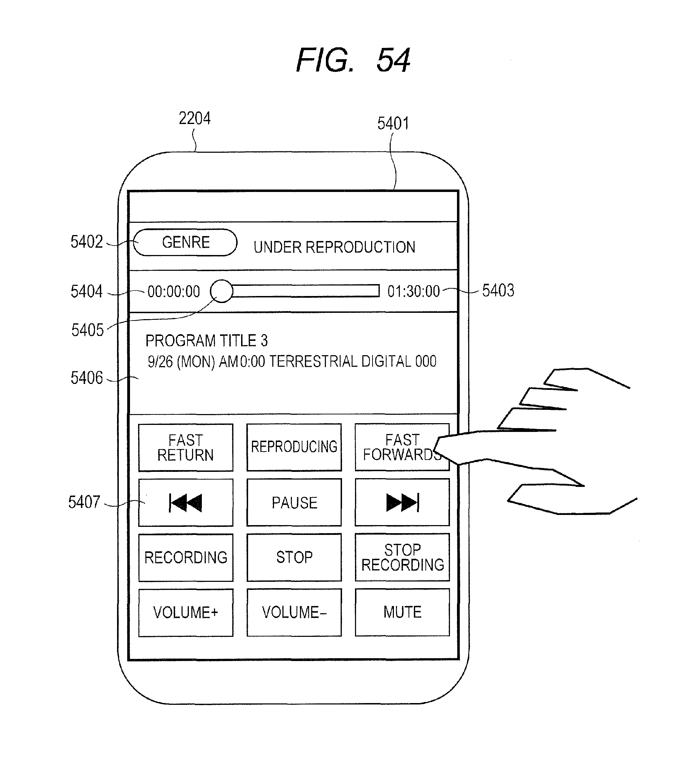

Next, explanation will be given on case when "program title 3" 2100 of the recording programs is reproduced on the screen shown in Fig. 52. When the tapping operation is made on the "program title 3" 2100, a reproduction command of this recoding program is transmitted from the controller portion 2262 of the wireless terminal 2204, via the communication I/F 2261 and the communication I/F 2239, to the controller portion 2234 of the television receiver 2201, and on the television receiver 2201, reproduction operation is conducted on the recordingprogram, being the content 4734 stored in the storage 2237 of the television receiver 2201, and that program is reproduced and displayed on the display portion 2238. Herein, on the wireless terminal 2204 is displayed a reproduction screen 5401, as is shown in Fig. 54.

Fig. 54 is a view for showing an example of the screen display on the wireless terminal 2204, when making an instruction for reproducing the program title from the recording program list on the wireless terminal 2204.

In Fig. 54, it is shown that the recording program title, which is classified in the genre of the 3^{rd} hierarchy, is reproduced on the television receiver 2201. In a classification display is shown the 3^{rd} hierarchy, to which the program title is classified. The present example shows that "genre" is selected.

A seek-bar 5405 is provided for automatically move corresponding to a reproducing position at present, and on the left-side of the seek-bar 5405 is a reproducing time 5403 at present while length 5404 of the recording program on the right-side thereof.

The reproducing position can be changed to the left or the right through the dragging operation of the-seek bar 5405, so that the reproduction can be started from the time-point when the dragging operation is stopped. The reproducing position can be calculated upon a ratio between the display width of the seek-bar 5405 and the length of the recording program, and the result of that is noticed to the television receiver 2201, being attached to reproduction operation information as reproducing position information, wherein the television receiver 2201 receiving those information changes the reproducing position.

When reproducing a playlist, it is enough to make the display width of the seek-bar 5405 equal to the length of a total recording time of playlist content as a whole. During the reproduction of the playlist, the reproducing position can be calculated upon a ratio between the recording time of each of the contents edited in the playlist and the seek-bar, and therefore the reproduction can be started from the time-point when the dragging operation is stopped. As a variation, the reproducing position may be made, without calculating the reproducing position, in such a manner that it turns back to an original reproducing position, but not reproducing from that time-point when the dragging operation is stopped.

In a program information display portion 5406 are displayed the program title, a recording date, a recording start time, a channel, etc.

An operation panel 5407 is an operation button in relation to reproduction, for reproducing the recording program. For operating the reproduction of the recording program, a tapping operation on each button of the operation panel 5407 enables to conduct the operation, such as, a fast-forward, a fast-reverse, etc. Also, the operation panel 5407 can be displayed replacing by another operation panel 5407 through the flicking operation to the left or the right, when it cannot display all the operation buttons in this display area depending on the number thereof.

In this manner, the user can make operations, such as, the reproduction, etc., of the program, the recording or the recording reservation thereof being made on the television receiver, while confirming it with the program tile thereof, on the side of the wireless terminal; being superior for her/him in the operability or usability thereof.

Next, explanation will be given on operations for searching the program information or the performer information of the program under the condition of being reproduced.

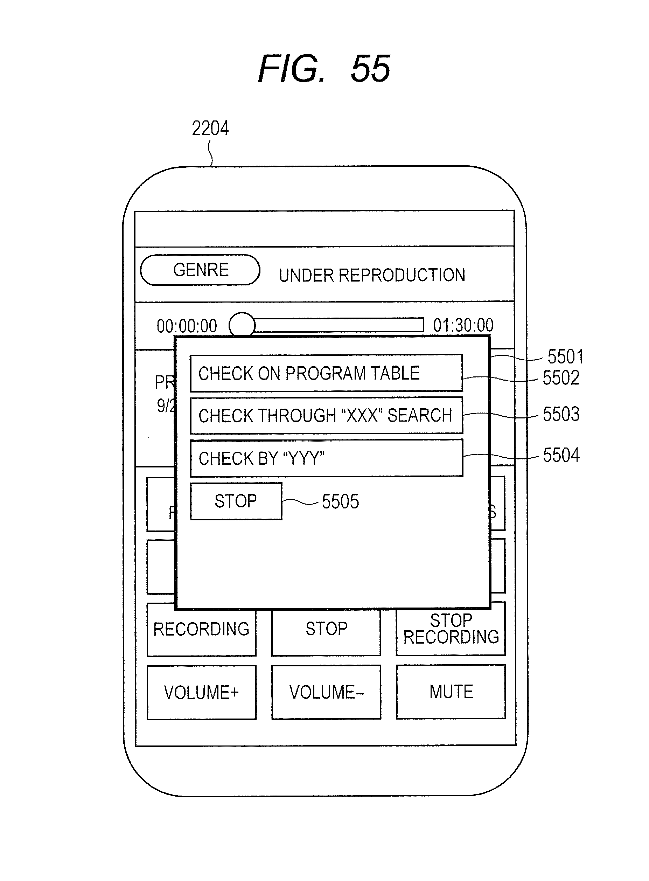

In Fig. 55, when the tapping operation is made on a program information display portion 5406, a search screen is displayed in the form of a popup display (i.e., being displayed in front of the screen shown in Fig. 54).

In Fig. 55 is shown an example of the popup display 5501 of the search screen on the wireless terminal 2204.

In Fig. 55, when selection is made on "search on program table" 5502, it is possible to make a search of programs having the same program title, such as, a series drama, etc., among from the service information SI, being on air at present or will be on air in future, which is obtained by the wireless terminal 2204, or a search of programs, in which the same performer appear. When selection is made "check through XXX search" 5503, it is possible to use the program title, excluding the user-defined character therefrom, as a keyword for search, while using a Web search engine, or when the search should be made in more details thereof, it is also possible to execute a Web search with selecting a keyword from program explanation information. Also, when selection is made on "check on YYY" 5504, relating information can be found out from the program titles or the like, with using a free encyclopedia, etc. When the search should be stopped, selection of "stop" 5505 turns the screen back to the original one. Also, when each search screen is finished, the screen turns back to the original one, similar to that of the stopping operation.

In this manner, the search can be made on the information relating to the program titles, on the side of the wireless terminal, while reproducing the program, the recording or the recording reservation thereof being made, on the television receiver.

Next, explanation will be given on a variation when the recording program list screen is displayed on the wireless terminal 2204.

The wireless terminal 2204, though it obtains the recording program list information from the television receiver 2201, to display the recording program list on the display portion 2263 thereof, however it can use a protocol, such as, UPnP (Universal Plug & Play) or DLNA (Digital Living Network Alliance), etc., as a communication protocol between the wireless terminal 2204 and the television receiver 2201. However, when the wireless terminal 2204 obtains the recording program list information from the television receiver 2201, like in the present embodiment, there may be case of generating a necessity of introducing 8 extended protocol, newly, for delivering the information, such as, program detail explanation information, etc.

In a variation below, explanation will be given on the case where the program detail explanation information cannot be obtained from the side of the television receiver, hereinafter.

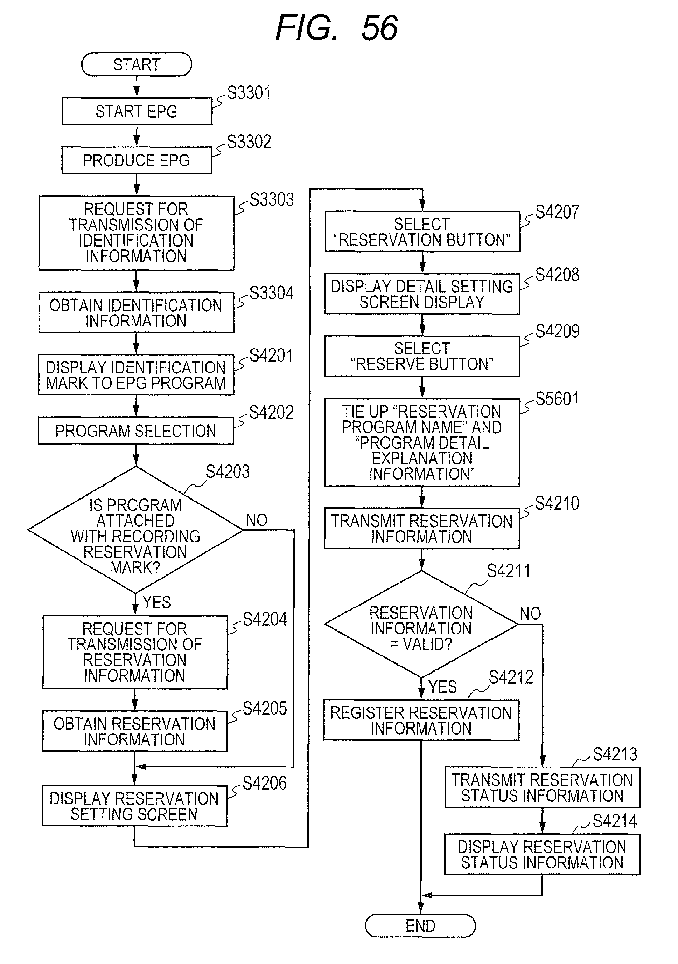

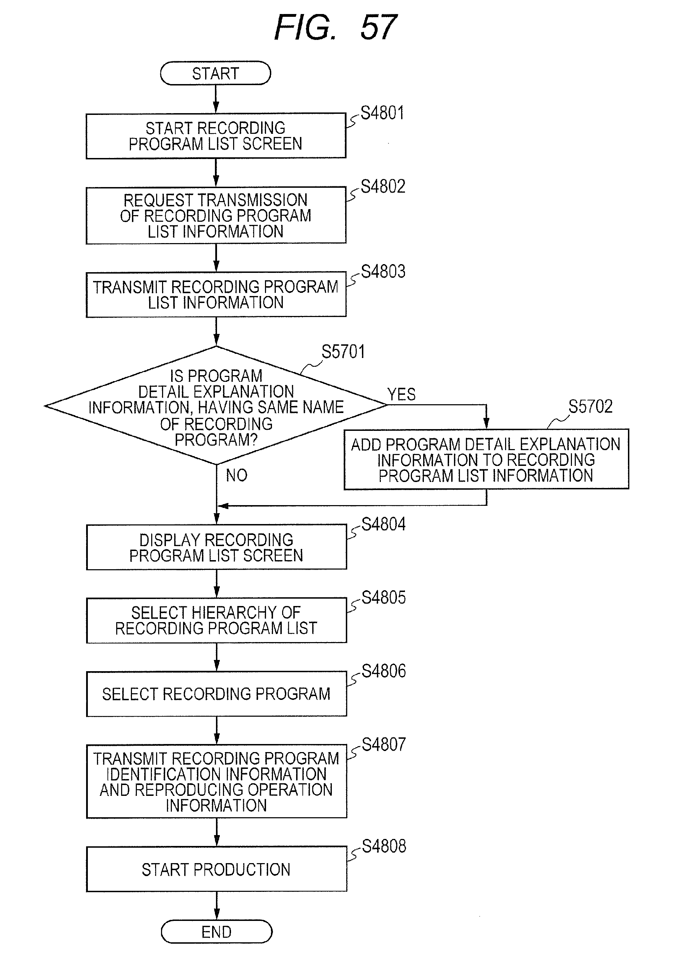

Fig. 56 is a view for showing an example of variation of sequence of operations when the program reservation is made on the EPG. The sequence of operations shown in Fig. 56 can be achieve through the collaboration among the EPG producing program 3001, the program reservation program 3902 and each of the hardware of the wireless terminal 2204 and the collaboration among the program reservation program 3035, the program status information producing program 3036 and each of the hardware of the television receiver 2201. Also, Fig. 57 is a view for showing an example of variation of sequence of operations for reproducing the recording program with using the recording program list. The sequence of operations shown in Fig. 57 can be achieved through the collaboration between the recording program list producing program 4702 and each of the hardware of the wireless terminal 2204 and the collaboration between the recording program list producing program 4732 and each of the hardware of the television receiver 2201.

In Fig. 56, a step S5601 is added, comparing to those shown in Fig. 42.

Herein, since those steps (S3301 to S3304, andS4201 to S4205), other than the step S5601, are similar to those shown in Fig. 42, therefore the detailed explanation thereof will be omitted.

When the detail setting screen shown in Fig. 45 is displayed (S4202) and selection is made on the "reserve button" 4502 shown in Fig. 45 (S4208), thereservationprogramname (i.e., the program title) and the program detail explanation information are stored while corresponding 1 to 1, within the storage 2267. Next, the controller portion 2262 of the wireless terminal 2204 transmits the reservation information, including the reservation setting condition therein, via the communication I/F 2261 and the communication I/F 2239, to the controller portion 2234 of the television receiver 2201 (S4203).

In Fig. 57, steps S5701 and S5702 are added, comparing to those shown in Fig. 48.

Herein, since those steps (S4801 to S4807), other than the steps S5701 and S5702 are similar to those shown in Fig. 48, therefore the detailed explanation thereof will be omitted.

The controller portion 2234 of the television receiver 2201 transmits the requested recording program list information to the controller portion 2262 of the wireless terminal 2204, by referring to the storage 2237 (S4803). The controller portion 2262 of the wireless terminal 2204 receives the recording program list information, which is transmitted from the controller portion 2234 of the television receiver 2201, and determines if there is the program detail explanation information or not, for the recording program name (i.e., the program title) of the recording program list information, from the correspondence information between the reservation program name (i.e., the program title) stored in the storage of the wireless terminal 2204 and the program detail explanation information, in Fig. 56 (S5701), wherein if determining there is the program detail explanation information, it adds that program detail explanation information to the recording program list information obtained (S5702), and displays the recording program list screen through the recording program list producer portion 4731 (S4804).

However, the television receiver 2201 may be constructed so that it automatically starts the wireless terminal 2204, when the reservation is made on the program on the side of the television receiver, so as to make the correspondence between the program title, the reservation of which is made on the side of the television receiver, and the program detail explanation information. Also, in case where the user edits a title name of the recording program on the side of the television receiver, after execution of the recording reservation, it is enough to make an original of the title name and a title name after the edition thereof as a set, to be made the correspondence between the program detail explanation information.

In this manner, normally, the program information of the EPG, which can be obtained at present, does not have the program information of the past; however, with such processes as was explained in the above, since the correspondence can be made between the reservation program name (i.e., the program title) and the program detail explanation information of that program at the time-point when the program reservation is made, it is possible to display the program detail explanation information of that program on the recording program list screen without obtaining the program detail explanation information from the side of the television receiver.

However, the present invention should not be restricted to the embodiments mentioned in the above, but may includes therein various variations thereof. For example, the embodiments mentioned above are explained in details thereof, for the purpose of easy understanding thereof, and therefore, the present invention should not be limited to that having all of the constituent elements thereof. Also, a part of the constituent elements of a certain embodiment can be substituted with the constituent element of the other embodiment(s), or the constituent element of other embodiment(s) may be added to a part of the constituent element of a certain embodiment. Also, regarding a part of the constituent elements of each embodiment, it may be added/deleted/substituted with other constituent element(s).

Also, with each constituent element, function, processing unit, processing means, etc., mentioned above, apart or all thereof may be achieved with hardware, such as, by designing it with an integrated circuit, etc. Also, each constituent element or function, etc., mentioned above may be achieved in the form of software, wherein a processor interprets programs for achieving the respective functions and executes them. The information of the programs, tables or files, etc., for achieving each function may be located in a recording device, such as, a memory, a hard disc, a SSD (Solid State Drive), etc., or a recoding medium, such as, an IC card, a SD card, a DVD, etc.

Also, control lines and/or information lines are shown, which can be considered to be necessary for the explanation, but all of the control lines and the information lines, which are necessary for a product, are not shown, necessarily. Actually, it can be considered that almost of all constituent elements are connected, mutually, with each other.

Also, in the embodiments mentioned above, although the explanation of the embodiment was given, with applying the TV1 and TV2, etc., each having the display portion 11; however, the present embodiment can implemented in the similar manner, if applying a recorder or the like having a display portion on an outside thereof, in the place thereof.

Also, the program explained in each example of the process may be a program, being independent respectively, or may build up one (1) piece of an application program, by a plural number thereof.

## Claims

1. A portable terminal, comprising:
a program table producer portion, which is configured to obtain program-related information about programs, which are transmitted from plural numbers of distributors at present via broadcast waves or a network, and thereby to produce a program table thereof;
a display portion, which is configured with a touch panel in one body;
a detector portion, which is configured to detect touching of a finger on said touch panel and movement of the finger on said touch panel;
a selector portion, which is configured to select one program from said program table responding to detection of the touching by said detector portion, among the programs included in said program table, which is produced within said program table producing portion and is displayed on said display portion; and
a communication I/F, which is configured to be able to transmit information, with which a program selected can be identified, to a program receiving apparatus, when said detector portion detects the movement of the finger on said touch panel into a predetermined direction from a position of display of the program, which is selected on said touch panel.

2. A portable terminal, comprising:
a communication I/F, which is configured to be able to transmit information relating to a viewing/listening program, directly or indirectly, between a program receiving apparatus, being configured to receive a program transmitted via a broadcast wave or a network;
a program table producer portion, which is configured to obtain program-related information and to produce a program table thereof, about programs to be transmitted from plural numbers of distributors;
a display portion, which is configured with a touch panel in one body, and being able to display at least a part of a program table, which is produced by said program table producer portion;
a detector portion, which is configured to detect touching of a finger on said touch panel and movement of the finger on said touch panel; and
a selector portion, which is configured to select one program of the program table displayed on said display portion, responding to the detection of said touching by said detector portion, wherein
said display portion displays a program being viewed/listened on said program receiving apparatus at present, which is indicated by the information received by said communication I/F, to be distinguishable from other program(s), when displaying the program table, which is produced in said program table producer portion, thereon;
said selector portion selects said one program from programs included in said program table, in response to the detection of the touching on the display of the one program, which is included in said program table, by said detector portion; and
said communication I/F transmits information, with which a program selected can be identified, to said program receiving apparatus, when said detector portion detects the movement of the finger on said touch panel into a predetermined direction from a position of display of the program, which is selected on said touch panel.

3. The portable terminal, as described in the claim 1 or 2, wherein
said display portion scrolls a display frame for a program(s), which is/are displayed at present, into a first direction, so as to display the display frame for a program(s), which is/are not displayed yet, when said detector portion detects the movement of the finger on said touch panel into said first direction, under condition where said display portion displays thereon a part of the program table, which is produced by said program table producer portion, and
said predetermined direction of the movement of the finger on said touch panel, to be detected by said detector portion for transmitting the information, with which the program selected can be identified, to said program receiving apparatus, lies a second direction being nearly perpendicular to said first direction.

4. The portable terminal, as described in the claim 1 or 2, wherein
said display portion scrolls a display frame for a program(s), which is/are displayed at present, into left or right direction, so as to display the display frame for a program(s), which is/are not displayed yet, when said detector portion detects the movement of the finger on said touch panel into said left or right direction, under condition where said display portion displays thereon a part of the program table, which is produced by said program table producer portion, and
said predetermined direction of the movement of the finger on said touch panel, to be detected by said detector portion for transmitting the information, with which the program selected can be identified, to said program receiving apparatus, lies in an upper direction.

5. The portable terminal, as described in the claim 1 or 2, wherein
a route for said program table producer portion to obtain the program-related information therethrough differs from that for said program receiving apparatus to receive a program.

6. The portable terminal, as described in the claim 1 or 2, wherein
said display portion displays the program, which is viewed/listened at present on said program receiving apparatus, to be distinguishable from the display of other program(s), upon basis of the information received from said program receiving apparatus through said communication I/F.

7. A system including a program receiving for receiving a program transmitted via a broadcast waver or a network and a portable terminal for transmitting information relating to a program to be viewed/listened, directly or indirectly, between said program receiving apparatus, wherein
said program receiving apparatus comprises:
a program receiver portion, which is configured to receive the program transmitted via the broadcast waver or the network; and
a first communication I/F, which is able to transmit the information relating to the program to be viewed/listened, directly or indirectly, between said portable terminal, and
said portable terminal comprises:
a program table producer portion, which is configured to obtain program-related information about at least programs of plural numbers of stations, under condition of being on air, through the broadcast waver or the network;
a display portion, which is configured with a touch panel in one body;
a detector portion, which is configured to detect touching of a finger on said touch panel and movement of the finger on said touch panel;
a selector portion, which is configured to select one program from said program table responding to detection of the touching by said detector portion, among the programs included in said program table, which is produced within said program table producing portion and is displayed on said display portion; and
a communication I/F, which is configured to be able to transmit information, with which a program selected can be identified, to a program receiving apparatus, when said detector portion detects the movement of the finger on said touch panel into a predetermined direction from a position of display of the program, which is selected on said touch panel.

8. A system including a program receiving for receiving a program transmitted via a broadcast waver or a network and a portable terminal for transmitting information relating to a program to be viewed/listened, directly or indirectly, between said program receiving apparatus, wherein
said program receiving apparatus comprises:
a program receiver portion, which is configured to receive the program transmitted via the broadcast waver or the network; and
a first communication I/F, which is able to transmit the information relating to the program to be viewed/listened, directly or indirectly, between said portable terminal, and
said portable terminal comprises:
a second communication I/F, which is configured to be able to transmit information relating to a viewing/listening program, directly or indirectly, between a program receiving apparatus, being configured to receive a program transmitted via a broadcast wave or a network;
a program table producer portion, which is configured to obtain program-related information and to produce a program table thereof, about programs to be transmitted from plural numbers of distributors;
a display portion, which is configured with a touch panel in one body, and being able to display at least a part of a program table, which is produced by said program table producer portion;
a detector portion, which is configured to detect touching of a finger on said touch panel and movement of the finger on said touch panel; and
a selector portion, which is configured to select one program of the program table displayed on said display portion, responding to the detection of said touching by said detector portion, wherein
said display portion displays a program being viewed/listened on said program receiving apparatus at present, which is indicated by the information received by said communication I/F, to be distinguishable from other program(s), when displaying the program table, which is produced in said program table producer portion, thereon;
said selector portion selects said one program from programs included in said program table, in response to the detection of the touching on the display of the one program, which is included in said program table, by said detector portion; and
said communication I/F transmits information, with which a program selected can be identified, to said program receiving apparatus, when said detector portion detects the movement of the finger on said touch panel into a predetermined direction from a position of display of the program, which is selected on said touch panel.

9. The system, as described in the claim 7 or 8, wherein
said display portion scrolls a display frame for a program(s), which is/are displayed at present, into a first direction, so as to display the display frame for a program(s), which is/are not displayed yet, when said detector portion detects the movement of the finger on said touch panel into said first direction, under condition where said display portion displays thereon a part of the program table, which is produced by said program table producer portion, and
said predetermined direction of the movement of the finger on said touch panel, to be detected by said detector portion for transmitting the information, with which the program selected can be identified, to said program receiving apparatus, lies a second direction being nearly perpendicular to said first direction.

10. The system, as described in the claim 7 or 8, wherein
said display portion scrolls a display frame for a program(s), which is/are displayed at present, into left or right direction, so as to display the display frame for a program(s), which is/are not displayed yet, when said detector portion detects the movement of the finger on said touch panel into said left or right direction, under condition where said display portion displays thereon a part of the program table, which is produced by said program table producer portion, and
said predetermined direction of the movement of the finger on said touch panel, to be detected by said detector portion for transmitting the information, with which the program selected can be identified, to said program receiving apparatus, lies in an upper direction.

11. The system, as described in the claim 7 or 8, wherein
a route for said program table producer portion to obtain the program-related information therethrough differs from that for said program receiving apparatus to receive a program.

12. The system, as described in the claim 7 or 8, wherein
said display portion displays the program, which is viewed/listened at present on said program receiving apparatus, to be distinguishable from the display of other program(s), upon basis of the information received from said program receiving apparatus through said communication I/F.

13. An information processing method, on a portable terminal, comprising the following steps of:
a program table producing step for obtaining program-related information about programs, which are transmitted from plural numbers of distributors at present via broadcast waves or a network, and thereby producing a program table thereof;
a displaying step for displaying at least a part of the program table, which is produced in said program table producing step, on a display portion of said portable terminal;
a first detecting step for detecting touch of a finger on a touch panel, which is configured with said display portion in one body;
a selecting step for selecting one program from said program table, responding to detection of the touch in said first detecting step, among the programs included in said program table, which is produced and displayed on said display portion;
a second detecting step for detecting touch of the finger on said touch panel; and
a transmitting step for transmitting information, with which a program selected can be identified, to a program receiving apparatus, when the movement of the finger on said touch panel into a predetermined direction from a position of display of the program, which is selected on said touch panel is detected in said second detecting step.

14. An information processing method, on a portable terminal, comprising the following steps of:
a receiving step for receiving information relating to a program to be viewed/listened, directly or indirectly, from a program receiving apparatus for receiving a program via a broadcast wave or a network;
a program table producing step for obtaining program-related information about programs, which are transmitted from plural numbers of distributors at present, and thereby producing a program table;
a displaying step for displaying at least a part of the program table, which is produced in said program table producing step, on a display portion of said portable terminal;
a first detecting step for detecting touch of a finger on a touch panel, which is configured with said display portion in one body;
a selecting step for selecting one program, among the programs displayed in said displaying step, responding to detection of the touch in said detecting step;
a second detecting step for detecting touch of the finger on the touch panel; and
a transmitting step for transmitting information to said program receiving apparatus, wherein
a program being viewed/listened on said program receiving apparatus at present, which is indicated by the information received by said communication I/F, is displayed to be distinguishable from other program(s), when displaying the program table, which is produced in said program table producing step, in said displaying step;
said one program is selected from programs, which are included in said program table, in response to the detection of the touching on the display of the one program, which is included in said program table, in said detecting step; and
information, with which a program selected can be identified, is transmitted to said program receiving apparatus, when the movement of the finger on said touch panel into a predetermined direction from a position of display for showing the program, which is selected on said touch panel is detected in said second detecting step, in said transmitting step.

15. The information processing method, as described in the claim 13 or 14, wherein
a display frame for a program(s), which is/are displayed at present, is scrolled into a first direction, so as to display the display frame for a program(s), which is/are not displayed yet, when the movement of the finger on said touch panel into said first direction is detected in said second detecting step, under condition where a part of the program table, which is produced by said program table producer portion, is displayed in said displaying step, and
said predetermined direction of the movement of the finger on said touch panel, to be detected by said second detecting step, for transmitting information for selecting the program(s) selected as a program to be viewed/listened in said transmitting step, lies a second direction being nearly perpendicular to said first direction.

16. The information processing method, as described in the claim 13 or 14, wherein
a display frame for a program(s), which is/are displayed at present, into left or right direction, so as to display the display frame for a program(s), which is/are not displayed yet, when the movement of the finger on said touch panel into said left or right direction is detected in said second detecting step, under condition where a part of the program table, which is produced by said program table producer portion, is displayed in said displaying step, and
said predetermined direction of the movement of the finger on said touch panel, to be detected by said second detecting step, for transmitting information for selecting the program(s) selected as a program to be viewed/listened in said transmitting step, lies in an upper direction.

17. The information processing method, as described in the claim 13 or 14, wherein
a route to obtain the program-related information therethrough in said program table producing step differs from that for said program receiving apparatus to receive a program.

18. The information processing method, as described in the claim 13 or 14, wherein
the program, which is viewed/listened at present on said program receiving apparatus, is displayed to be distinguishable from the display of other program(s), upon basis of the information received from said program receiving apparatus through said communication I/F, in said displaying process.

19. A program for conducting aprocess on a portable terminal, comprising the following steps of:
a program table producing step for obtaining program-related information about programs, which are transmitted from plural numbers of distributors at present via broadcast waves or a network, and thereby producing a program table thereof;
a displaying step for displaying at least a part of the program table, which is produced in said program table producing step, on a display portion of said portable terminal;
a first detecting step for detecting touch of a finger on a touch panel, which is configured with said display portion in one body;
a selecting step for selecting one program from said program table, responding to detection of the touch in said first detecting step, among the programs included in said program table, which is produced and displayed on said display portion;
a second detecting step for detecting touch of the finger on said touch panel; and
a transmitting step for transmitting information, with which a program selected can be identified, to a program receiving apparatus, when the movement of the finger on said touch panel into a predetermined direction from a position of display of the program, which is selected on said touch panel is detected in said second detecting step.

20. A program for conducting aprocess on a portable terminal, comprising the following steps of:
a receiving step for receiving information relating to a program to be viewed/listened, directly or indirectly, from a program receiving apparatus for receiving a program via a broadcast wave or a network;
a program table producing step for obtaining program-related information about programs, which are transmitted from plural numbers of distributors at present, and thereby producing a program table;
a displaying step for displaying at least a part of the program table, which is produced in said program table producing step, on a display portion of said portable terminal;
a first detecting step for detecting touch of a finger on a touch panel, which is configured with said display portion in one body;
a selecting step for selecting one program, among the programs displayed in said displaying step, responding to detection of the touch in said detecting step;
a second detecting step for detecting touch of the finger on the touch panel; and
a transmitting step for transmitting information to said program receiving apparatus, wherein
a program being viewed/listened on said program receiving apparatus at present, which is indicated by the information received by said communication I/F, is displayed to be distinguishable from other program(s), when displaying the program table, which is produced in said program table producing step, in said displaying step;
said one program is selected from programs, which are included in said program table, in response to the detection of the touching on the display of the one program, which is included in said program table, in said detecting step; and
information, with which a program selected can be identified, is transmitted to said program receiving apparatus, when the movement of the finger on said touch panel into a predetermined direction from a position of display for showing the program, which is selected on said touch panel is detected in said second detecting step, in said transmitting step.

21. The program, as described in the claim 19 or 20, wherein
a display frame for a program(s), which is/are displayed at present, is scrolled into a first direction, so as to display the display frame for a program(s), which is/are not displayed yet, when the movement of the finger on said touch panel into said first direction is detected in said second detecting step, under condition where a part of the program table, which is produced by said program table producer portion, is displayed in said displaying step, and
said predetermined direction of the movement of the finger on said touch panel, to be detected by said second detecting step, for transmitting information for selecting the program(s) selected as a program to be viewed/listened in said transmitting step, lies a second direction being nearly perpendicular to said first direction.

22. The program, as described in the claim 19 or 20, wherein
a display frame for a program(s), which is/are displayed at present, into left or right direction, so as to display the display frame for a program(s), which is/are not displayed yet, when the movement of the finger on said touch panel into said left or right direction is detected in said second detecting step, under condition where a part of the program table, which is produced by said program table producer portion, is displayed in said displaying step, and
said predetermined direction of the movement of the finger on said touch panel, to be detected by said second detecting step, for transmitting information for selecting the program(s) selected as a program to be viewed/listened in said transmitting step, lies in an upper direction.

23. The program, as described in the claim 19 or 20, wherein
a route to obtain the program-related information therethrough in said program table producing step differs from that for said program receiving apparatus to receive a program.

24. The program, as described in the claim 19 or 20, wherein
the program, which is viewed/listened at present on said program receiving apparatus, is displayed to be distinguishable from the display of other program(s), upon basis of the information received from said program receiving apparatus through said communication I/F, in said displaying process.

25. A portable terminal, comprising:
a communication I/F, which is configured to be able to transmit information relating to a viewing/listening program, directly or indirectly, between a program receiving apparatus, being configured to receive a program transmitted via a broadcast wave or a network;
a program table producer portion, which is configured to obtain program-related information and to produce a program table thereof, about programs to be transmitted from plural numbers of distributors;
a display portion, which is configured to display at least a part of a program table, which is produced by said program table producer portion; and
a controller portion, which is configured to control said displayportion in such a manner that a display for showing a program, which is viewed/listened at present on said program receiving apparatus, is included within a portion being displayed on said displayportion, among those of the program table, which is produced by said program table producer portion, upon basis of information received from said program receiving apparatus through said communication I/F.

26. The portable terminal, as described in the claim 25, wherein
said display portion displays the program table in such a manner that a display frame for the program, which is viewed/listened at present on said program recording apparatus, is disposed at around a center of the display frame for plural numbers of programs, which are transmitted at present.
